(19) **Europäisches Patentamt**

**European Patent Office**

**Office européen des brevets**

(11) **EP 0 845 690 B1**

(12) **EUROPEAN PATENT SPECIFICATION**

(45) Date of publication and mention
of the grant of the patent:
**09.11.2005 Bulletin 2005/45**

(51) Int Cl.⁷: **G02B 6/42**, G02B 6/12

(21) Application number: **97120940.8**

(22) Date of filing: **28.11.1997**

(54) **Optical coupler**

Optischer Koppler

Coupleur optique

(84) Designated Contracting States:
**DE FR GB**

(30) Priority: **29.11.1996 JP 31931496**

(43) Date of publication of application:
**03.06.1998 Bulletin 1998/23**

(73) Proprietor: **FUJITSU LIMITED**
**Kawasaki-shi, Kanagawa 211-8588 (JP)**

(72) Inventor: **Tabuchi, Haruhiko**
**Nakahara-ku, Kawasaki-shi, Kanagawa 211 (JP)**

(74) Representative: **von Fischern, Bernhard et al**
**Hoffmann - Eitle,**
**Patent- und Rechtsanwälte,**
**Arabellastrasse 4**
**81925 München (DE)**

(56) References cited:
**EP-A- 0 466 335     EP-A- 0 641 049**
**EP-A- 0 704 731     EP-A- 0 735 704**
**US-A- 4 795 228     US-A- 4 873 566**
**US-A- 5 199 092     US-A- 5 511 142**

- **PATENT ABSTRACTS OF JAPAN vol. 014, no. 296 (P-1067), 26 June 1990 (1990-06-26) & JP 02 093415 A (NEC CORP), 4 April 1990 (1990-04-04)**
- **COHEN M S: "PACKAGING OF HIGH-DENSITY FIBER/LASER MODULES USING PASSIVE ALIGNMENT TECHNIQUES" IEEE ON TRANSACTIONS ON COMPONENTS,HYBRIDS,AND MANUFACTURING TECHNOLOGY,US,IEEE INC. NEW YORK, vol. 15, no. 6, 1 December 1992 (1992-12-01), pages 944-954, XP000364756 ISSN: 0148-6411**
- **PATENT ABSTRACTS OF JAPAN vol. 018, no. 018 (P-1673), 12 January 1994 (1994-01-12) & JP 05 257018 A (NIPPON TELEGR & TELEPH CORP), 8 October 1993 (1993-10-08)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Jouve, 75001 PARIS (FR)

**Description**

BACKGROUND OF THE INVENTION

Field of the Invention

The present invention relates to optical coupling structure, which will be called simply "optical coupler" hereinafter, used in an optical communication apparatus or an optical information processor. In particular, the present invention relates to an optical coupler for optically coupling a light emitting semiconductor device like a semiconductor laser with a single-mode optical waveguide or a single-mode optical fiber. Wherein, the light emitted from the semiconductor laser becomes a beam having a width. The light beam width is also called an optical beam width or correctly called "an optical beam width of guided mode of the optical waveguide or fiber".

Description of the Related Art

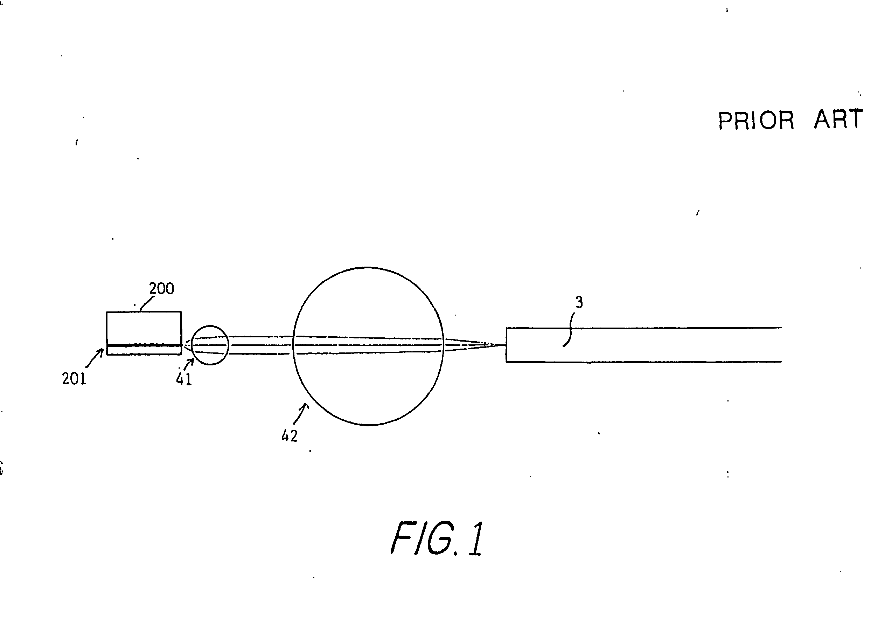

In order to optically couple two single-mode type optical components to each other at high efficiency, it is required to perform mode matching and optical axis alignment between the two optical components. Herein, the mode matching is to make optical intensity distributions (which is also called "mode size") in the single-mode type optical components equal to each other, and the optical axis alignment is to make optical axes of the optical components coincide with each other. Figs. 1, 2A, 2B, 3, 4, 5, 6, 7A, 8A, 9A and 10A are schematic diagrams for showing several methods of the axis alignment in the prior art.

Fig. 1 is a schematic diagram of an optical coupler of the prior art in case where a light emitting semiconductor device (200) like a semiconductor laser is optically coupled to an optical fiber (3) by using first and second lenses (41 and 42). There will be cases hereinafter where the light emitting semiconductor device 200 is called "semiconductor laser 200" or simply "laser 200". In Fig. 1, the laser 200 and the optical fiber 3 are placed on a center line (4) opposite to each other. The first lens 41 gathers light emitted from the laser 200, producing a light beam almost in parallel with the center line 4, and the second lens 42 converges the light beam on the fiber 3, giving a proper size. For example, at an entrance of the fiber 3, a spot size (1.2 $\mu$m $\times$ 1.7 $\mu$m~2.1$\mu$m $\times$ 3.2 $\mu$m) of the light beam is magnified 4 ~ 6 times by the lens 42, so as to be matched with a mode size (approximately 10 $\mu$m) of the fiber 3. As described above, by virtue of the first and second lenses 41 and 42, the mode matching can be performed between the semiconductor laser 200 and the optical fiber 3 at high coupling efficiency.

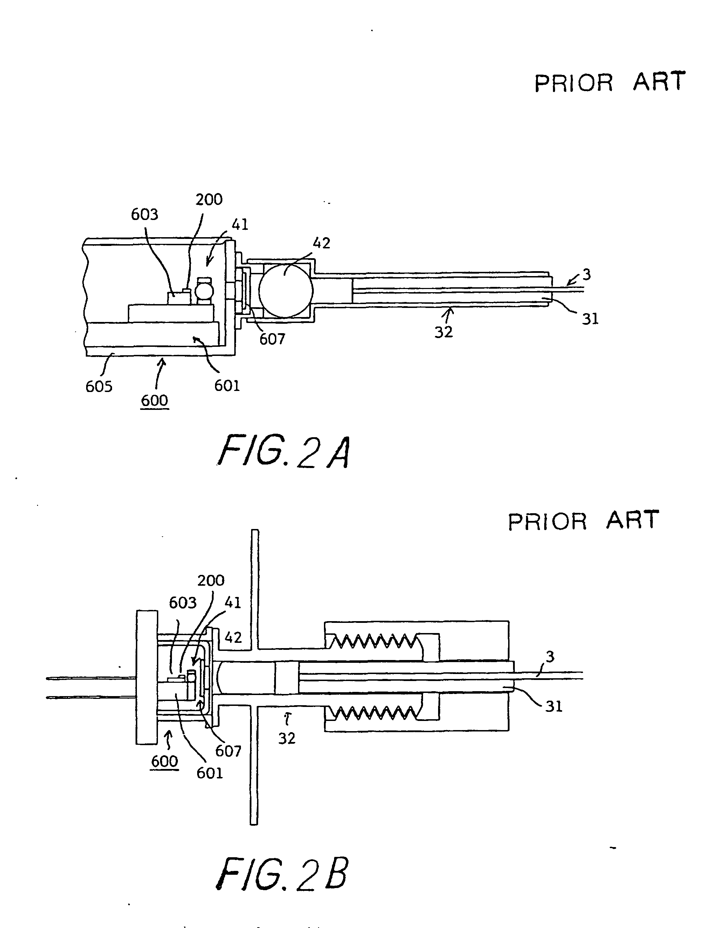

Figs. 2A and 2B respectively show a case where a laser 200 is sealed in the vacant space for preventing the laser 200 from being damaged due to moisture and oxidation. In Figs. 2A and 2B, the same numeral as in Fig. 1 designates the same part as in Fig. 1. In Figs. 2A and 2B, the laser 200 is respectively mounted on a sub-mount (603) placed on a mounting block (601), and the laser 200, the sub-mount 603 and the mounting block 601 are installed in an airtight box (600) having an optical window (607). Light emitted from the laser 200 is gathered to a light beam by the first lens 41 and the light beam arrives at the second lens 42, passing through the optical window 607. The light beam is converged on the optical fiber 3 by the second lens 42, so as to have a size proper to the mode matching. The optical fiber 3 is inserted into a fiber coupling unit 32, supported by a ferule 31.

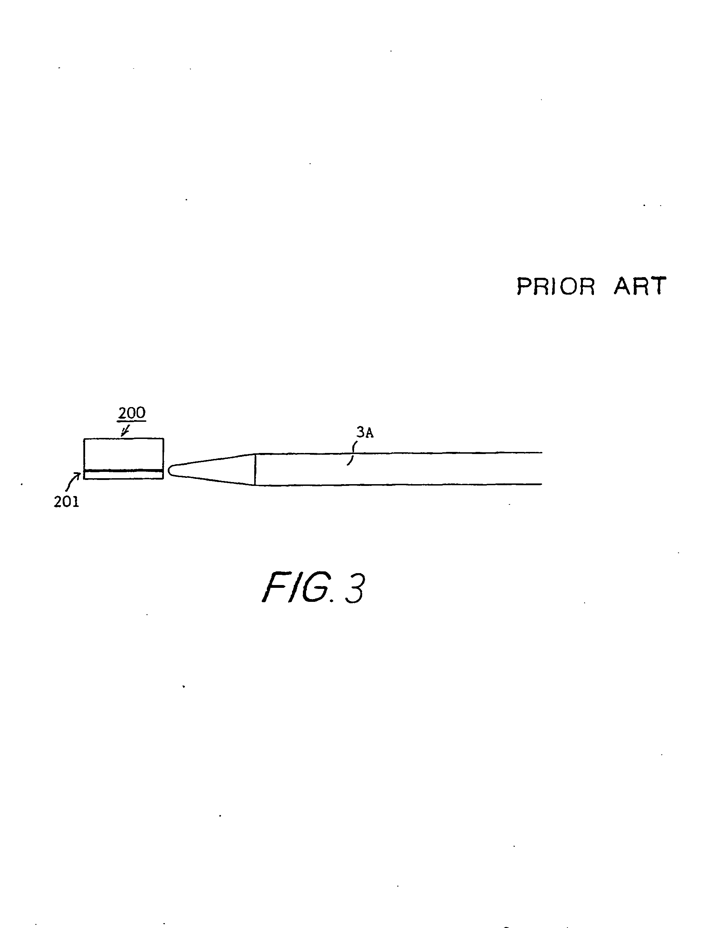

Fig. 3 is another optical coupler using a tapered optical fiber having a spherical tip at an end thereof opposite a semiconductor laser. In Fig. 3, the same reference numeral as in Fig. 1 designates the same devise as in Fig. 1. In Fig. 3, an optical fiber (3A) is tapered near-by its end and a tip of the tapered end has small lens structure. When the optical fiber 3A is placed so that the tip is optically coupled to a light emitting active layer (201), which will be simply called "active layer 201" hereinafter, of the laser 200, the mode size of the light beam emitted from the active layer 201 is decreased by the small lens structure so as to coincide with the mode size of the optical fiber 3A. This results in increasing the coupling efficiency between the laser 200 and the optical fiber 3A.

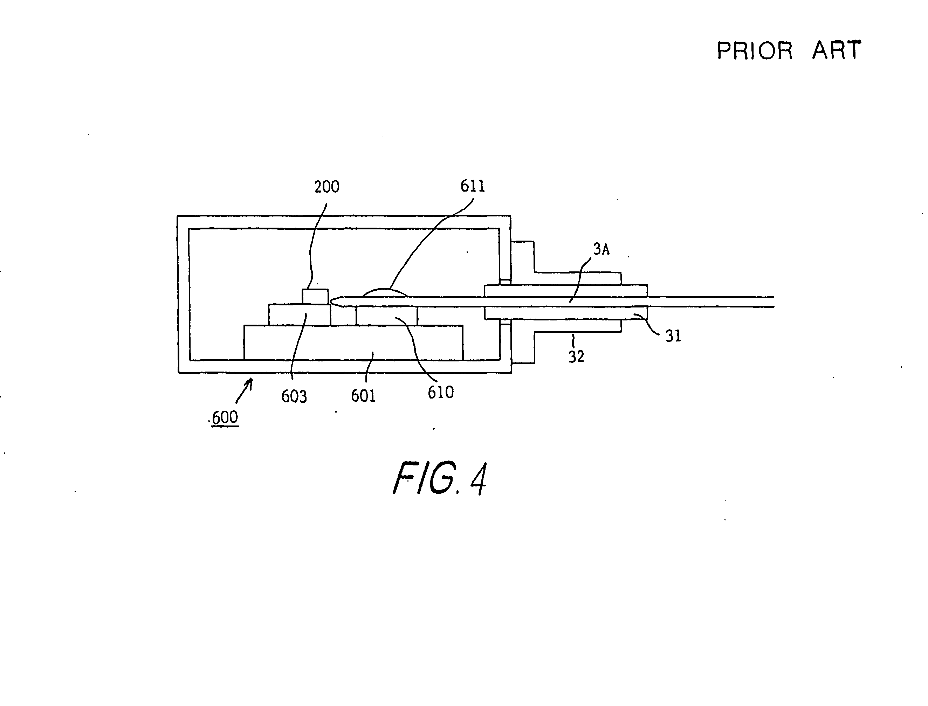

Fig. 4 shows a case where the laser 200 is airtight. In Fig. 4, the same numeral as in Figs. 1 and 2A designates the same pert as in Figs. 1 and 2A. In Fig. 4, the surface of the optical fiber 3A is metal-coated (not depicted in Fig. 4) and the optical fiber 3A is fixed to the mounting block 601 with solder (611), in the airtight box 600.

Hereupon, in case of the optical couplers shown in Figs. 1, 2A and 2B, the position adjustments are precisely performed through the laser 200, the lenses 41 and 42 and the optical fiber 3. In case of the optical coupler shown in Figs. 3 and 4, the position adjustment is precisely performed between the laser 200 and the optical fiber 3A. The position adjustments are performed in Figs. 1, 2A, 2B, 3 and 4 by actually operating the laser 200 and measuring intensity of light passing through the optical couplers, with carefully changing the positions of the semiconductor laser, the lenses and the optical fiber, until the measured light intensity becomes maximum.

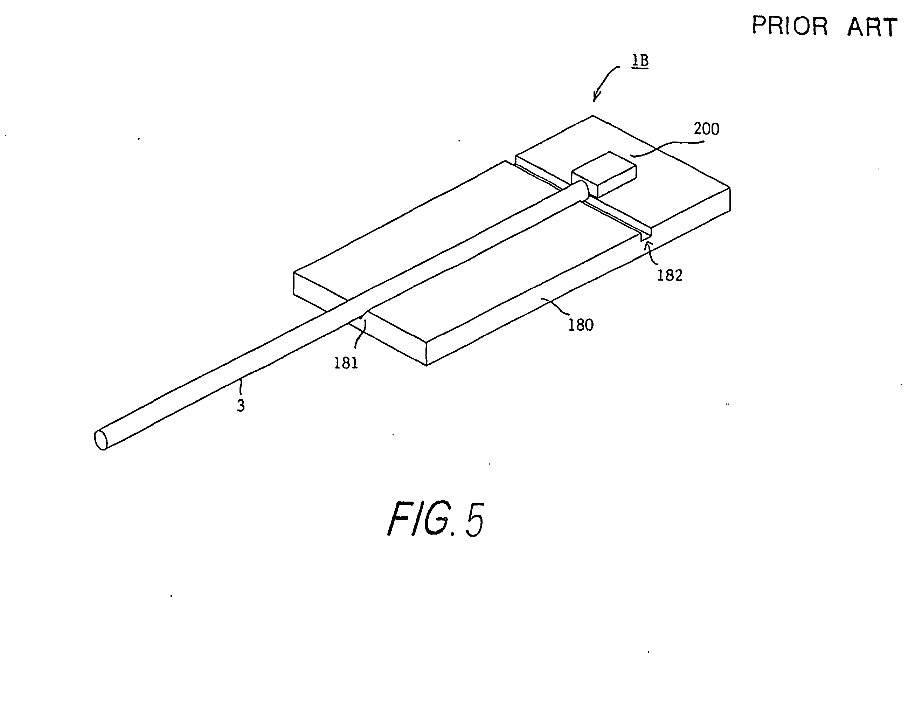

In order to avoid performing the careful position adjustment, the position adjustment has been improved in the prior art by several ways as shown in Figs. 5, 6, 7B, 8A, 9A and 10A.

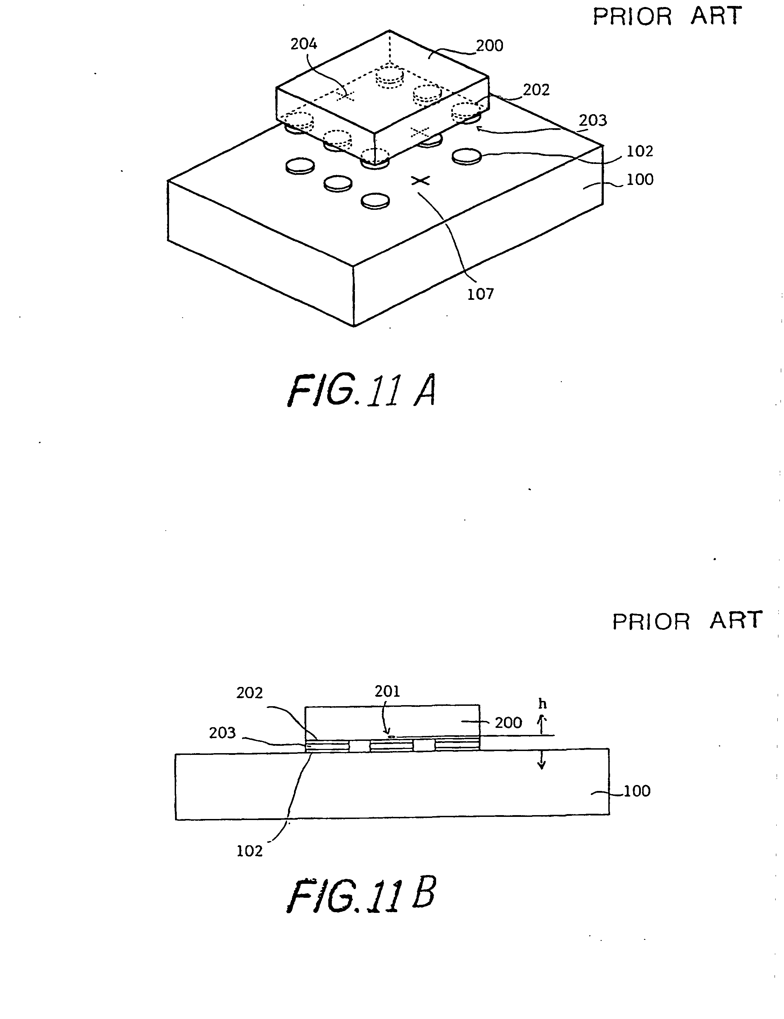

Fig. 5 is a schematic perspective view for illustrating a typical example of the position adjustment improved in the prior art. In Fig 5, the same reference numeral as in Fig. 1 designates the same pert as in Fig. 1. In Fig. 5, a V-shaped groove (181), bonding pads and positioning marks are formed on a silicon substrate (180). The bonding pads and the positioning marks on the silicon substrate are not depicted in Fig. 5 but depicted in Figs. 11A and 11B with reference numbers 102 and 107 respectively. The V-shaped groove 181 is fabricated on the surface of the silicon substrate 180 in a photo-lithography process, for guiding the optical fiber 3. By virtue of applying the V-shaped groove 181 to an optical coupler (1B), the position adjustment of the optical fiber 3 can be performed smoothly.

Meanwhile, in order to position the laser 200 on the silicon substrate 180, other bonding pads and positioning marks are formed on the laser 200 so as to be connected with the bonding pads 102 and to be corresponded to the positioning marks 107 on the silicon substrate 180 respectively. The positioning marks and the bonding pads on the laser 200 are not depicted in Fig. 5, however, they are similar to the positioning marks (204) and bonding pads (202) shown in Figs. 11A and 11B. The position adjustment of the laser 200 is carried out by using an alignment apparatus (not depicted in Fig. 5), using a groove (182) formed on the silicon substrate 180. The alignment apparatus moves the laser 200 so that the positioning marks on the laser 200 coincide with the positioning marks on the silicon substrate 180 precisely. After the position adjustment is over, the laser 200 is fixed to the silicon substrate 180 by bonding. The above position adjustment is detailed in IEEE TRANSACTIONS ON COMPONENT, HYBRIDS, AND MANUFACTURING TECHNOLOGY, VOL. 15, NO. 6, p. 944-955 (1992). The optical coupler having the V-shaped groove, positioning marks and bonding pads as shown in Fig. 5 will be numbered "1B" hereinafter.

Fig. 6 shows another optical coupler of the prior art, which is similar to the optical coupler in Fig. 5 except that the optical fiber is a tapered optical fiber (3A). The optical coupler is numbered as "1C" in Fig. 6.

Figs. 7A and 7B show another optical coupler of the prior art in case where a semiconductor laser is air-tightened. In Figs. 7A and 7B, the same reference numeral as in Fig. 5 designates the same component or part as in Fig. 5. Fig. 7A shows the optical coupler 1B before air-tightened, and Fig. 7B shows the optical coupler 1B after air-tightened.

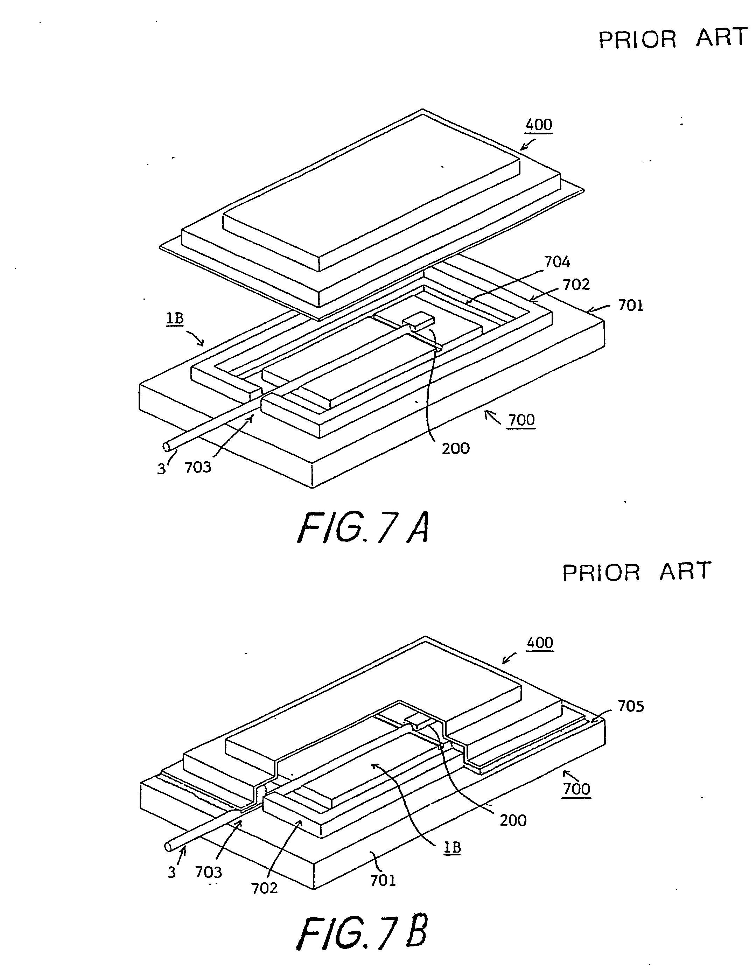

The optical coupler 1B is air-tightened by: placing the optical coupler 1B in a room space (704) formed by a protruded frame (702) formed on a substrate 700, providing a notch (703) at a side of the frame 702 for passing the optical fiber 3 there through, as shown in Fig. 7A; and applying an epoxy base adhesive (705) on and around the frame 702 and putting a cover (400) on the substrate 700, and air-tightening the optical coupler 1B by filling up a gap between the cover 400 and the substrate 700, as shown in Fig. 7B.

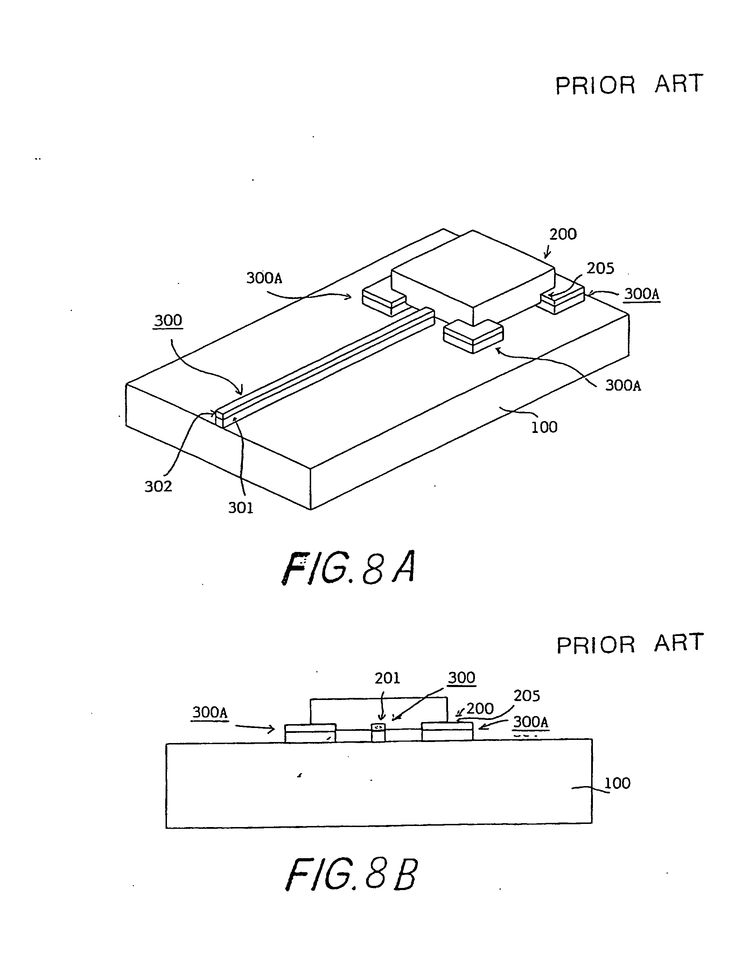

Figs. 8A and 8B show another optical coupler of the prior art, including a multimode optical waveguide. Fig. 8A is a schematic perspective view of the optical coupler and Fig. 8B is an elevation view of the optical coupler, looked from the left-down side of the optical coupler in Fig. 8A. In Figs. 8A and 8B, the same reference numeral as in Fig. 1 designates the same pert as in Fig. 1. In Figs. 8A and 8B, an optical waveguide (300) and four projected objects (300A), which will be called "a stand-off 300A" hereinafter, are formed on a substrate (100) in two layer structure consisting of a clad layer (301) and a core (302) for forming the optical waveguide 300. That is, the optical waveguide 300 and the stand-off 300A are formed on the substrate 100 at the same time. The optical waveguide 300 is a multimode waveguide, so that the thickness of the clad layer 301 is more than 50 μm. The stand-off 300A is used for settling and positioning the laser 200 on the substrate 100. In order to settle the laser 200 onto the stand-off 300A, a cut off portion (205) is formed at every corner on the down side of the laser 200. The optical waveguide 300 and the stand-off 300A are formed by IC fabrication technology, so that they can be placed precisely in correct position on the substrate 100. Therefore, when the laser 200 is settled to the stand-off 300A, the optical coupling between the optical waveguide 300 and the laser 200 could be performed in high coupling efficiency. However, there is a problem that the laser 200 is hard to be settled in a correct position. Because, the cut off portions 205 are hard to be formed precisely.

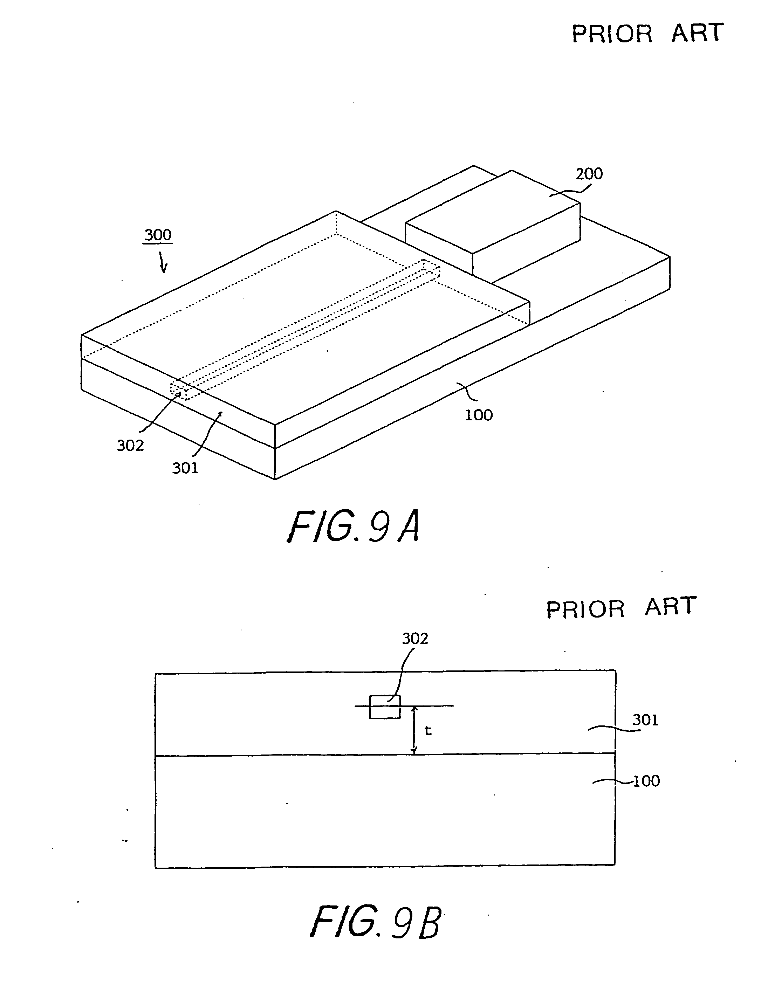

Figs. 9A and 9B show another optical coupler of the prior art, including a different type of the single mode optical waveguide 300. Fig. 9A is a schematic perspective view of the optical coupler and Fig. 9B is an elevation view of the optical coupler, looked from the left-down side of the optical coupler in Fig. 9A. In Figs. 9A and 9B, the same reference numerals in Fig. 8A designates the same parts in Fig. 8A. In Figs. 9A and 9B, the substrate 100 is made of silicon, and the clad layer 301 and the core 302 are made of quartz. When a single mode optical waveguide is used in the optical coupler as shown in Figs. 9A and 9B, high optical coupling efficiency can be obtained when the following ratio, called "a relative refractive index difference", is satisfied between the refractive index ($n_1$) of the clad layer 301 and the refractive index ($n_2$) of the core 302:

$$\{(n_2-n_1)/n_1\}\times 100 = 0.3\%\sim 0.75\%,$$

and the size of the core is within $5 \times 5$ μm~$8 \times 8$ μm. In Figs. 9A and 9B, the clad layer 301 and the core 302 are formed on the silicon substrate 100 so that a thickness (t) of the clad layer 301 placed between an upper surface of the silicon substrate 100 and a bottom surface of the core 302 becomes more than 30 μm.

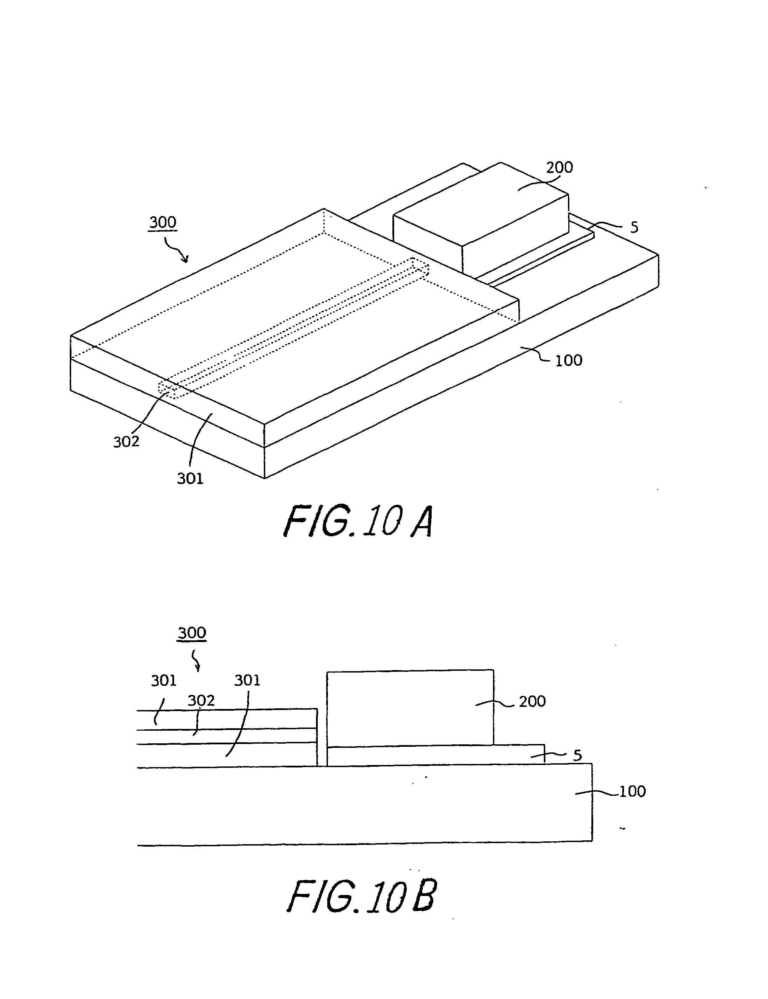

Figs. 10A and 10B show an optical coupler including the single mode optical waveguide 300, which is the same as in Figs 9A and 9B except that a spacer (5) is inserted between the silicon substrate 100 and the laser 200. The spacer 5 is used to raise an optical axis of the laser 200 up for making the optical axis of the laser 200 coincide with an optical axis of the optical waveguide 300 consisting of the clad layer 301 and the core 302.

As described in reference with Figs. 1 to 10 (A and B), many methods and apparatus have been used for the optical couplers in the prior art, for obtaining good optical coupling between the optical components. However, there have been the following problems in the position adjustment: the alignment apparatus must be used for precisely adjusting the positions of the lens, the semiconductor laser and the optical fiber; the V-shaped groove must be formed on the substrate for firmly positioning the optical fiber; the positioning marks must be formed on the semiconductor laser and the substrate for correctly positioning the semiconductor laser; the stand-off must be formed on the substrate for positioning the semiconductor laser correctly; and the spacer must be formed on the substrate, for achieving the correct coupling between the semiconductor laser and the optical waveguide.

However, adding the above problems, there have been other problems as described below.

In case of the optical couplers shown in Figs. 1 to 4, the following problems have occurred: it takes a lot of times to perform the position adjustment, because, the position adjustment must be performed individually between the semiconductor laser and the lens, the lens and the optical fiber, and the semiconductor laser and the optical fiber; and the semiconductor laser is apt to be deteriorated or damaged by fault operation which happens to be done during the position adjustment.

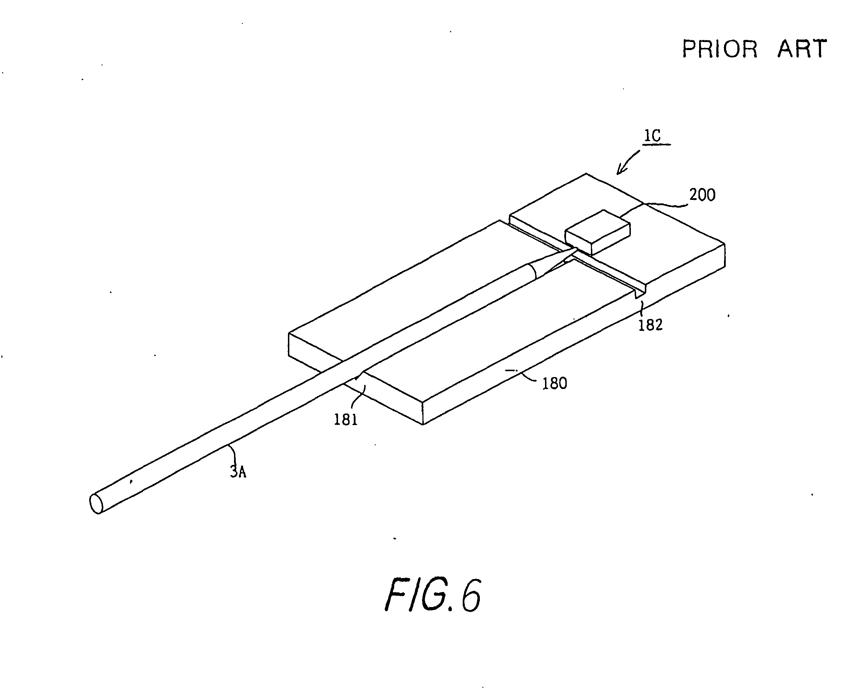

In case of the optical couplers shown in Figs. 5 to 7 (A and B), it is a merit that the semiconductor laser is not required to be operated during the position adjustment, however, there has been a problem that the mechanical position adjustment is not easy to be performed between the semiconductor laser and the optical fiber. In an optical coupler generally, there is a tolerance, called "coupling tolerance", for keeping the coupling efficiency in more than a designated value, such as 80 %, of the maximum coupling efficiency. When an optical fiber has lens structure as a case of the optical fiber 3A in Fig. 6, the coupling tolerance is required to be less than 0.5 μm, and when a tip of an optical fiber is flat as case of the optical fiber 3 in Fig. 5, the coupling tolerance is required to be less than 1 μm. From the above, it can be said that the position adjustment is not easy to be performed mechanically. In particular, when the laser 200 is bonded on the substrate 180 as shown in Figs. 5 and 6, it is not easy to perform the optical coupling between the optical fiber 3 (or 3A) and the laser 200 with a desirable coupling tolerance. In case of Fig. 5, there has been another problem that the mode mismatching increases between the laser 200 and the optical fiber 3, resulting in increasing the coupling loss as much as 7 dB at least.

In case of the optical coupler shown in Figs. 8A and 8B, there has been a problem that the cut off portions 205 are not easy to be formed with high accuracy, which produces a problem of decreasing the coupling efficiency.

In case of the optical coupler shown in Figs. 9A and 9B, there has been a problem as described below.

When the optical waveguide 300 is applied to the optical coupler as shown in Figs. 9A and 9B, and when high refractive index material such as silicon is used as the substrate 100, the clad layer 301 formed under the core 302 is required to have proper thickness for decreasing light arriving at the substrate 100 from the core 302. For example, when the relative refractive index difference is 0.3% ~ 0.75% and the size of the core 302 is 5 μm×5 μm~8 μm×8 μm, the thickness of the clad layer 301 under the core 302 must be more than 30 μm, as described in reference with Fig. 9B. This criterion is adopted also to the optical waveguide 300 in Figs. 8A and 8B. However, in case of coupling the optical waveguide with the semiconductor laser as shown in Fig. 8 (A, B) or 9 (A, B), there is a problem that it is not easy to make the height of the optical axis of the optical waveguide coincide with the height of the semiconductor laser.

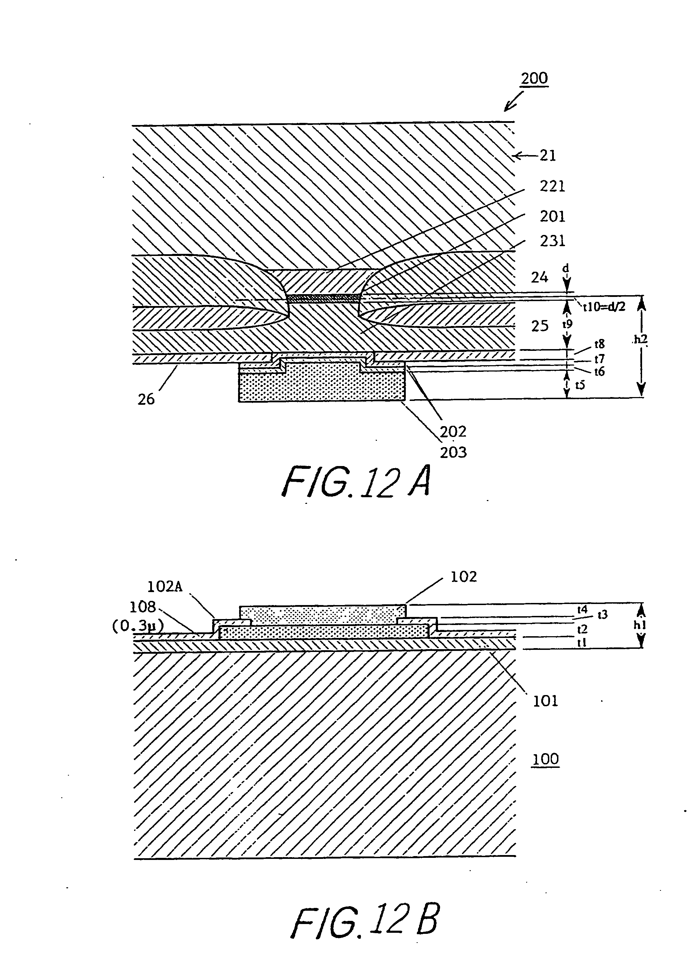

In order to explain the above difficulty, a bonding method applied to the semiconductor laser will be described in reference with Figs. 11A and 11B, and the constituents and the dimensions of the substrate and the semiconductor laser flip-chip bonded on the substrate through the bonding pads and the height of the optical axis of the semiconductor laser will be discussed concretely in reference with Figs. 12A and 12B.

Fig. 11A is a schematic perspective view for illustrating that the laser 200 in Fig. 9A is ready to be mounted on a substrate, and Fig. 11B is a schematic elevation view of the laser 200 mounted on the substrate 100. As shown in Fig. 11A, the bonding pads 202 are formed on the underside of the laser 200 as electrodes and a low-melting-point-alloy (203), such as a gold-tin eutectic alloy, for bonding is coated on the bonding pads 202. The laser 200 is bonded to the substrate 100, by setting the bonding pads 202 on the bonding pads 102 formed on the substrate 100 as electrodes, inserting the molten material 203. Then, the laser 200 is bonded to the substrate 100 as shown in Fig. 11B, through the process of heating and cooling the bonding pads 202 and 102 with the molten material 203.

Figs. 12A arid 12B illustrate minute layer structure of the laser 200 and the silicon substrate 100 described in reference with Figs. 11A and 11B, respectively. In Figs. 12A and 12B, the same reference numeral as in Figs. 11A and 11B designates the same part as in Figs. 11A and 11B. In Figs. 12A and 12B, a wiring pattern (102A) connected with the bonding pads 102 is 0.3 μm, an insulation layer (108) is 0.3 μm, the bonding pad 102 is 0.35 μm, the molten material 203 is 2~6 μm, the bonding pad 202 is 0.5 μm, an insulation membrane (26) is 0.3 μm, a clad layer (231) is 1.5 μm, and the active layer 201 is 0.14 μm, respectively in thickness. In the above layer structure, when the laser 200 shown in Fig. 12A is bonded with the silicon substrate 100 shown in Fig. 12B, the height from an upper surface of a silicon dioxide film (101), which will be called "silicon dioxide film or layer 101" hereinafter, on the silicon substrate 100 to a center of the active layer 201 is 5.32~9.32 µm. The above height is nothing but a height of the optical axis of the laser 200, which teaches that the height of the optical axis is too low in comparison with a height of a center of the core 302 in Fig. 9A or 9B. In other words, when the laser 200 and the optical waveguide 300 are directly mounted on the substrate 100 as shown in Fig. 9A, a problem occurs that it is very hard to make the optical axes of the laser 200 coincide with the core 302 of the optical waveguide 300.

In order to make the height of the optical axis of the laser 200 coincide with the height of the core 302, the spacer 5 is inserted between the laser 200 and the substrate 100 as shown in Fig. 10A. However, the insertion of the spacer 5 can produce a positional deviation between the optical axes of the laser 200 and the core 302 because of a fabrication error of the spacer 5. The amount of the fabrication error depends on the height of the optical axis of the core 302 and a thickness of the spacer 5. For example, if respective fabrication error of the core 302 and the spacer 5 is ± 5%, and when the height of the optical axis of the core 302 is 30 µm, the respective fabrication error becomes ± 1.5 µm, which results in totally producing ± 3 µm positional deviation between the laser 200 and the core 302. This positional deviation ± 3 µm is too much for performing required optical coupling. The above explanation is of an example, however, these amounts of the fabrication errors are frequently produced, so that there is also a problem that it is hard to obtain required coupling efficiency when the spacer is inserted between the semiconductor laser and the substrate.

The preamble of claim 1 is known from JP-A-2-93415.

## SUMMARY OF THE PRESENT INVENTION

Therefore, the object of the present invention is to solve the prior art problems occurring between a semiconductor laser and an optical waveguide in an optical coupler and between an optical coupler and an optical fiber to be connected with the optical coupler. This object is solved by the optical coupling structure of claim 1. Advantageous embodiments are described in the dependent claims.

A desired effect of an embodiment of the present invention is to solve a problem that occurs when position adjustment is performed between a semiconductor laser and the core of an optical waveguide very precisely which takes a lot of time.

Another desired effect of an embodiment of the present invention is to solve another problem that when the axis adjustment is performed between the semiconductor laser and the optical waveguide under operating the semiconductor laser, the operating laser happens to be damaged by mismatching between the operating laser and the optical waveguide during the axis alignment.

Another desired effect of an embodiment of the present invention is to solve another problem that when the mode size (or the spot size) of the optical waveguide is coincided with the mode size (or the spot size) of the semiconductor laser, the position adjustment of the optical waveguide becomes hard to be performed because of too small alignment tolerance.

Still another desired effect of an embodiment of the present invention is to solve another problem that when the axis alignment between the semiconductor laser and the optical waveguide in the optical coupler is performed, the axis alignment is very hard to be performed to a high precision because of the height of the active layer of the semiconductor laser, measured from the substrate.

Another desired effect of an embodiment of the present invention is to make the optical coupling between the optical coupler and the optical fiber easy.

A further desired effect of an embodiment of the present invention is to increase products reliability of the optical coupler and decrease the production cost of the optical coupler, reducing personal expenses and increasing work efficiency.

In the optical coupler, the position adjustment or the optical axis alignment of the semiconductor laser and the optical waveguide is separated to two in operation one of which is to perform the adjustment or the alignment in a horizontal direction and the other of which is to perform that in a vertical direction. Wherein, the horizontal direction is a direction perpendicular to the optical axes of the semiconductor laser and the optical waveguide and on a plane parallel to the upper surface of the substrate for mounting the semiconductor laser and the optical waveguide, and the vertical direction is a direction perpendicular to the plane.

In order to perform the horizontal alignment easily, a plurality laser elements and cores are arranged in an array respectively in the semiconductor laser and the optical waveguide, respectively. As mentioned above the arrays have a pitch respectively so that the pitch is ±two times of the coupling tolerance of the laser element and the core. By virtue of arranging the optical elements thus, it becomes no longer necessary to perform the axis alignment. It is only enough to select the laser element and the core coupled with each other by actuating the laser elements and receiving light from respective laser element. Since the array of the cores is treated in the axis alignment, a rotation error due to a rotation of the core on the plane parallel to the upper surface of the substrate can be also decreased. Incidentally, the rotation error has been very hard to be detected and removed in the prior art. The arrays of the semiconductor laser and the optical waveguides are used, however, the number of these elements does not affect the production cost. In the integration technology, the number of elements does not affect the cost so much.

In order to coincide the mode size (or spot size) of the semiconductor laser with the mode size (or spot size), an optical waveguide for converting the mode size is provided. By virtue of adopting the converting optical waveguide to the optical coupler, the mode size can be decreased so as to coincide with that of the semiconductor laser. However, when the mode size becomes small, the optical coupling becomes hard to be performed because of small alignment tolerance. In a preferred embodiment, a plurality of laser elements of the semiconductor laser and cores of the optical waveguide are arranged in an array respectively and the arrayed laser elements and the cores are placed so as to be opposite to each other. As mentioned above the pitches of the arrays are set so as to be different from other. This method may be called "vernier type align method". That is, when there is assumption that an array of a kind of optical elements is a regular scale of the calipers and another array of another kind of optical elements is a vernier scale of the calipers, even though the positional deviation between a regular scale and a vernier scale is large, at least one of the regular scale can be coincided with a vernier scale. So by using this techique, the semiconductor laser and the optical waveguide can be coupled with each other at very high coupling efficiency without wasting a lot of time.

In order to perform the vertical alignment easily, the total thickness of layers composing the waveguide is required to be small. In order to comply with requirement, a composite core consisting or a main core and a sub core and a buffer layer are applied to the waveguide, the refractive indices of the cores, the clad layer and the buffer layer are changed, the cross sections and shapes of the main core and the sub core are changed for avoiding the leak of light from the waveguide. Furthermore, there is a case where the waveguide is bent for coupling the selected core with the optical fiber easily. In this case the width of the sub core is change to perform the bending with a small radius for making the total size of the optical coupler small.

BRIEF DESCRIPTION OF THE DRAWINGS

Fig. 1 is a schematic diagram of an optical coupler of the prior art;
Fig. 2A is a schematic sectional view of an optical coupler of the prior art;
Fig. 2B is a schematic sectional view of another optical coupler of the prior art;
Fig. 3 is a schematic diagram of an optical coupler of the prior art, using a tapered optical fiber;
Fig. 4 is a schematic sectional view of an optical coupler of the prior art, air-tightened;
Fig. 5 is a schematic perspective view of an optical coupler of the prior art, for illustrating a typical example of position adjustment;
Fig. 6 is a schematic perspective view of another optical coupler of the prior art, for illustrating a typical example of position adjustment;
Fig. 7A is a schematic perspective view of an optical coupler of the prior art, before air-tightened;
Fig. 7B is a schematic perspective view of the optical coupler shown in Fig. 7A, after air-tightened;
Fig. 8A is a schematic perspective view of an optical coupler of the prior art, having a multimode optical waveguide and a stand off for supporting a semiconductor laser;
Fig. 8B is a side view of the optical coupler shown in Fig. 8A;
Fig. 9A is a schematic perspective view of an optical coupler of the prior art, having another type of a multimode optical waveguide;
Fig. 9B is a side view of the optical coupler shown in Fig. 9A;
Fig. 10A is a schematic perspective view of an optical coupler of the prior art, having a spacer for raising up the semiconductor laser;
Fig. 10B is a schematic partial side view of the optical coupler shown in Fig. 10A;
Fig. 11A is a schematic partial perspective view of a semiconductor laser intended to be mounted on a substrate in an optical coupler, in the prior art;
Fig. 11B is a side view of the semiconductor laser mounted on the substrate shown in Fig. 11A;
Fig. 12A is a partial vertical section of a semiconductor laser intended to be bonded;
Fig. 12B is a partial vertical section of a bonding pad formed on a substrate, ready to be fixed with the semiconductor laser shown in Fig. 12A, by bonding;

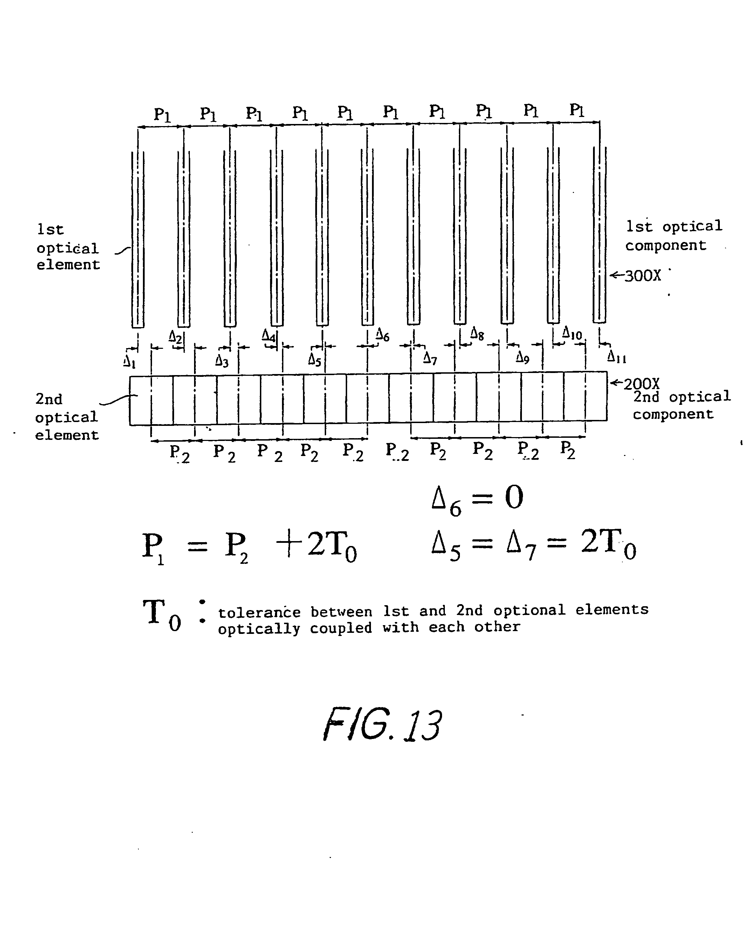

Fig. 13 is a schematic diagram of cores of an optical waveguide and laser elements of an optical semiconductor laser, arranged in an array respectively, for illustrating a first preferred embodiment of the present invention;

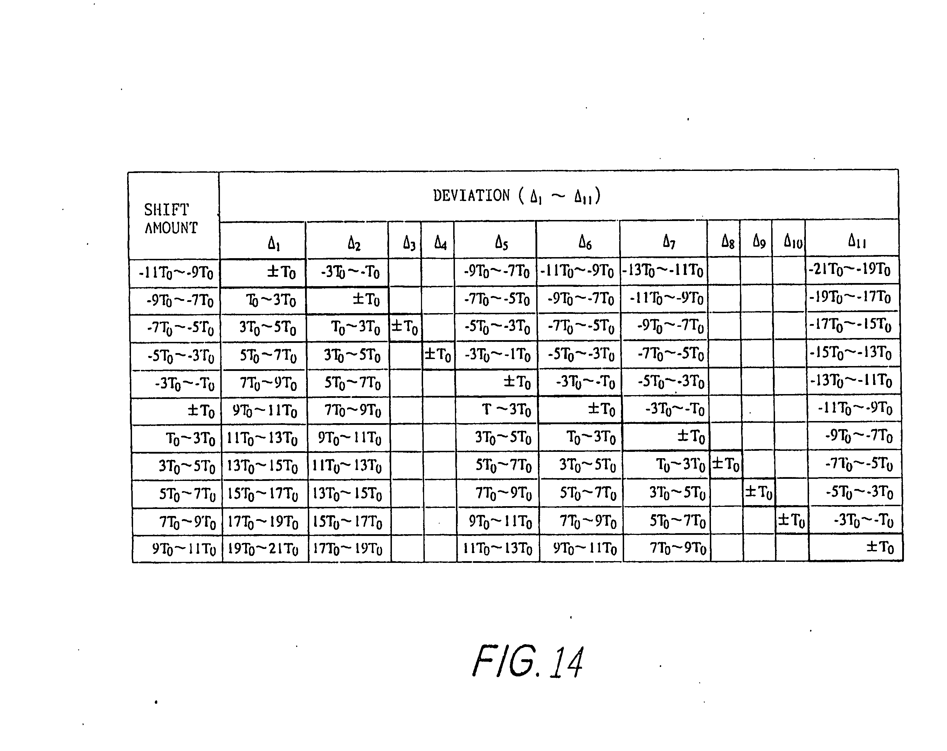

Fig. 14 is a table for deviation between the cores and the laser elements shown in Fig. 13;

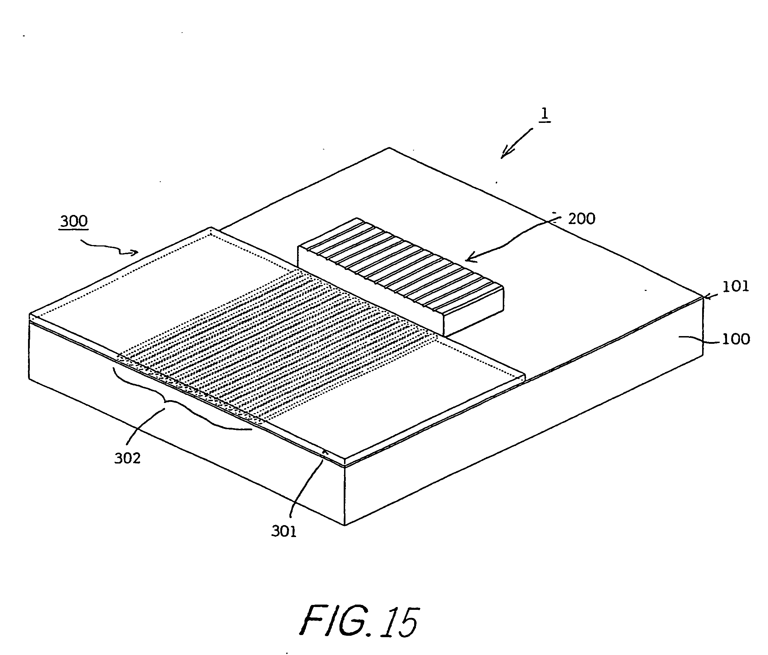

Fig. 15 is a schematic perspective view of an optical coupler for illustrating a second preferred embodiment of the present invention;

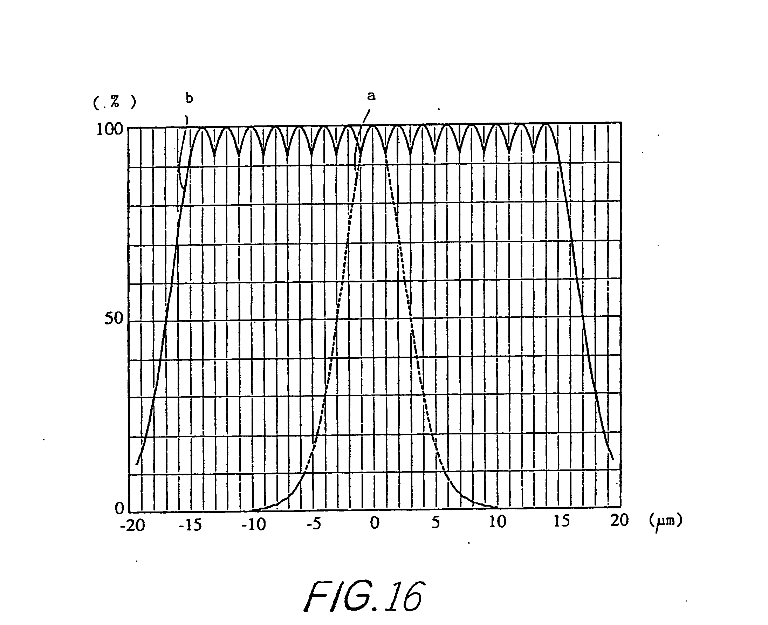

fig. 16 is a graph for showing changes of optical coupling efficiency between a semiconductor laser and an optical waveguide;

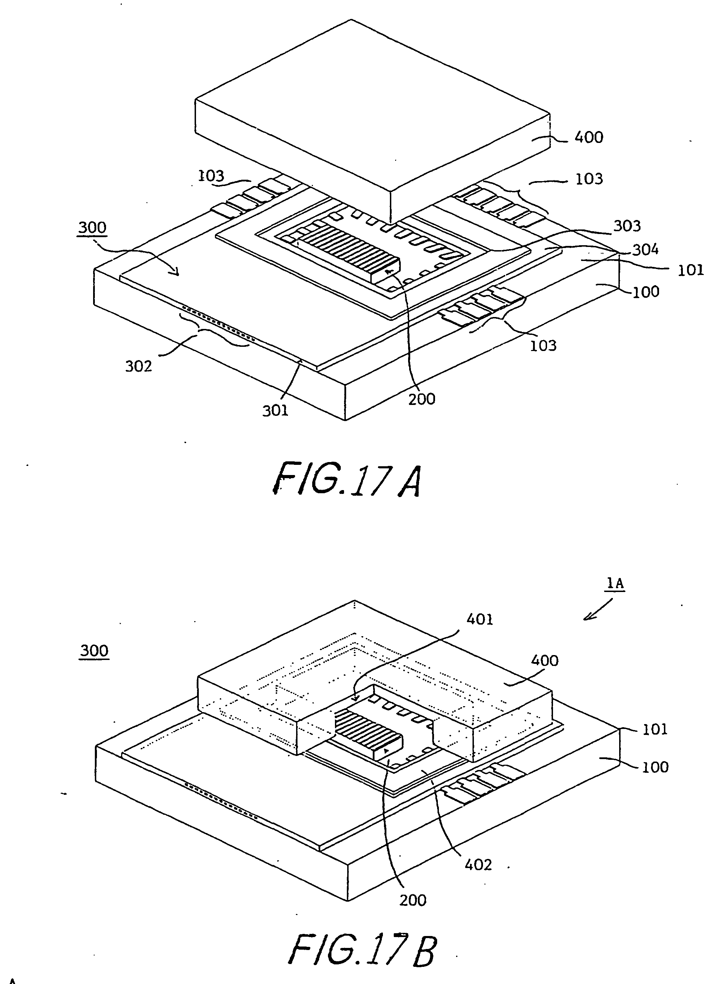

Fig. 17A is a schematic perspective view of an optical coupler before a semiconductor laser is covered for air-tightening, for illustrating a third preferred embodiment of the present invention;
Fig. 17B is a schematic perspective view of the optical coupler shown in Fig. 17A, after the semiconductor is covered;

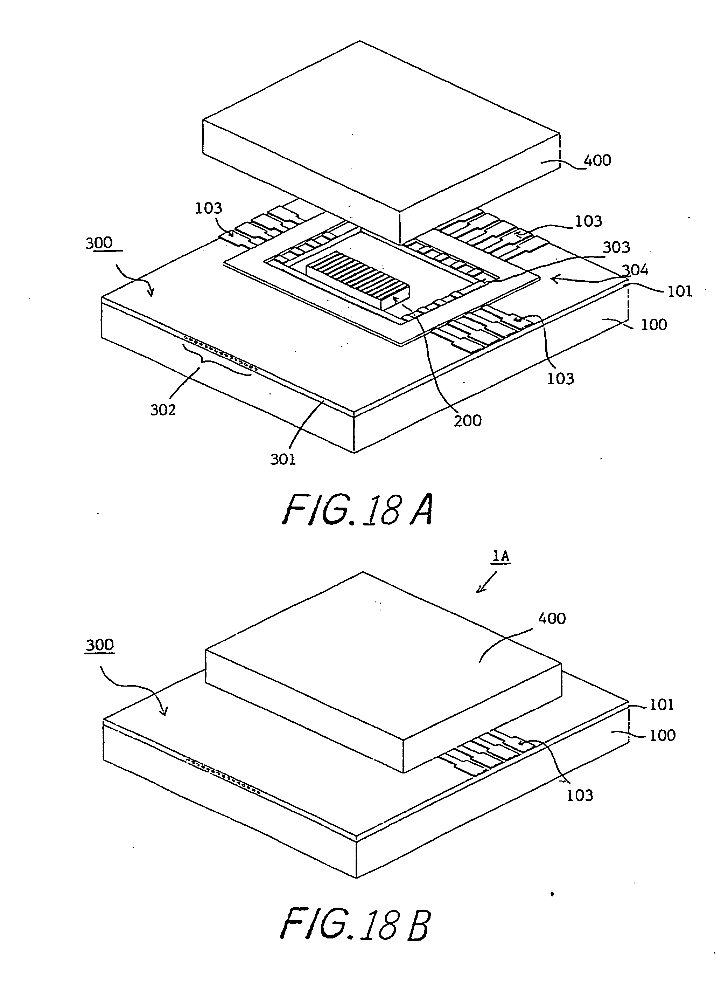

Fig. 18A is a schematic perspective view of an optical coupler before a semiconductor laser is covered for air-tightening, for illustrating a third preferred embodiment of the present invention;

Fig. 18B is a schematic perspective view of the optical coupler shown in Fig. 18A, after the semiconductor laser is covered;

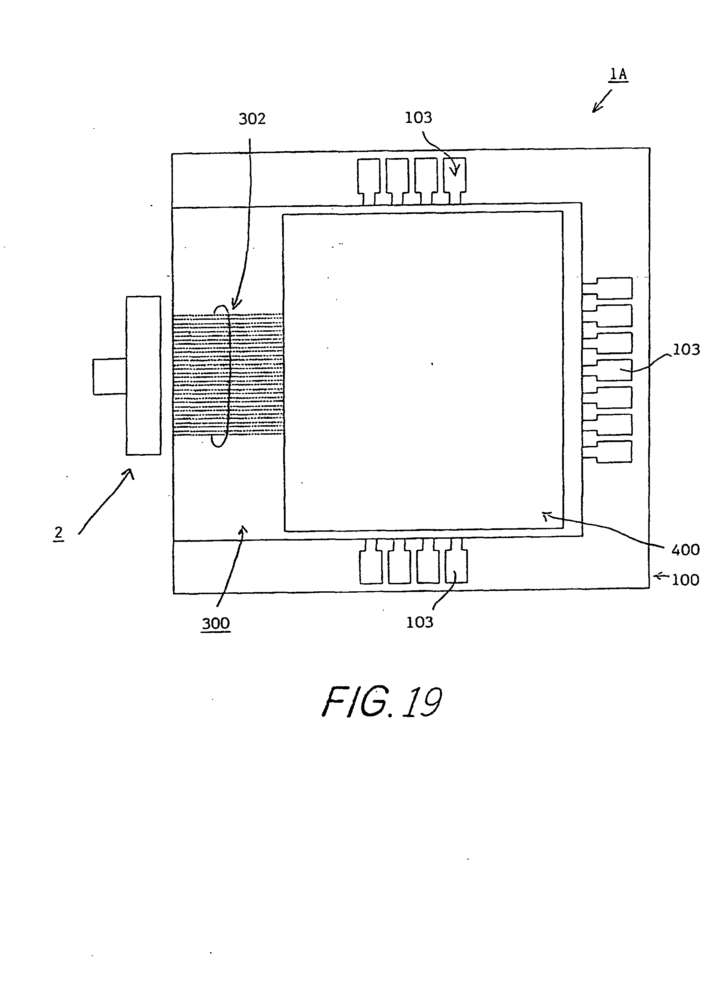

Fig. 19 a schematic top view of the optical coupler shown in Fig. 17A optically connected with a photodiode for detecting a core of the optical waveguide, coupled with the semiconductor laser, for illustrating a fifth preferred embodiment of the present invention;

Fig. 20A is a schematic perspective view of an optical coupler having grooves, before mounting the optical coupler on a substrate and a semiconductor is covered;

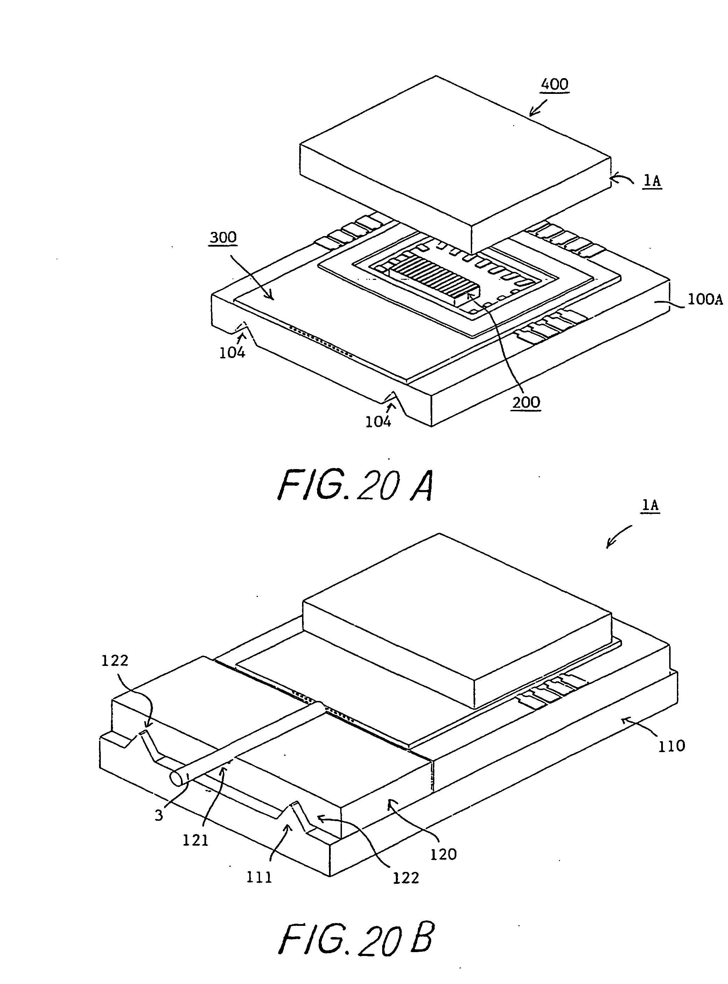

Fig. 20B is a schematic perspective view of the optical coupler mounted on the substrate and connect with an optical fiber, for illustrating a sixth preferred embodiment of the present invention;

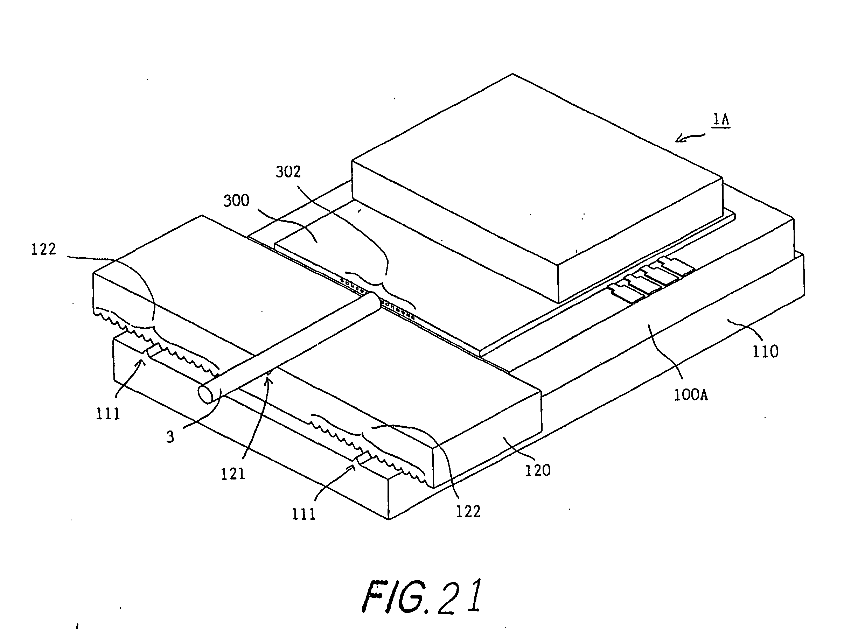

Fig. 21 is a schematic perspective view of an optical coupler mounted on a substrate with an optical fiber, for illustrating a seventh preferred embodiment of the present invention;

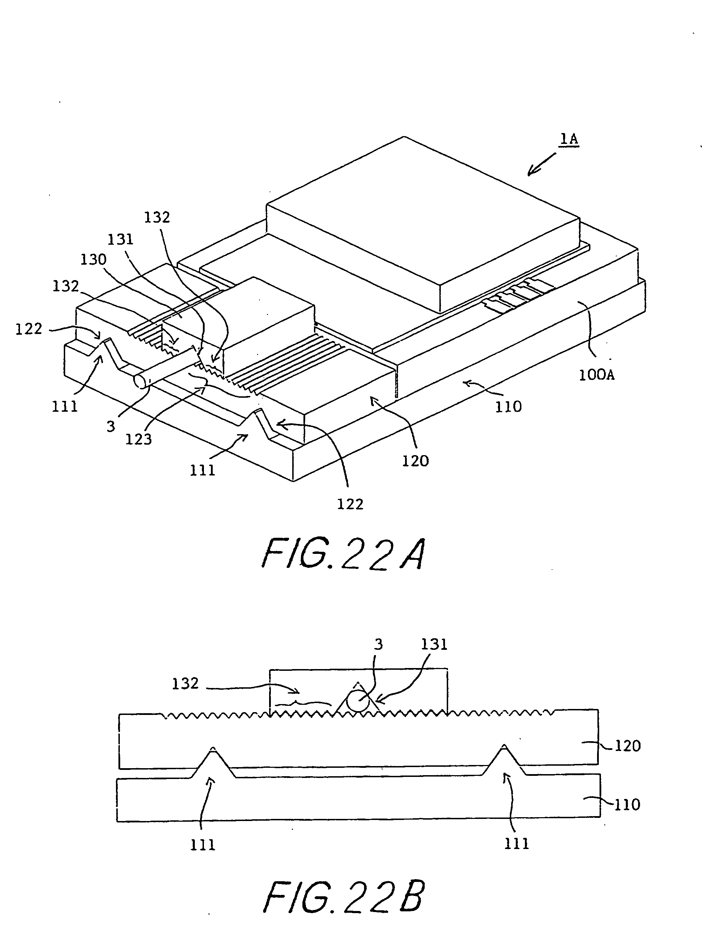

Fig. 22A is a schematic perspective view of an optical coupler connected with an optical fiber and mounted on a substrate, for illustrating an eighth preferred embodiment of the present invention;

Fig. 22B is a schematic vertical side view of the optical coupler connected with the optical fiber, shown in Fig. 22A;

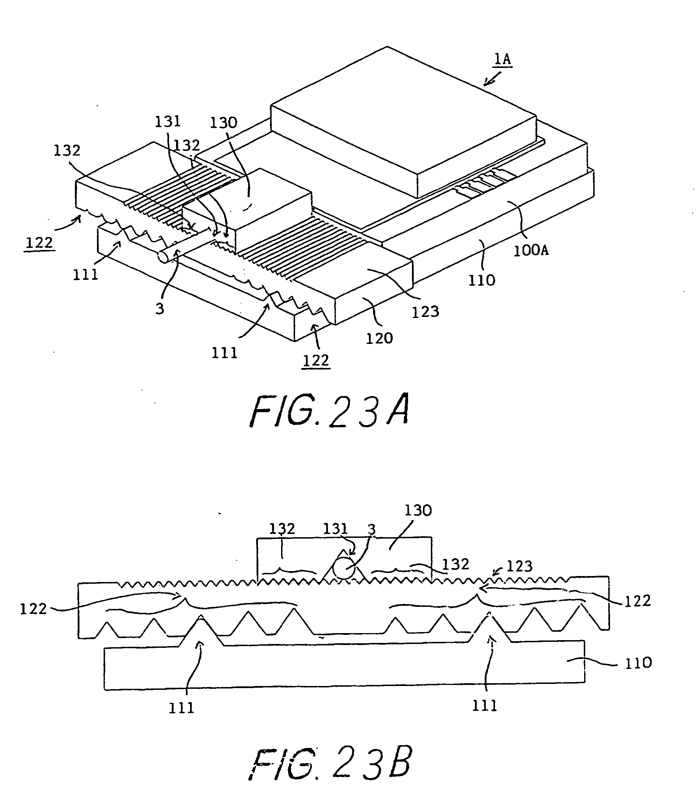

Fig. 23A is a schematic perspective view of an optical coupler connected with an optical fiber and mounted on a substrate, for illustrating a ninth preferred embodiment of the present invention;

Fig. 23B is a schematic vertical side view of the optical coupler connected with the optical fiber, shown in Fig. 23A;

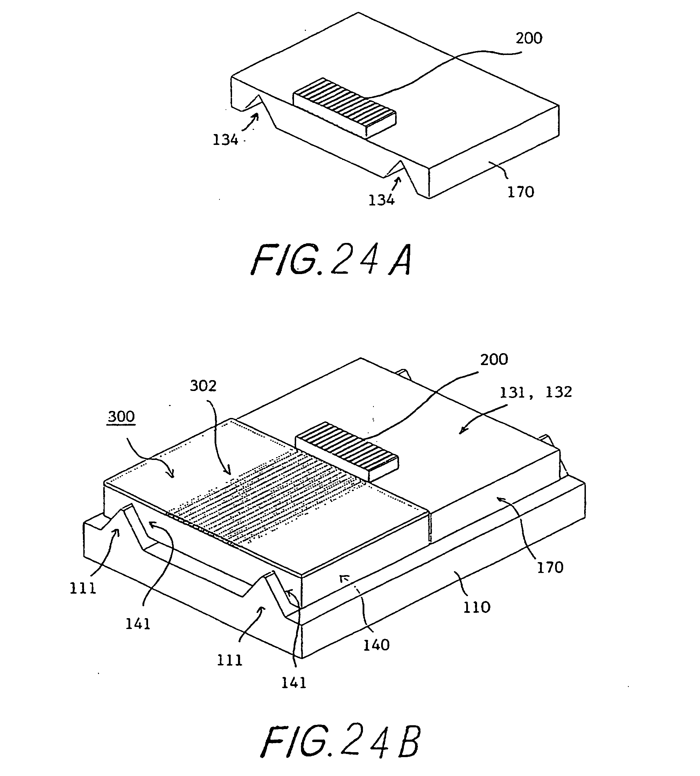

Fig. 24A is a schematic perspective view of a semiconductor laser mounted on a substrate having grooves;

Fig. 24B is a schematic perspective view of an optical coupler including the semiconductor laser shown in Fig. 24A, mounted on a substrate, for illustrating a tenth preferred embodiment of the present invention;

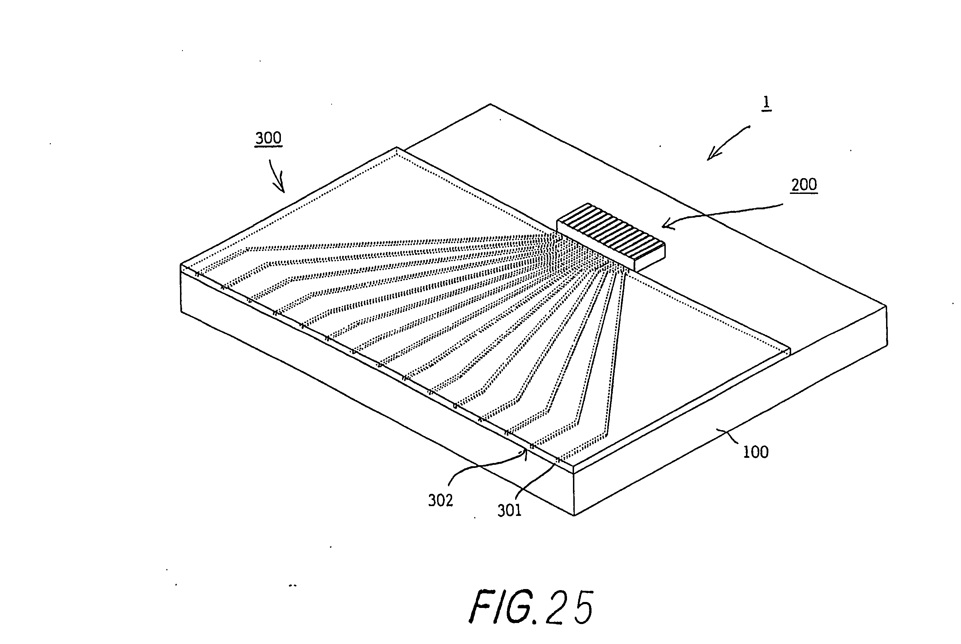

Fig. 25 is a schematic perspective view of an optical coupler including an optical waveguide having cores arranged with a large pitch at an end to be connected with an optical fiber, for illustrating an eleventh preferred embodiment of the present invention;

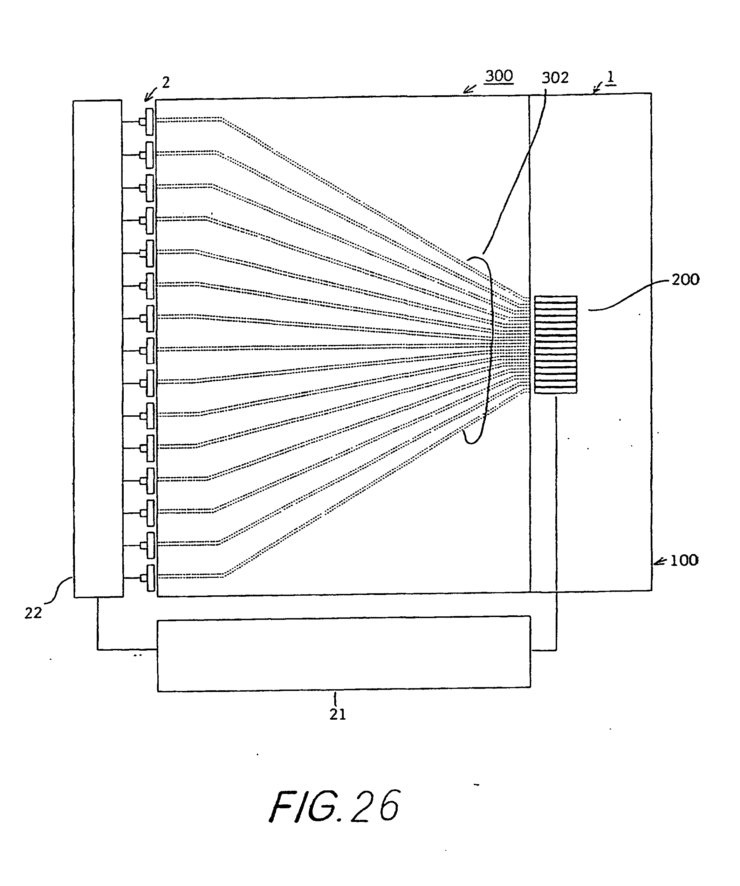

Fig. 26 is a schematic plan view of the optical coupler shown in Fig. 25 connected with a selecting system for selecting coupled core and laser element, for illustrating a twelfth preferred embodiment of the present invention;

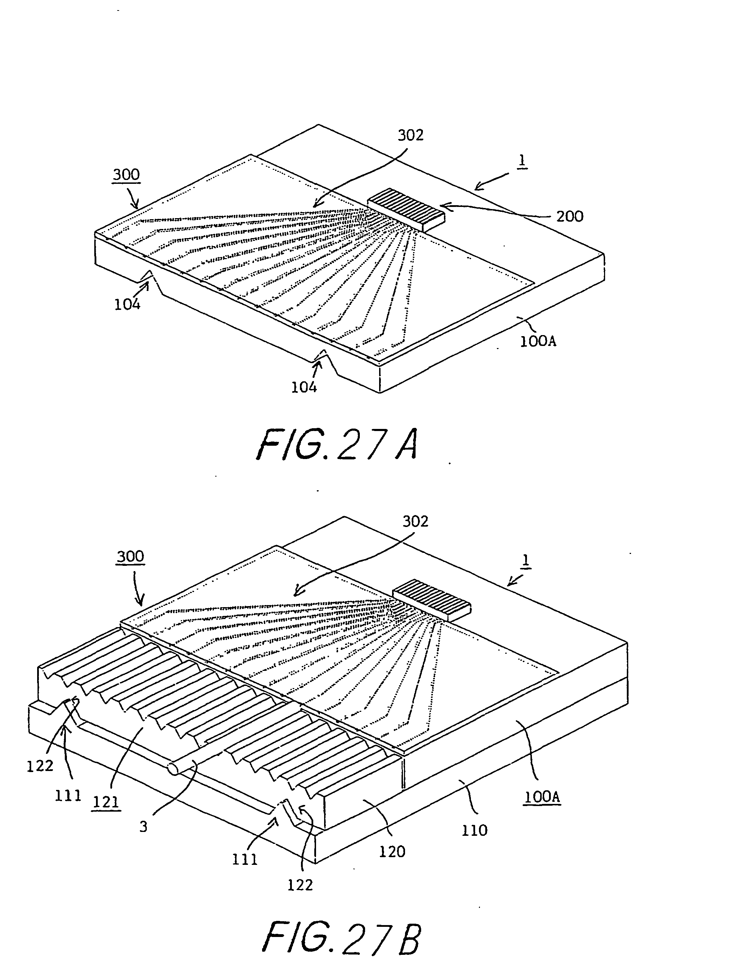

Fig. 27A is a schematic perspective view of the optical coupler shown in Fig. 25, having grooves;

Fig. 27B is a schematic perspective view of the optical coupler shown in Fig. 27A mounted on a substrate with an optical fiber, for illustrating a thirteenth preferred embodiment of the present invention;

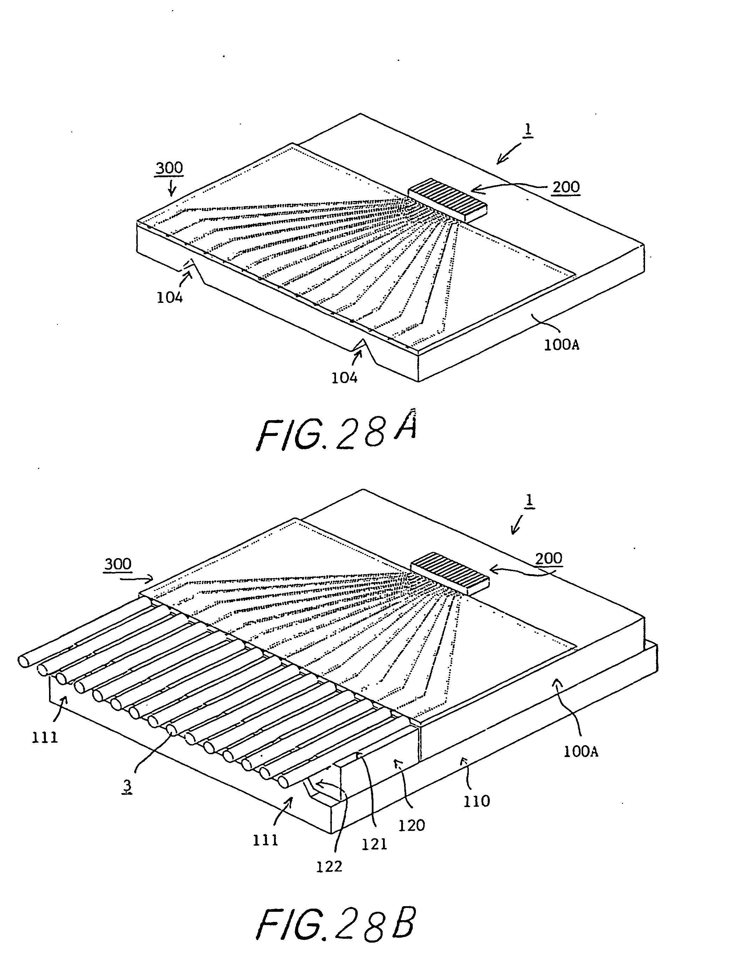

Fig. 28A is a schematic perspective view of the optical coupler shown in Fig. 25, having grooves;

Fig. 28B is a schematic perspective view of the optical coupler shown in Fig. 28A mounted on a substrate with a plurality of optical fibers, for illustrating a fourteenth preferred embodiment of the present invention;

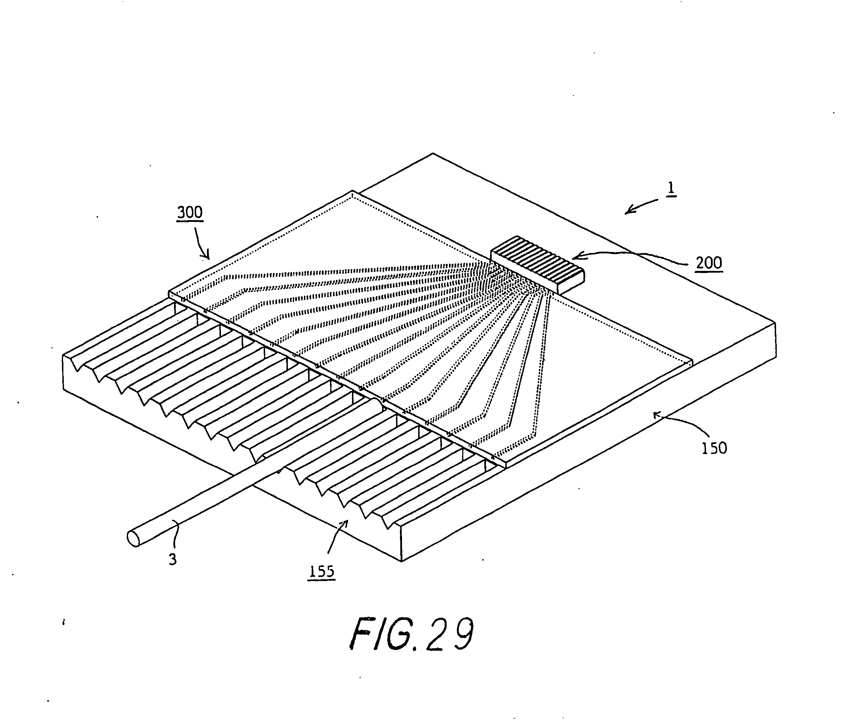

Fig. 29 is a schematic perspective view of an optical coupler of the same king as shown in Fig. 25, having grooves of the same number as cores, for mounting an optical fiber, for illustrating a fifteenth preferred embodiment of the present invention;

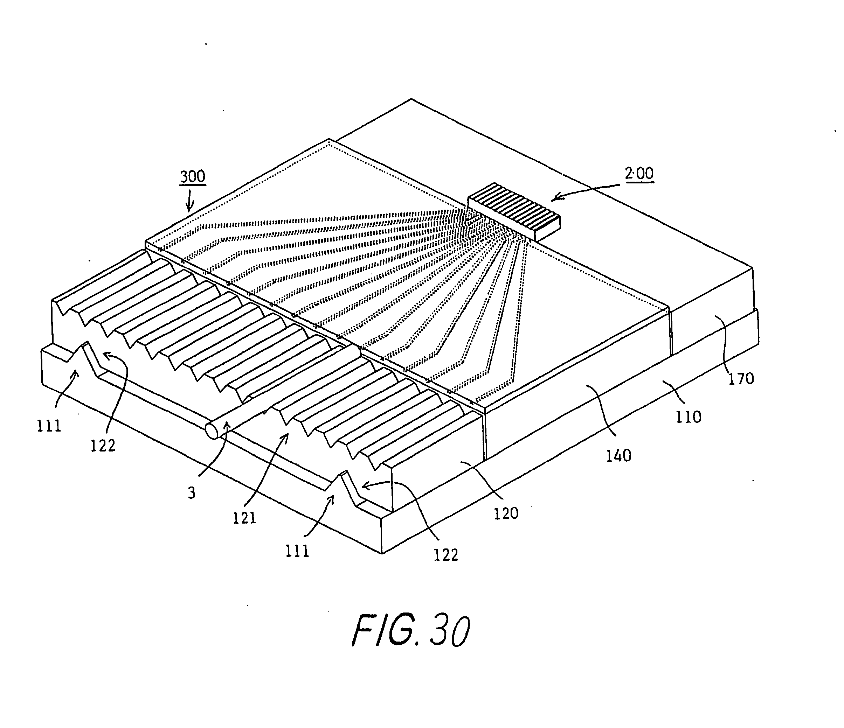

Fig. 30 is a schematic perspective view of an optical coupler of the same kind as shown in Fig. 25, mounted on a common substrate with grooves for mounting an optical fibers, for illustrating a sixteenth preferred embodiment of the present invention;

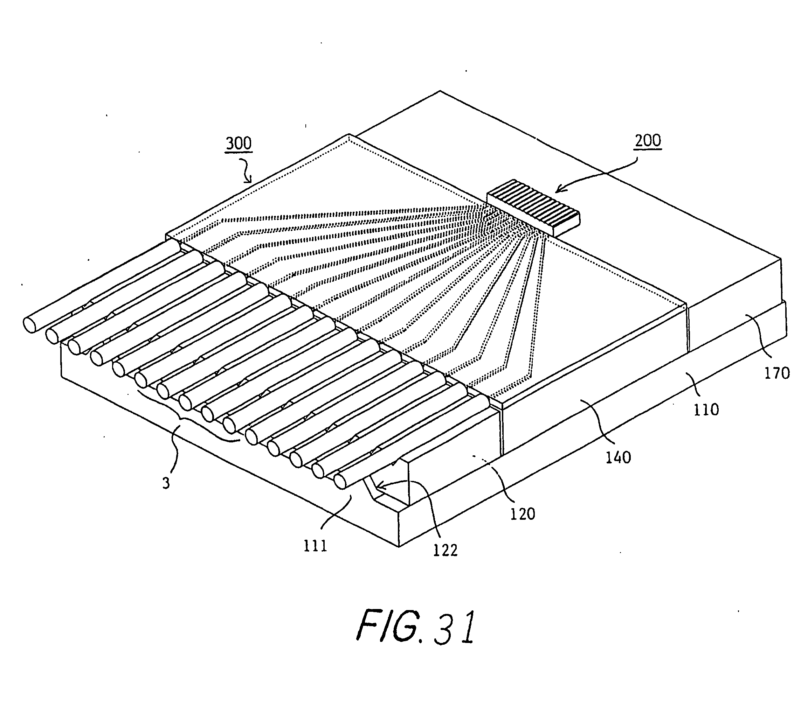

Fig. 31 is a schematic perspective view of the optical coupler shown in Fig. 30, mounted on a common substrate with grooves for mounting a plurality of optical fibers, for illustrating a seventeenth preferred embodiment of the present invention;

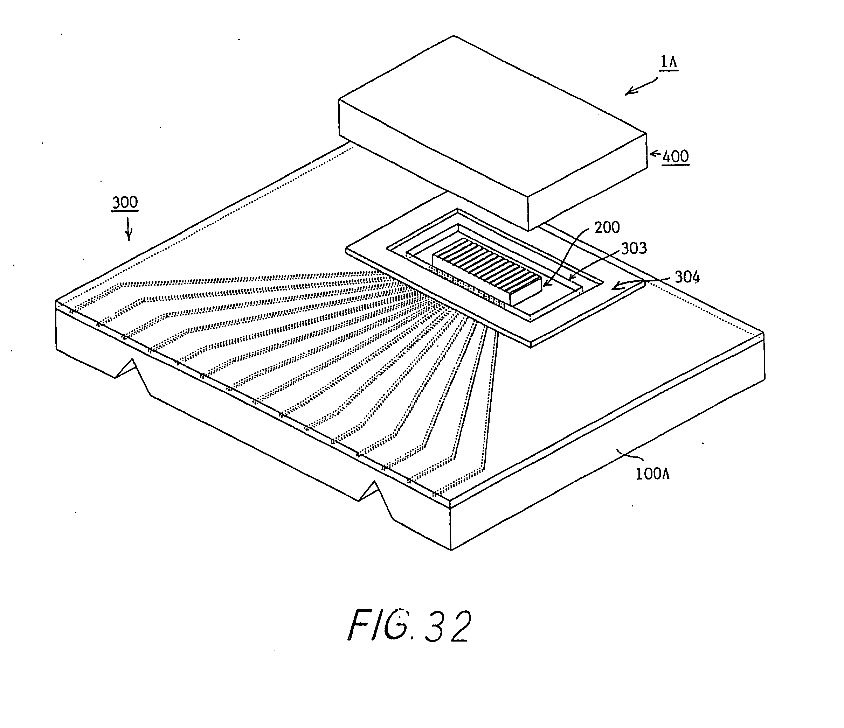

Fig. 32 is a schematic perspective view of an optical coupler of the same kind as shown in Fig. 25, including an air-tightened semiconductor laser, having grooves, for illustrating eighteenth preferred embodiment of the present invention;

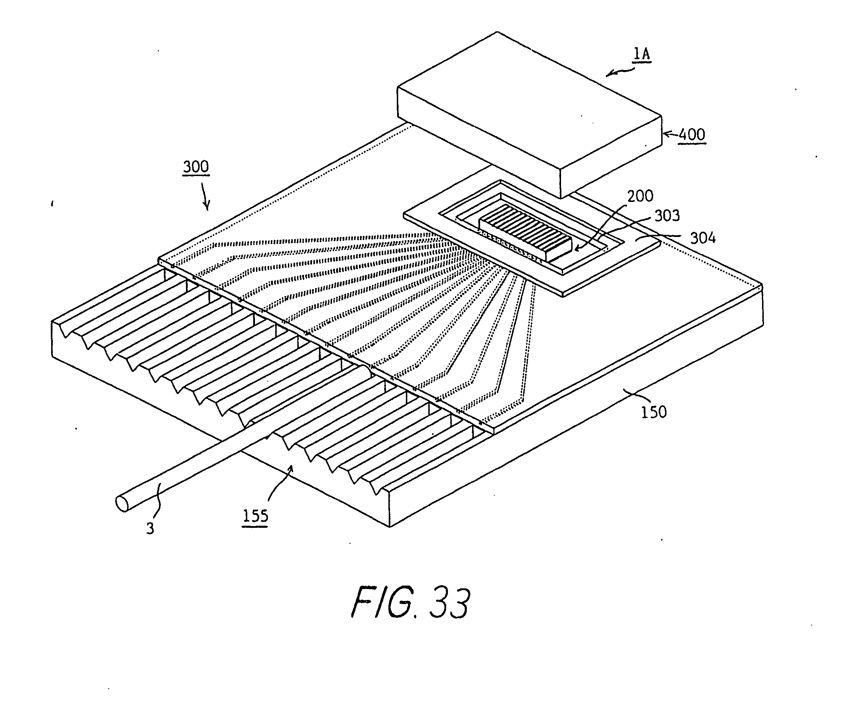

Fig. 33 is a schematic perspective view of an optical coupler connected with grooves for mounting an optical fiber, for illustrating a nineteenth preferred embodiment of the present invention;

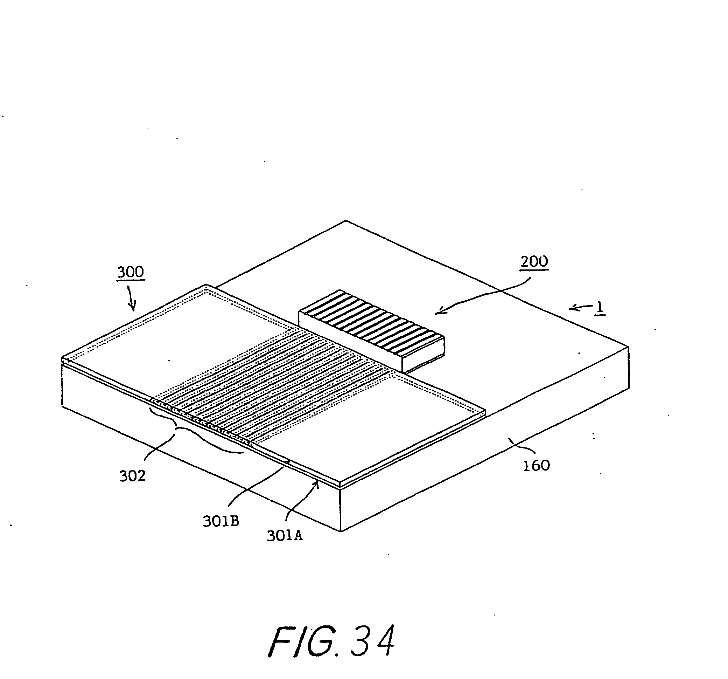

Fig. 34 is a schematic perspective view of an optical coupler having a quarts substrate and a thin underclad layer, for illustrating a twentieth preferred embodiment of the present invention

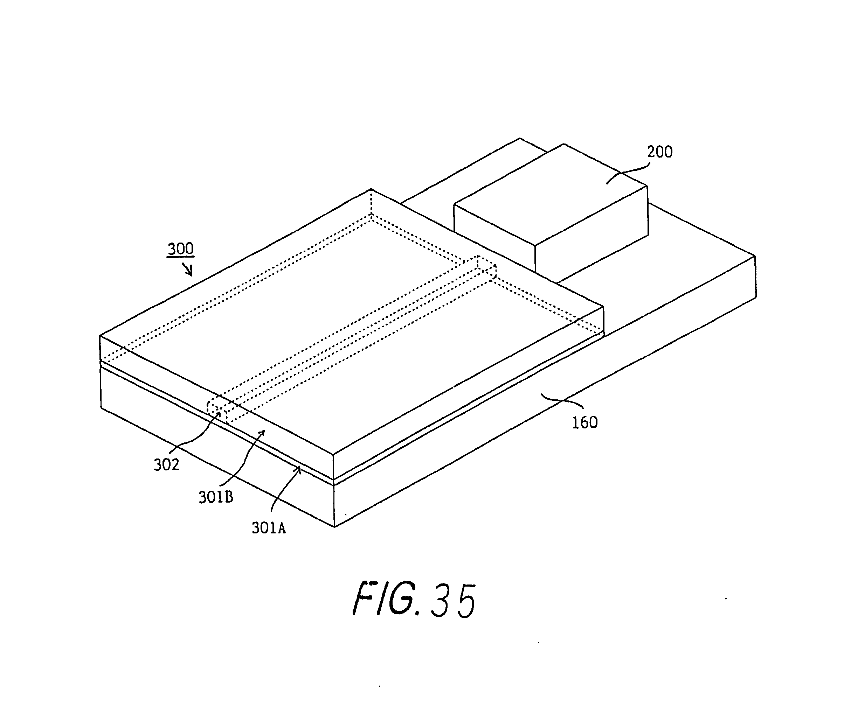

Fig. 35 is a schematic perspective view of an optical coupler including a single laser element and core, for illustrating a twenty first preferred embodiment of the present invention;

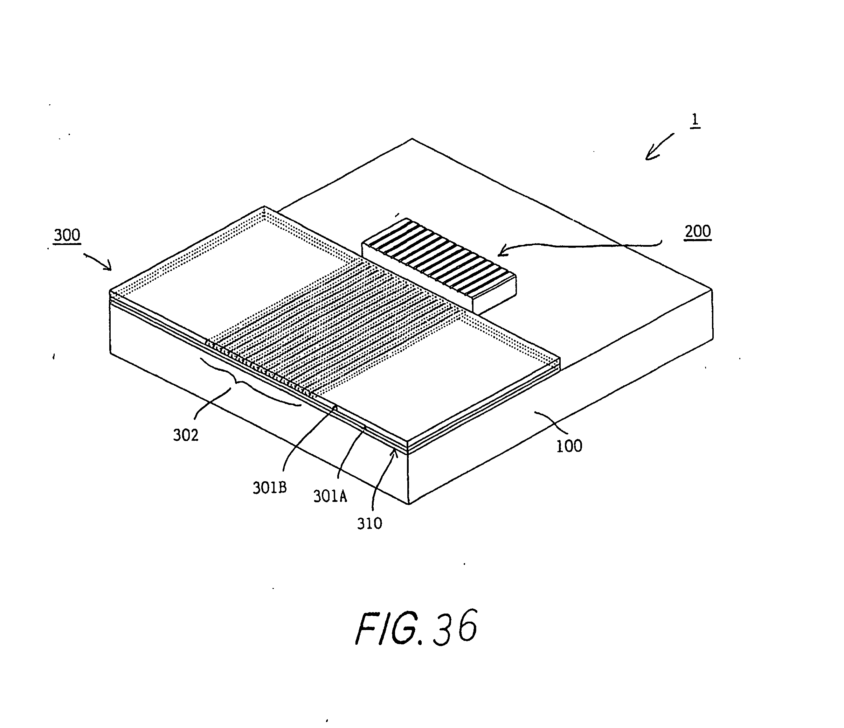

Fig. 36 is a schematic perspective view of an optical coupler including a buffer layer, for illustrating a twenty second preferred embodiment of the present invention;

Fig. 37A is a schematic diagram of slab structure in the optical coupler shown in Fig. 36;

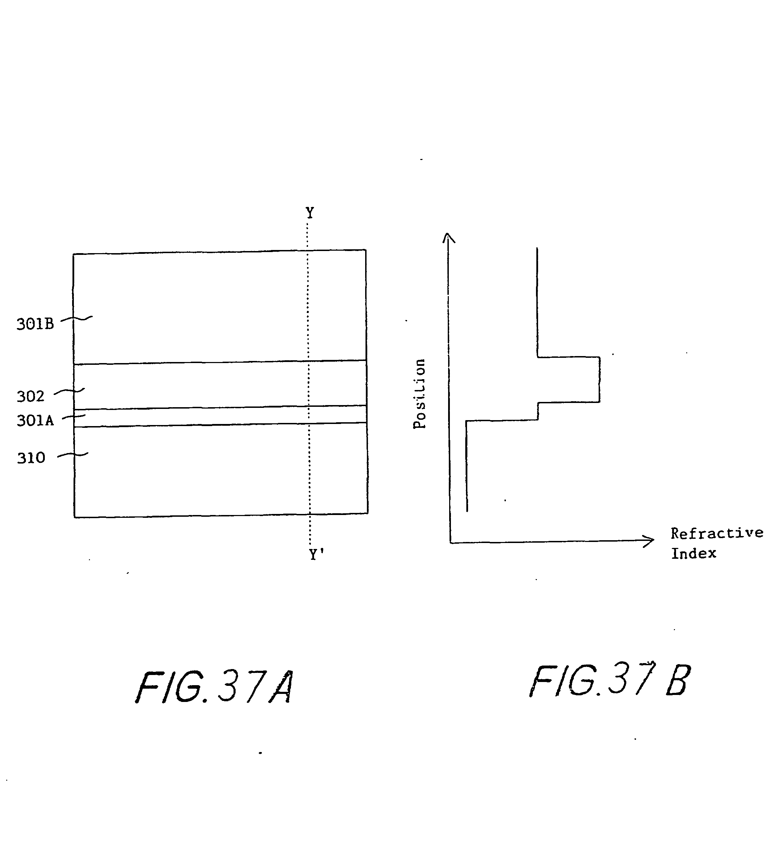

Fig. 37B is a graph for showing a refractive index change appearing across the slab structure shown in Fig. 37A;

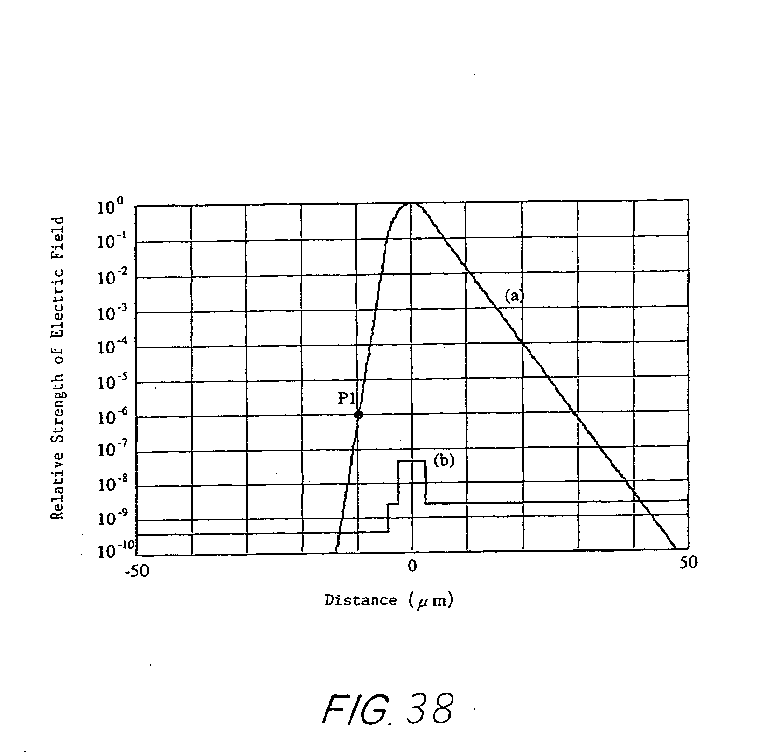

Fig. 38 is a graph for showing electric field strength change appearing across the slab structure, for illustrating a feature of the twenty second preferred embodiment described in reference with Fig. 36;

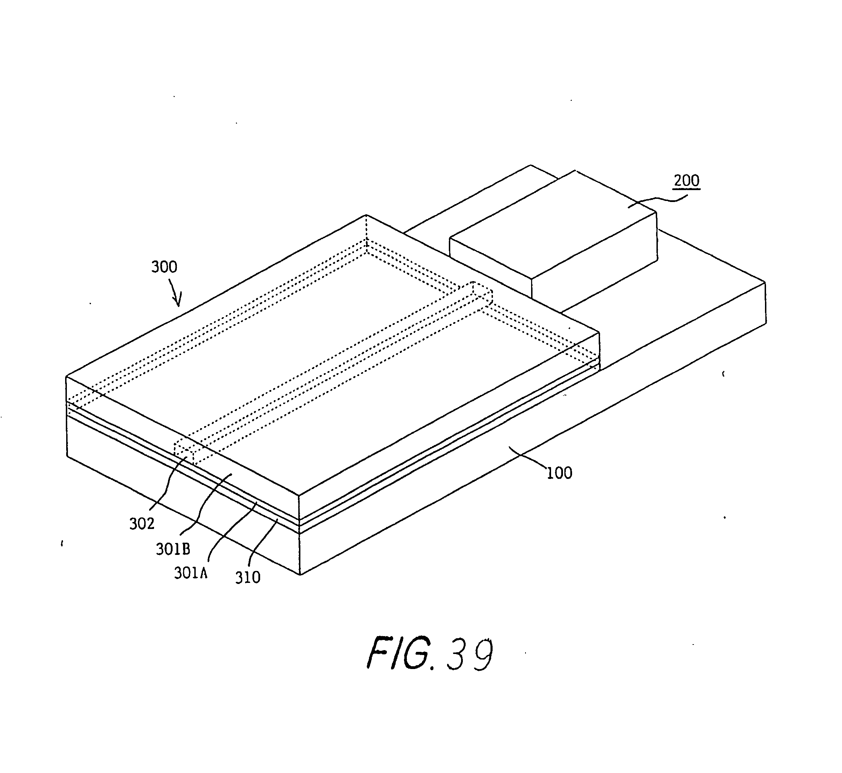

Fig. 39 is a schematic perspective view of an optical coupler including a laser element and core and having the slab structure of layers the same as in Fig.

36;

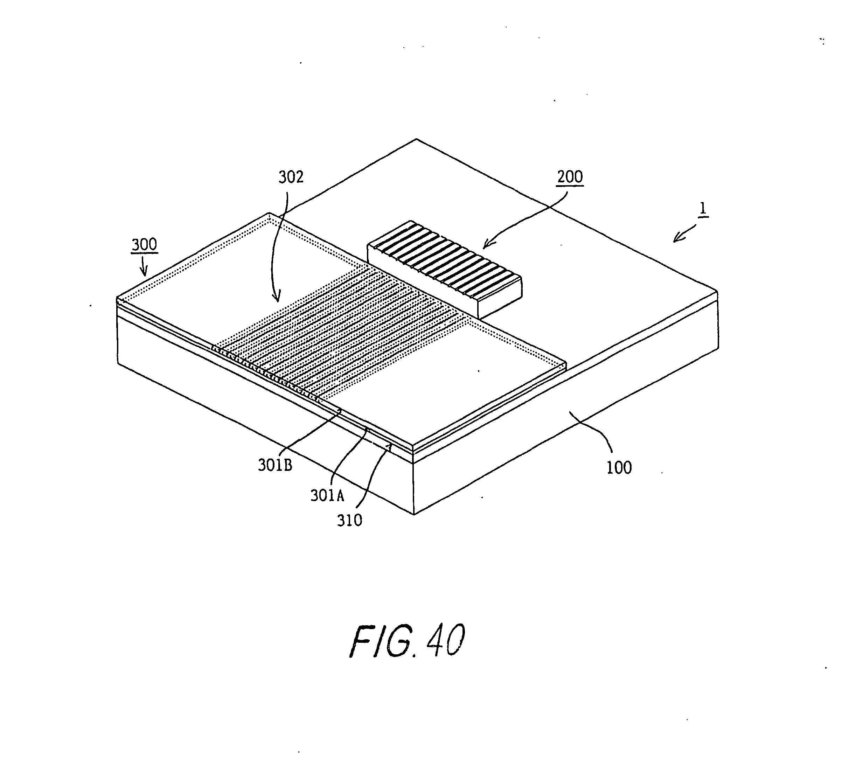

Fig. 40 is a schematic perspective view of an optical coupler for illustrating a twenty third preferred embodiment of the present invention;

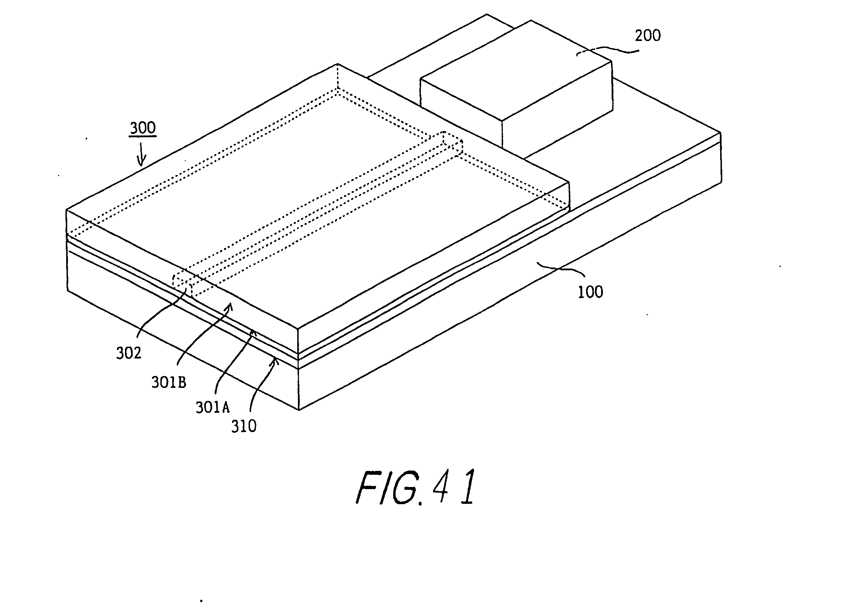

Fig. 41 is a schematic perspective view of an optical coupler including a single laser element and core and having the same feature as of the twenty third preferred embodiment;

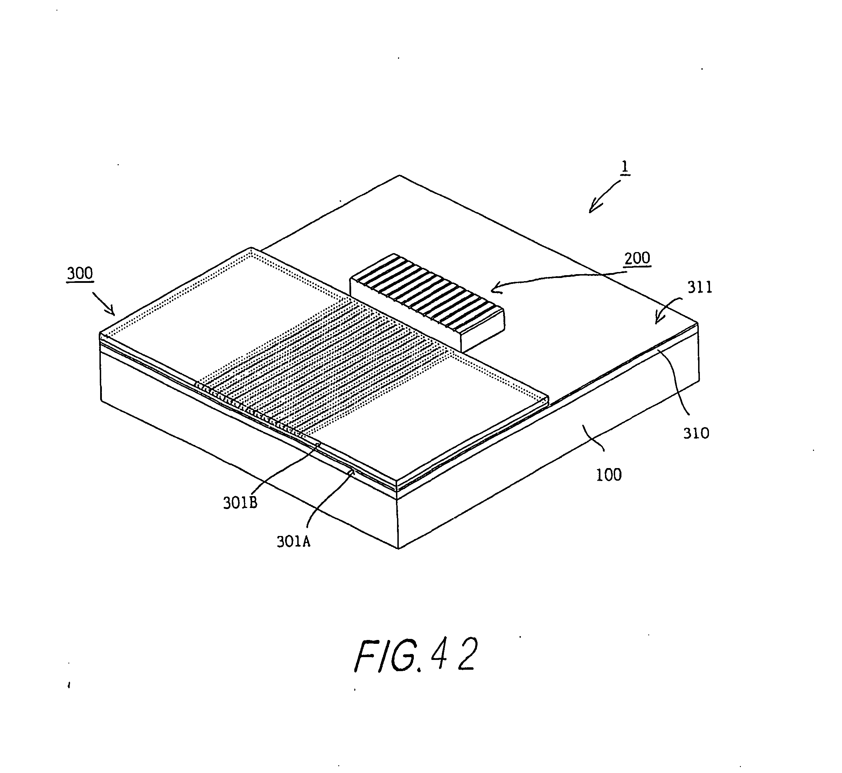

Fig. 42 is a schematic perspective view of an optical coupler having slave structure of layers for making axis vertical alignment easy, for illustrating a twenty fourth preferred embodiment of the present invention;

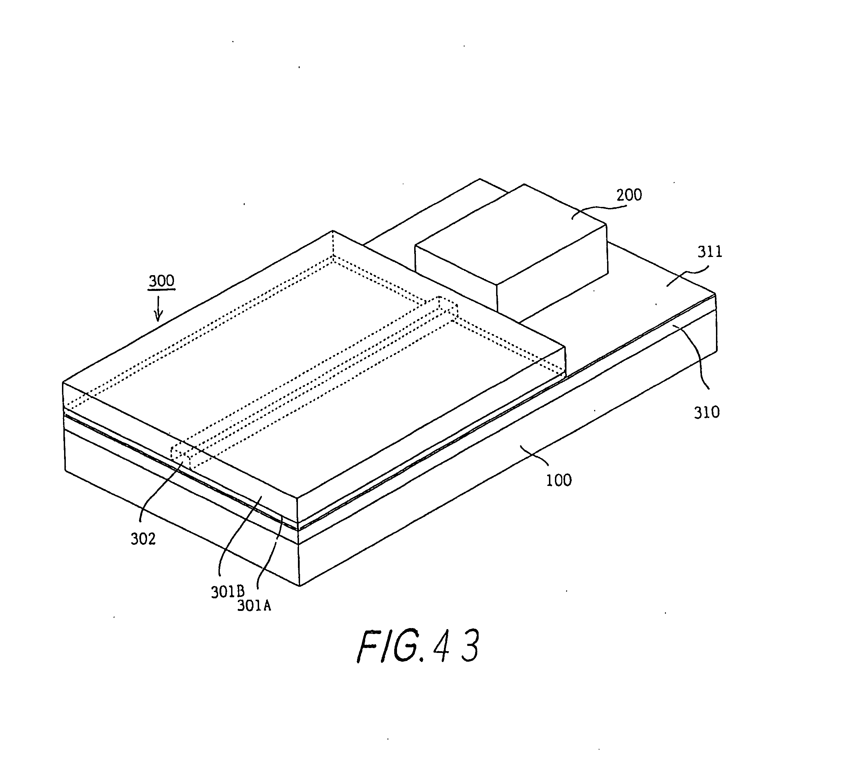

Fig. 43 is a schematic perspective view of an optical coupler including a single laser element and core and having the same feature as of the twenty fourth preferred embodiment,

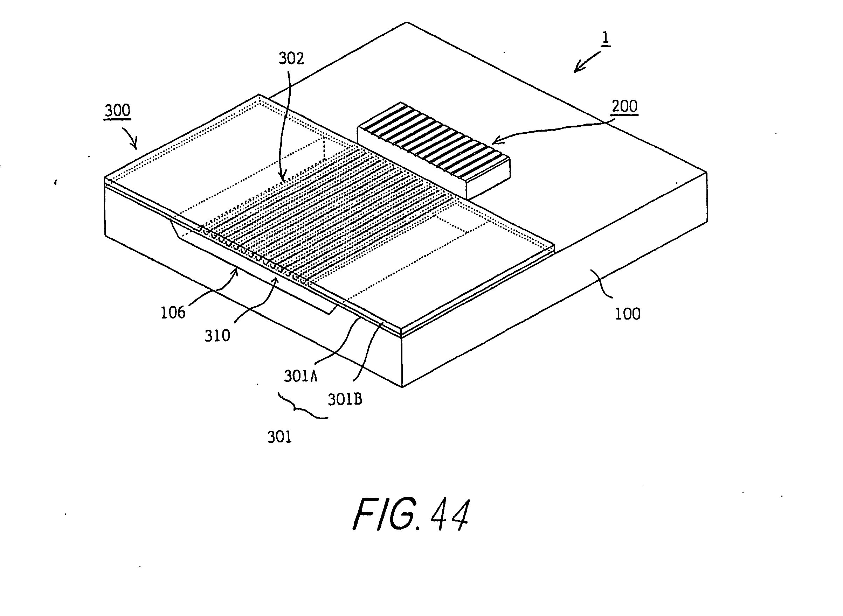

Fig. 44 is a schematic perspective view of an optical coupler having a depression under cores, filled with a buffer layer, for illustrating a twenty fifth preferred embodiment of the present invention;

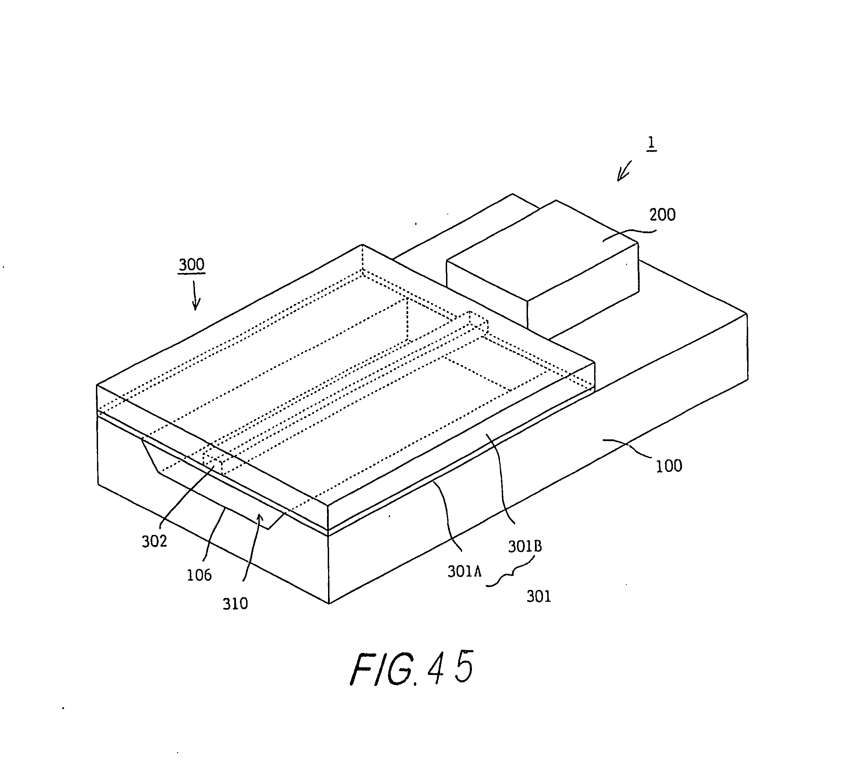

Fig. 45 is a schematic perspective view of an optical coupler including a single laser element and core and having the same feature as of the twenty fifth preferred embodiment;

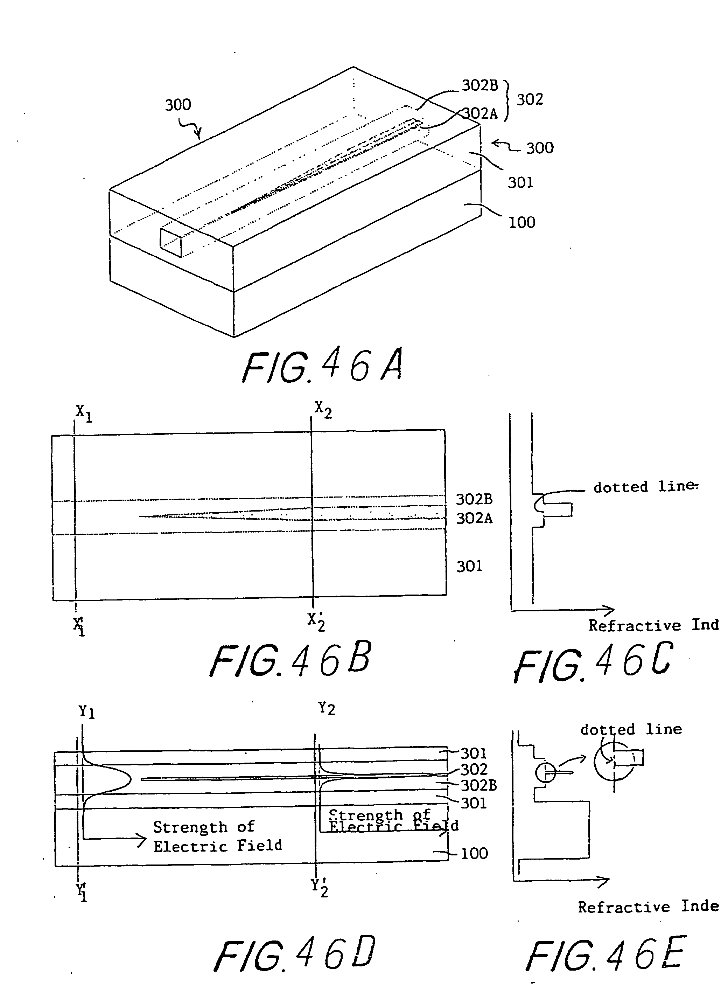

Fig. 46A is a schematic perspective view of an optical waveguide including a main core of a tapered shape and a sub core;

Fig. 46B is a top plan view of the optical waveguide in Fig. 46A;

Fig. 46C is a graph for showing a refractive index change appearing across the waveguide shown in Fig. 46B;

Fig. 46D is slab structure of layers and electric field strength changes appearing across the slab structure at points including, not including the main core shown in Fig. 46A;

Fig. 46E is a graph for showing refractive index changes appearing across the points shown in Fig. 46D;

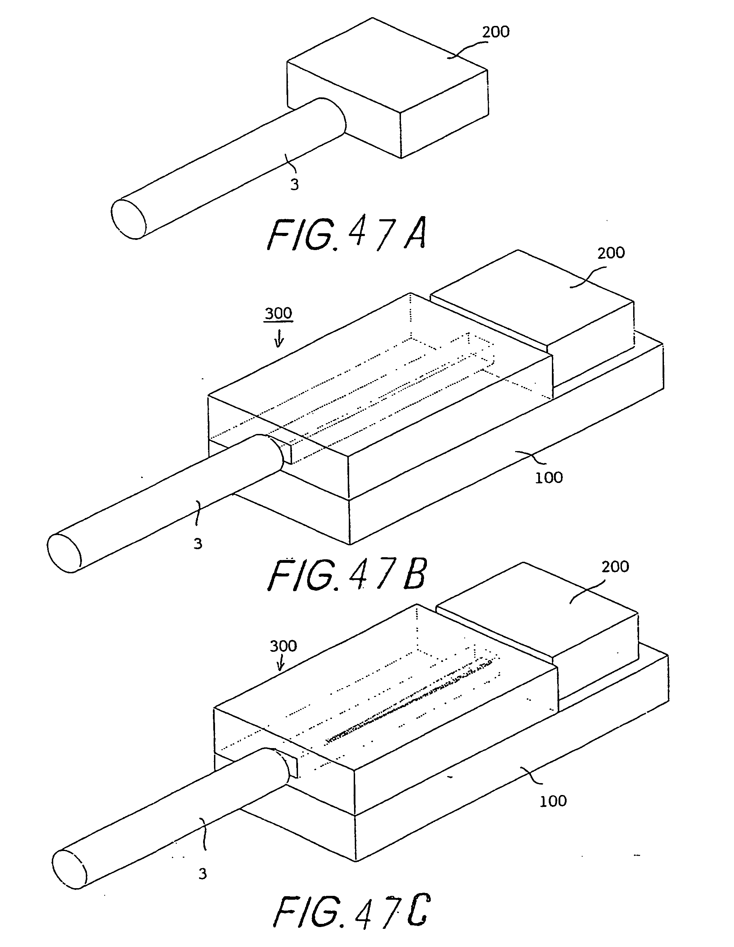

Fig. 47A is a schematic perspective view of a semiconductor laser including a single laser element directly coupled with an optical fiber;

Fig. 47B is a schematic perspective view of the semiconductor laser the same as in Fig. 47A, connected with the optical fiber the same as in Fig. 47A, through an optical wave guide including an ordinary core;

Fig. 47C is a schematic perspective view of the semiconductor laser the same as in Fig. 47A, connected with the optical fiber the same as in Fig. 47A, through an optical wave guide including a tapered shape main core and a sub core;

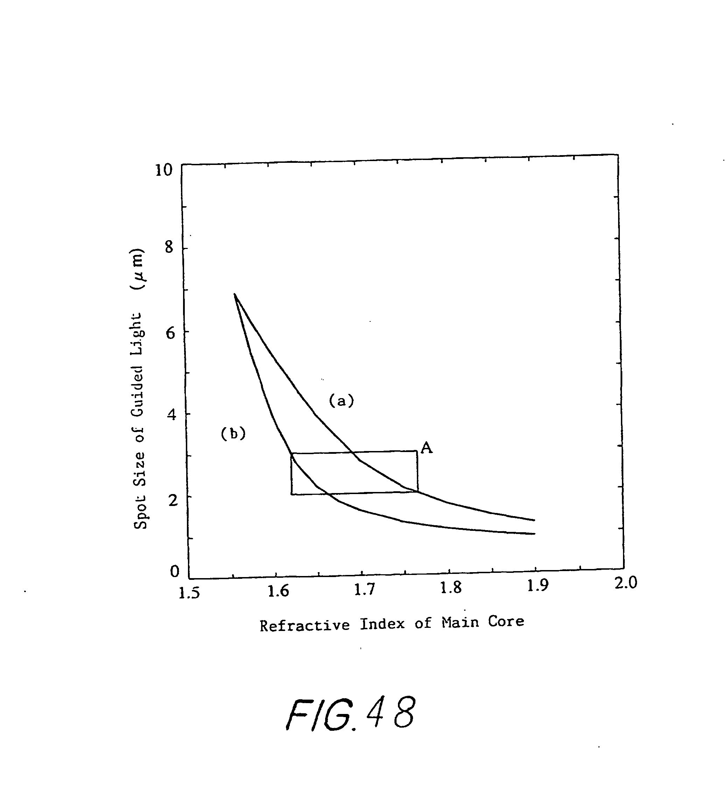

Fig. 48 is a graph for showing a change of a spot size of light transmitting the waveguide, due to a change of a refractive index of the main core in case of changing thickness of the main core, in Fig. 46A;

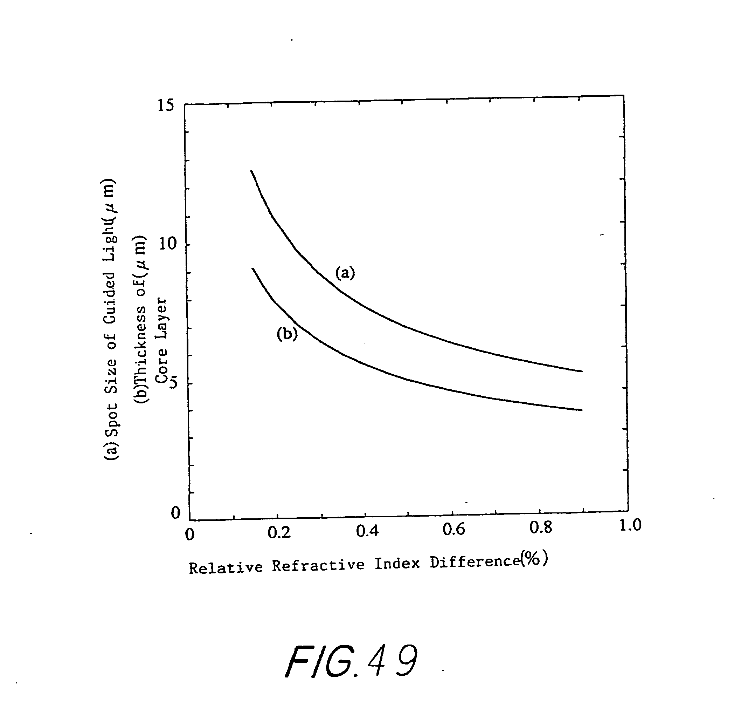

Fig. 49 is a graph for showing a change of the spot size, due to a change of a relative refractive index difference in case of changing thickness of the main core, in Fig. 46A;

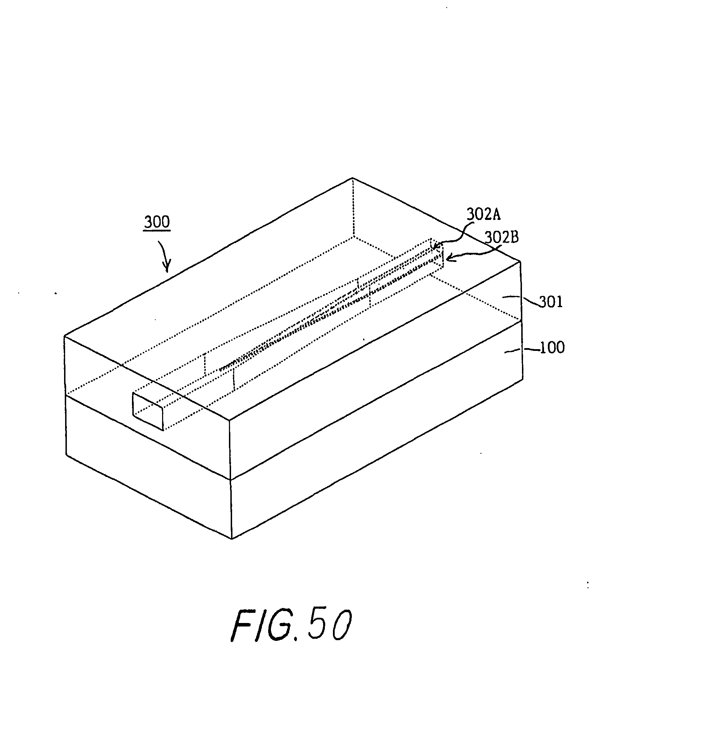

Fig. 50 is a schematic perspective view of an optical waveguide having a tapered main core and a sub core having different width partially;

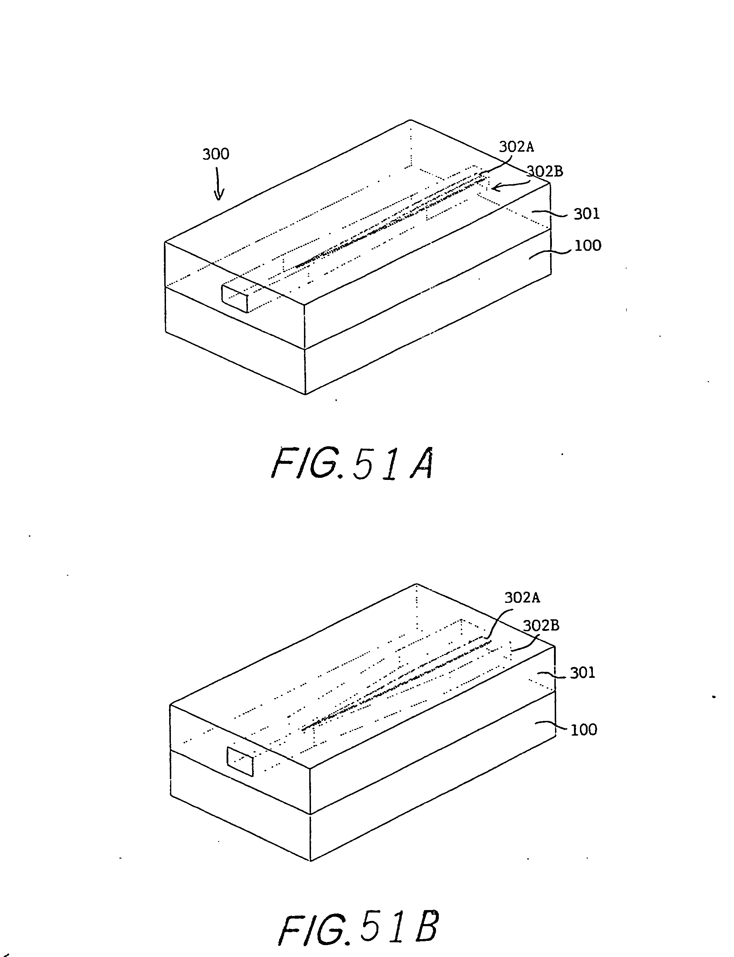

Fig. 51A is a schematic perspective view of an optical waveguide having a tapered main core and a sub core having different width partially;

Fig. 51B is a schematic perspective view of an optical waveguide having a tapered main core and a sub core having different width partially;

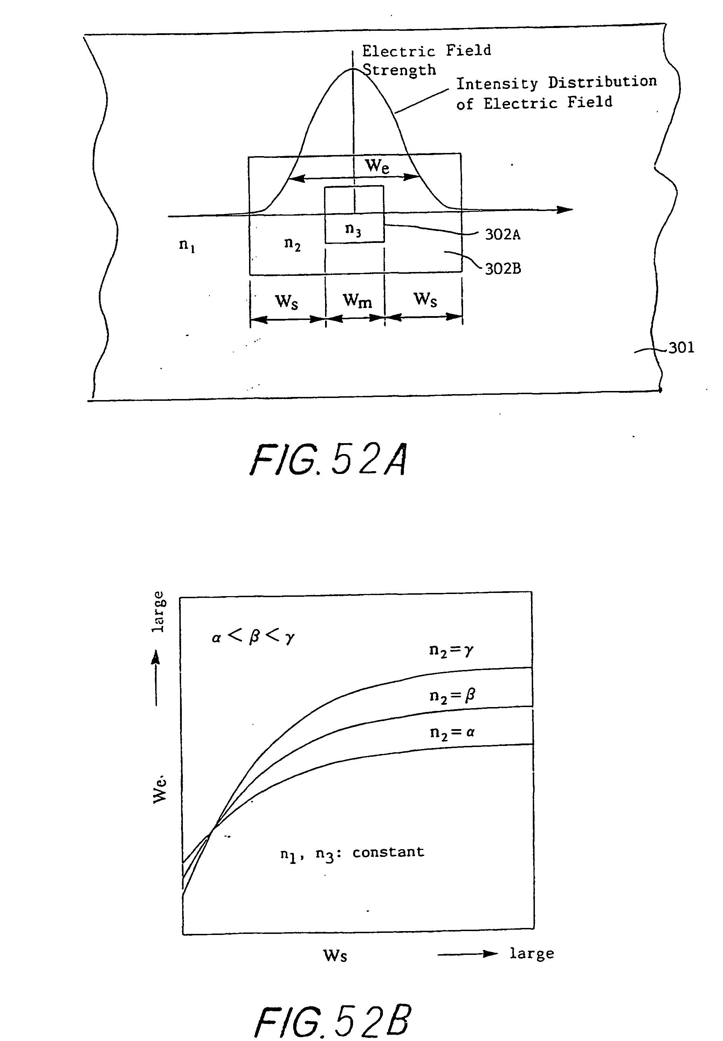

Fig. 52A is a cross section of a single core waveguide with electric field distribution around the waveguide;

Fig. 52B is a graph for showing a spot size change due to a change of a width of the single core in the single core waveguide shown in Fig. 52A;

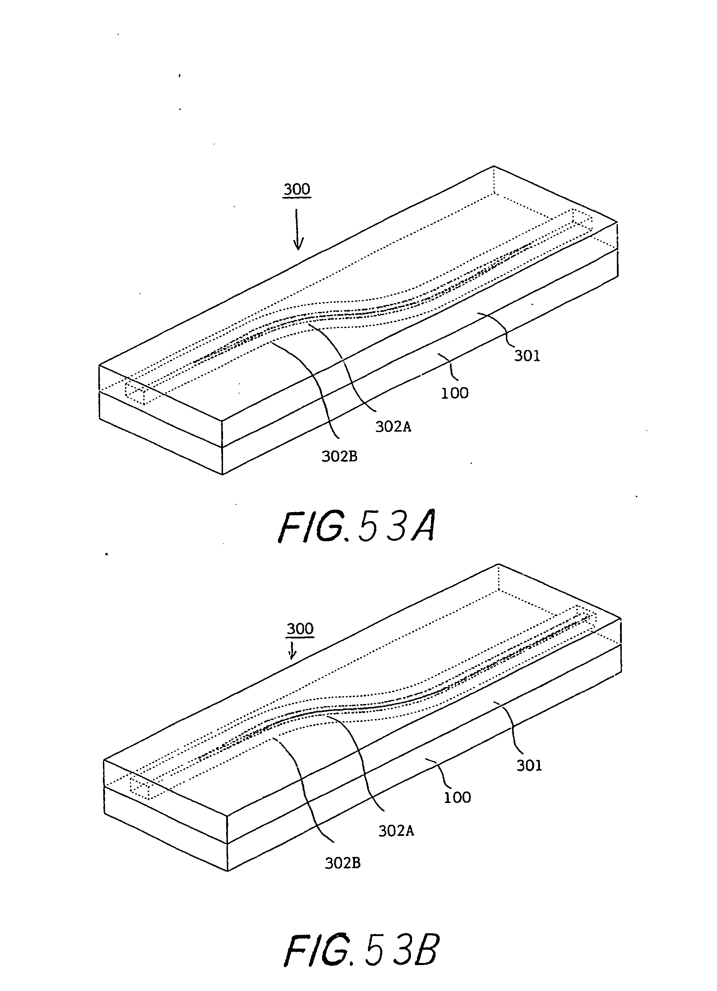

Fig. 53A is a schematic perspective view of a single core optical waveguide having a bent core;

Fig. 53B is a schematic perspective view of a single core optical waveguide having a bent core;

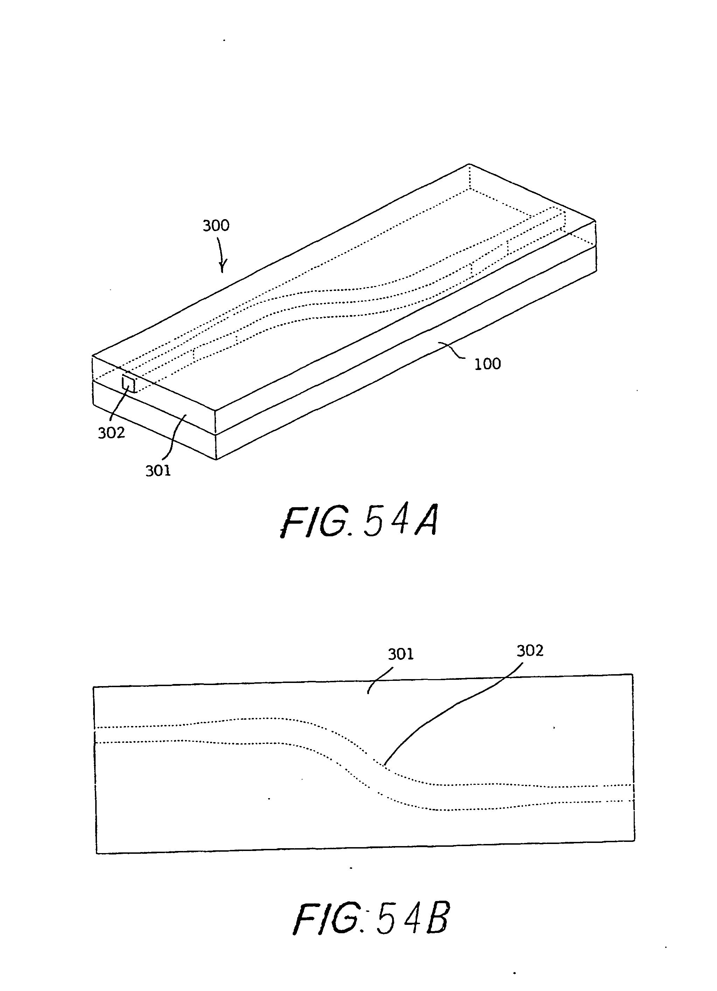

Fig. 54A is a schematic perspective view of a single core optical waveguide having a bent core;

Fig. 54B is a top plan view of the single core optical waveguide shown in Fig. 54B;

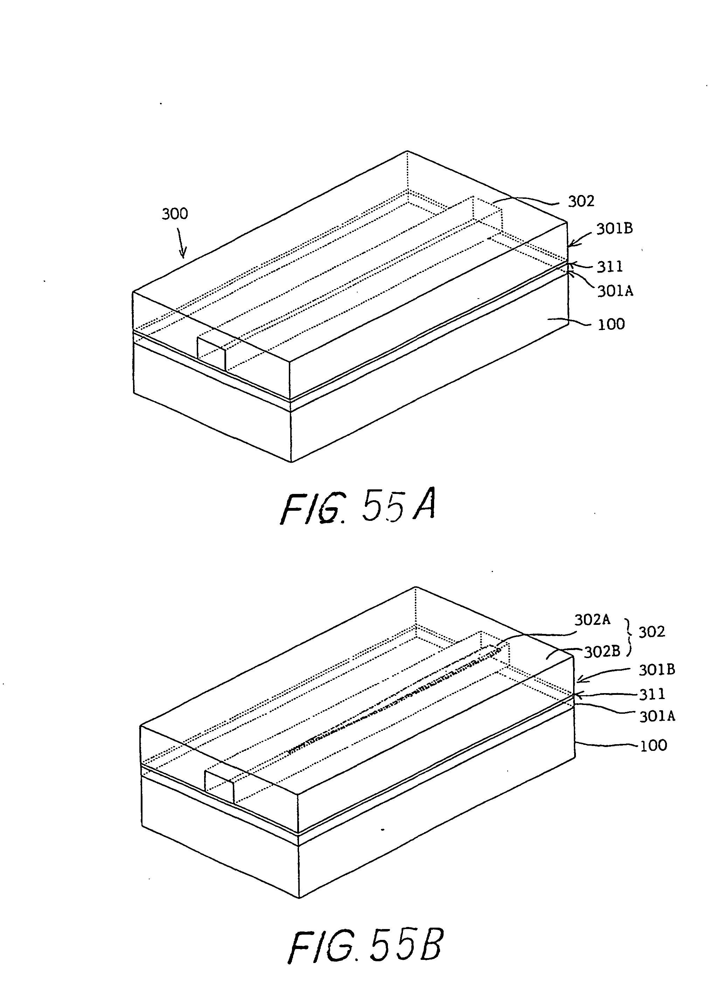

Fig. 55A is a schematic perspective view of a single core waveguide;

Fig. 55B is a schematic perspective view of a single core waveguide;

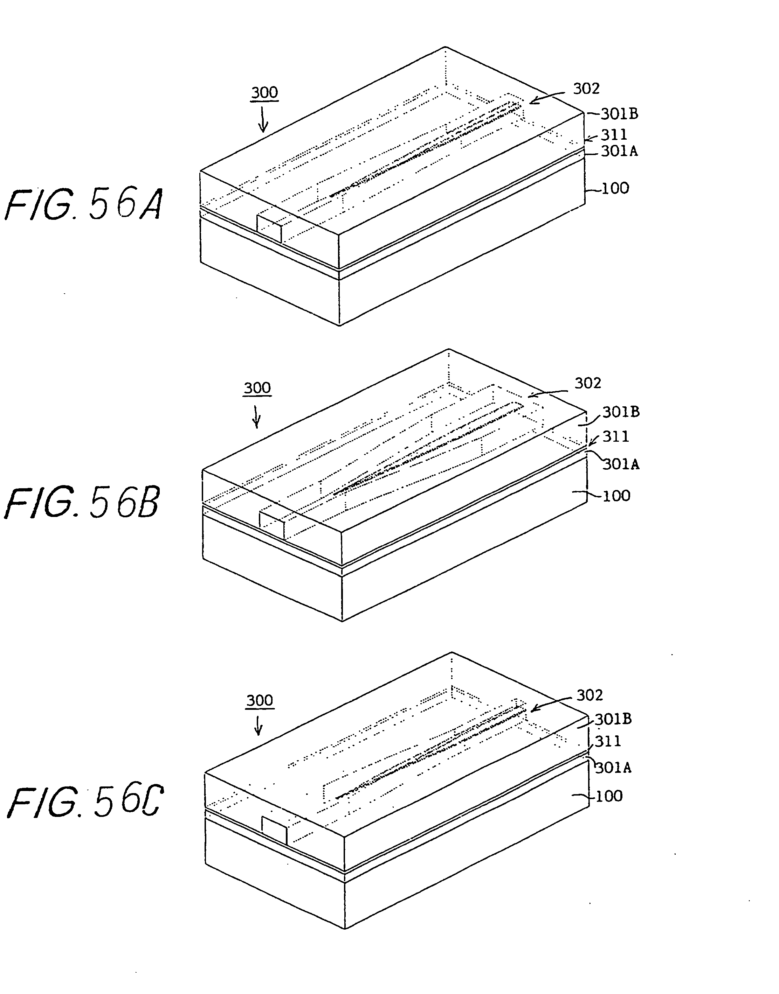

Fig. 56A is a schematic perspective view of a single core waveguide;

Fig. 56B is a schematic perspective view of a single core waveguide;

Fig. 56C is a schematic perspective view of a single core waveguide;

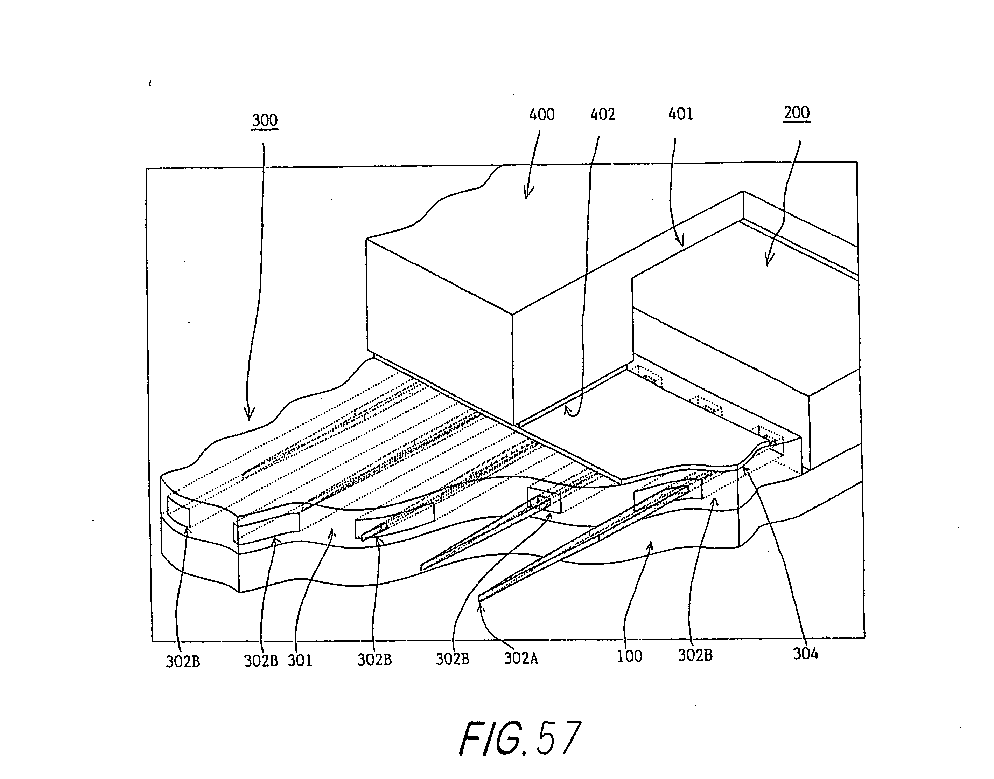

Fig. 57 is a partial schematic perspective view of an optical coupler including a plurality of cores each consisting of a tapered main core a and sub core, for illustrating a twenty sixth preferred embodiment of the present invention;

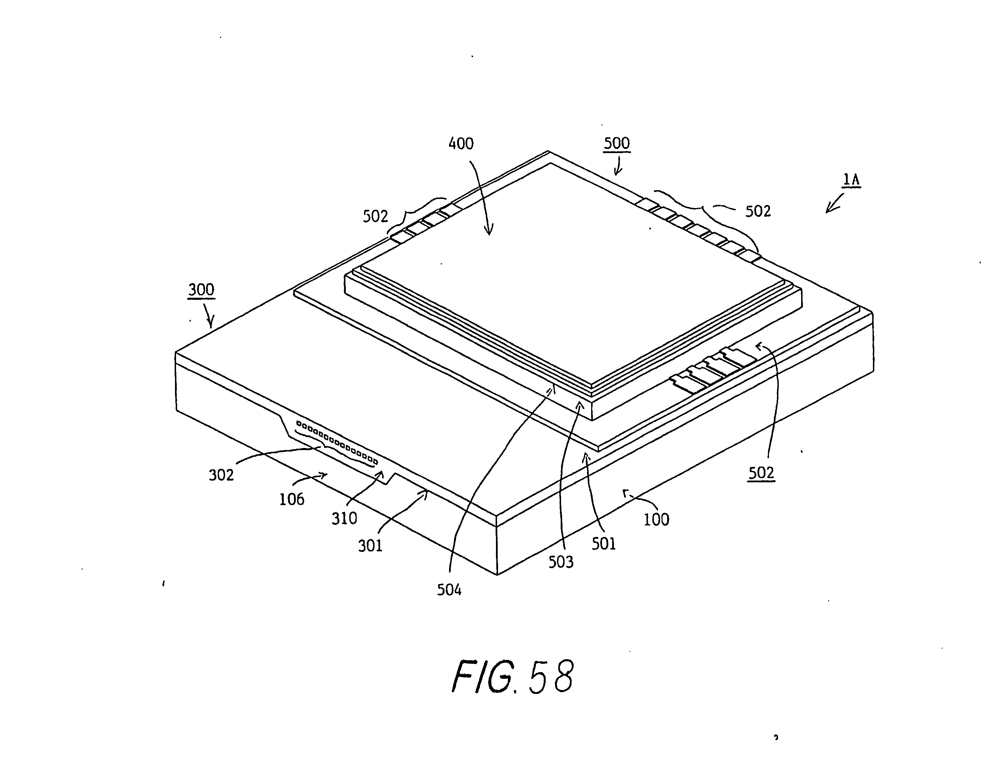

Fig. 58 is a schematic perspective view of an optical coupler, for illustrating a twenty seventh preferred embodiment of the present invention;

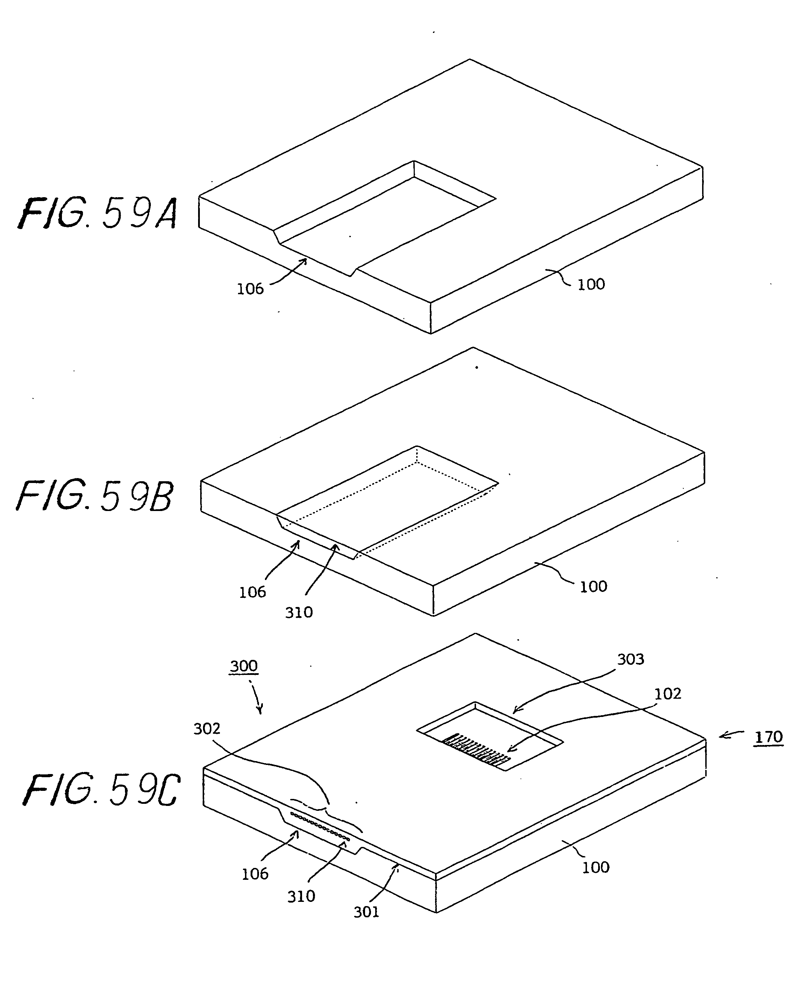

Figs. 59A, 59B and 59C are schematic perspective views for illustrating a forming process of the optical coupler shown in Fig. 58;

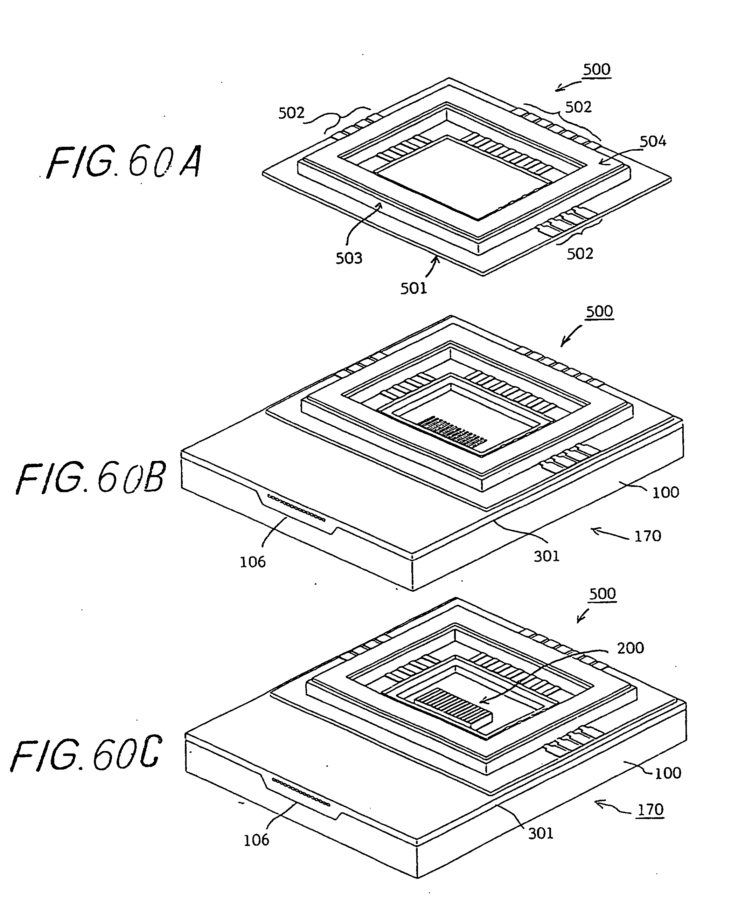

Figs. 60A, 60B and 60C are schematic perspective views for illustrating a forming process of an air-tightened semiconductor laser in the optical coupler shown in Fig. 58;

Fig. 61A is a schematic diagram of slab structure of layers, including no buffer layer, of the optical coupler shown in Fig. 34;

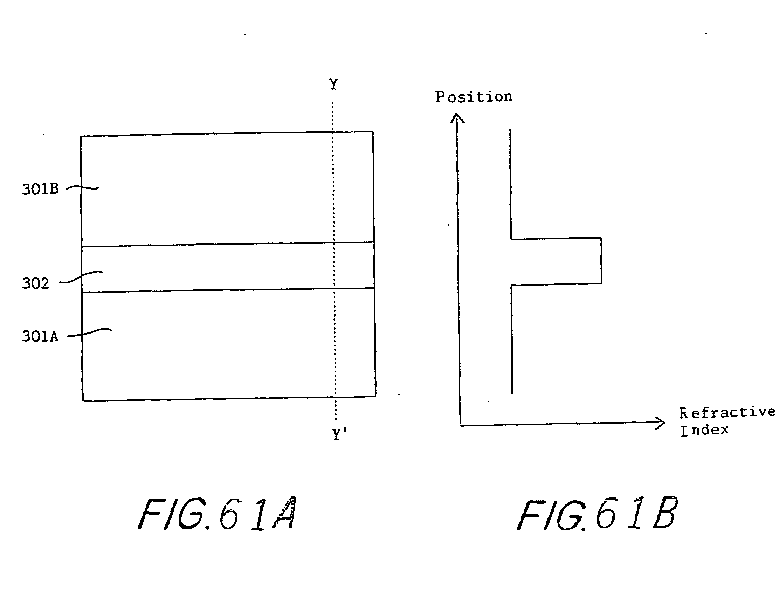

Fig. 61B is a graph for showing a refractive index change appearing across the slab structure shown in Fig. 61A; and

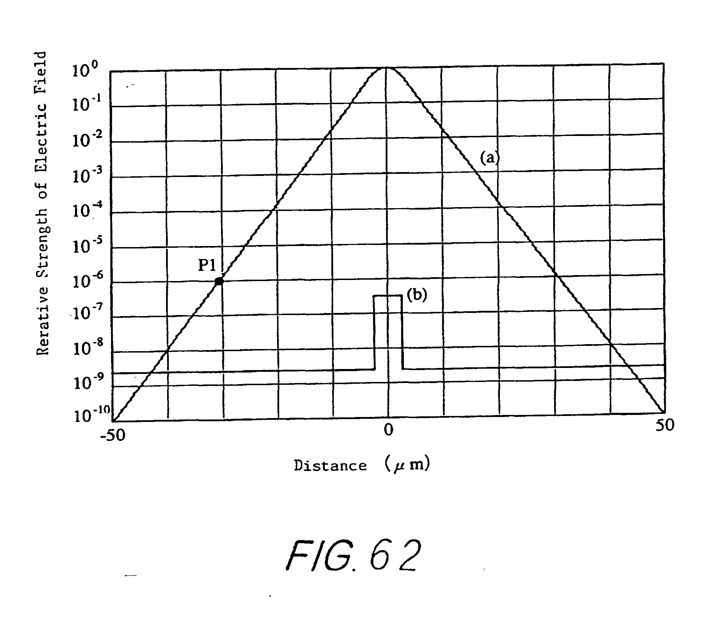

Fig. 62 is a graph for showing a change of electric field strength, appearing across the slab structure shown in Fig. 61A.

## DESCRIPTION OF THE PREFERRED EMBODIMENT

Referring first to Fig. 13, there is shown a schematic diagram of two optical components to be optically coupled to each other in an optical coupler. The schematic diagram in Fig. 13 is a first preferred embodiment of the present invention, for illustrating one aspect of the basic concept of the present invention. In Fig. 13, two kinds of optical components, a first optical component 300X and a second optical component 200X, are placed in the optical coupler so as to be optically coupled to each other. The optical components are composed of a plurality of optical elements respectively. The first optical component 300X is composed of a plurality of first optical elements (the first optical element will be called simply "first elements" hereinafter) arranged in an array having an equal pitch P1 and the second optical component 200X is composed of a plurality of second elements arranged in an array having an equal pitch $P_2$, and the pitches $P_1$ and $P_2$ have the following relationship:

$$P_2 = P_1 \pm 2 \times T_0 \qquad (1).$$

In the above expression (1), symbol $T_0$ is a tolerance allowed to be held when a first and a second element are coupled to each other singly. The expression (1) is a general expression, and Fig. 13 shows a case where

$$P_2 = P_1 + 2 \times T_0.$$

When a coupling degree of a first element and a second element opposite to the first element is measured individually throughout the first and second elements, a pair of the first and second elements can be found which have the largest coupling degree. The selected pair of the first and second elements forms a required optical coupler of the first and second optical components 300X and 200X. For example, when the first optical component 300X is an optical waveguide consisting of waveguide elements and the second optical component 200X a semiconductor laser consisting of laser elements, and when the power of light emitted from an active laser element is measured at a side of a waveguide element on every pair of the laser and waveguide elements, the largest light power can be obtained from a designated pair. The designated pair forms a required optical coupler of the first and second optical components 300X and 200X.

In Fig. 13, the number of the first or the second elements is determined in consideration of manufacturing technique and accuracy of the first and the second elements. In case of the laser and the waveguide elements, a number of eleven as shown in Fig. 13, is enough. The number reflects almost no influence to the product costs of the optical coupler.

Fig. 13 shows a case where a central pair of the first and the second element forms a required optical coupler of the first and second optical components 300X and 200X, which is explained by formula $\Delta_6 = 0$ in Fig. 13. Wherein, $\Delta$ expresses a deviation appearing between the optical axes of the first and the second element.

When the first and the second element are arranged as shown in Fig. 13, the deviations, $\Delta_1$, $\Delta_2$, --- and $\Delta_{11}$, produced between the first and second elements become - $10T_0$, $-8T_0$, $-6T_0$, $-4T_0$, $-2T_0$, $0$, $2T_0$, $4T_0$, $8T_0$ and $10T_0$ respectively. Hereupon, $\pm$ sign on the deviation is determined on a coordinate provided along the array of the first or second elements. In the coordinate, a direction from left to right is defined as a plus direction and vice versa, and an amount obtained by subtracting a coordinate value of the second element from that of the first element is defined as an amount of the deviation having the $\pm$ sign.

Fig. 14 is a table for showing deviations (DEVIATION), $\Delta_1$, $\Delta_2$, -----, and $\Delta_{11}$, existing between a first element and a second element opposed to the first element in case where the first elements and the second elements are arranged in the pitch of $P_1$ and $P_2$ respectively having the relationship $P_2 = P_1 + 2T_0$ and all first elements are shifted on the right an amount (SHIFT AMOUNT) in between - $11T_0 \sim 11T_0$ from the positions of the first elements depicted in Fig. 13. In Fig. 14, the shift amounts of the first elements are written in a first column located on the left of the table in Fig. 14, and the deviations, $\Delta_1$, $\Delta_2$, -----, and $\Delta_{11}$, produced due to the shift amounts of the first element are written in the second, third, ----, and twelfth column respectively. Therefore, it can be seen that when a shift amount of the first elements is in between $-9T_0 \sim -7T_0$ (see the second row of the first column in Fig. 14) for example, the deviation $\Delta_{11}$ reaches an amount in between $-19T_0 \sim 17T_0$ (see the second row of the twelfth column in Fig. 14). At this time, it will be noticed in Fig. 14 that the deviation $\Delta_2$ becomes the amount of $\pm T_0$ in the second row of the third column. Similarly to the above example, every row has at least one deviation $\pm T_0$ as seen in Fig. 14. As a result, when the degree of optical coupling is measured on every pair of the first and the second element and a pair having the highest coupling efficiency is selected, the selected pair is a couple of the first and the second element having the deviation of $\pm T_0$.

From the above description, it can be said that when two kinds of optical components, a first and a second optical component, are optically coupled, the coupling tolerance of the first and the second optical component is increased by N times, by: providing N pieces of the first and the second optical component, called first optical elements and second optical elements respectively; arranging the first and the second optical elements in accordance with the first preferred embodiment; and selecting a pair of a first and a second optical element from the first and second optical component in accordance with the first preferred embodiment. This signifies that by virtue of applying the basic concept of the present invention described in the first preferred embodiment to the optical coupler, the position adjustment of the optical components in the optical coupler becomes extremely easy to be performed, obtaining required high coupling efficiency.

For example, when the second optical component 200X is a semiconductor laser composed of an array of 11 pieces of laser elements as the second elements and the first optical component 300X is an optical fiber composed of an array of 11 pieces of fiber elements as the first elements, ±1 μm coupling tolerance can be easily obtained. Because, the coupling tolerance between the first and the second optical component 300X and 200X, in other words, between the semiconductor laser and the optical fiber is increased to μm. Incidentally, generally, a bonding apparatus used for bonding semiconductor chips such as the laser elements described above produces a positioning deviation less than ±5 μm. Therefore, in the above example, the position adjustment becomes very easy to be performed.

Furthermore, in the above example, since the optical components 200X and 300X are fabricated in an array of elements respectively, the width of each component becomes large. As a result, a rotation error is easy to be detected, which results in eliminating the rotation error. The rotation error is an error due to a component rotation occurring around a rotation axis passing through the component properly in perpendicular to the drawing paper of Fig. 13. When the component is a single element, the rotation error is hard to be detected because the single element is very small in size. However, when the component is array structure having large width, the rotation error is easy to be detected, which results in eliminating the rotation error.

Fig. 15 is a schematic perspective view for illustrating an optical coupler (1) for a second preferred embodiment of the present invention. The optical coupler 1 is invented by improving the prior art optical coupler such as described in reference with Fig. 9A, in accordance with the first preferred embodiment. In Fig. 15, the same reference numeral as in Fig. 9A designates the same part as in Fig. 9A. In the optical coupler 1, the semiconductor laser 200 is a laser array consisting of 15 laser elements arranged in 50 ηm pitch, and the optical waveguide 300 is a core array consisting of 15 core elements arranged in 48 μm pitch. The optical waveguide 300 and bonding pads (not depicted in Fig. 15) are formed on the substrate 100. The semiconductor laser 200 is bonded to the substrate 100 through the bonding pads so that a central laser element of the semiconductor laser 200 is intended to be coincided with a central core element of the optical waveguide 300. The positional deviation of the semiconductor laser 200 from its ideal position is kept to be less than ±15 μm in fabrication.

In the second preferred embodiment shown in Fig. 15, the substrate 100 is made of a silicon single crystal fabricated so as to produce a silicon wafer having {100}-surface, the optical waveguide 300 is made of organic high polymer, the bonding pads are made of metal, and the semiconductor laser 200 is an array of specific laser elements each consisting of a light emitting part composed of an active layer and a waveguide part attached to the light emitting part for converting a spot-size. The waveguide part will be called "the spot-size converting part" hereinafter. The specific laser element has been patented by Japanese Patent TOKUKAIHEI 7-66502 and presented in Paper 4-262 at Autumn Convention of Japan Electronic Information and Communication Institute. According to the above patent or paper, the specific laser element is fabricated, in monolithic, by integrating the light emitting part and the waveguide part including a core having changeable thickness.

The silicon dioxide film 101 having 1 μm thickness is formed on a surface of the silicon substrate 100, and the bonding pads and the wiring pattern connected with the bonding pads are formed on the silicon layer 101. (The bonding pads and the wiring pattern are not depicted in Fig. 15.)

The optical waveguide 300 consists of a plurality of cores 302 each having a cross section of 5 μm × 5 μm with a refractive index of 1.558 and the cladding layer 301 surrounding the cores 302. The cladding layer 301 has a refractive index of 1.55 and consists of an under cladding layer laid under the cores 302 and an over cladding layer laid above the cores 302, with a thickness of 20 μm respectively.

The semiconductor laser 200 consists of specific laser elements with the same number as the cores 302 in the optical waveguide 300. The light emitting part is formed to a stripe of BH structure and the semiconductor laser 200 is formed by arranging the light emitting parts in 50 μm pitch. In each specific laser element, a width of the strip is approximately 1.5 μm at the light emitting part and gradually increased to 4.91 μm as the strip is extended to the spot-size converting part. In the specific laser element, the thickness and the refractive index of the light emitting part are adjusted so that efficiency for confining light to the light emitting part is kept to at least 5 %, and the spot-size converting part has the same layer structure as the light emitting part only with a difference that a thickness of a core part in the spot-size converting part is gradually decreased as the strip is extended to an output end of the specific laser element. A thickness ratio of the thickest part to the thinnest part of the core part is 2.5 : 1.

In the second preferred embodiment shown in Fig. 15, the coupling efficiency of the semiconductor laser 200 and the optical waveguide 300 is approximately 100% in an array direction, which will be called a "horizontal direction" hereinafter, of the specific laser elements or the cores. Incidentally, in the second preferred embodiment, when the coupling efficiency is decreased to 90%, the position deviation becomes approximately ±1.15 ηm, and if the position deviation were supported to be 5 ηm, the coupling efficiency would be decreased to so small as 35%.

In the second preferred embodiment, fifteen is enough as the number of the specific laser elements or the core elements. A semiconductor laser attached to an optical waveguide can be obtained by: making the fifteen specific laser elements emit light successively; measuring light intensity at the output of the core elements; and selecting a couple of the specific laser element and the core having the maximum output light.

Fig. 16 is a graph for showing changes of the optical coupling efficiency when the semiconductor laser 200 and the optical waveguide 300 are relatively moved in the horizontal direction. In Fig. 16, a curve "a" indicates optical coupling efficiency in case where a semiconductor laser and an optical waveguide are singly coupled, and a curve "b" indicates optical efficiency when arrays of laser and cores elements change their positions in the horizontal direction relatively and a pair of the elements is optically coupled as explained in the second preferred embodiment description.

As shown by the curve "a" in Fig. 16, in case where the semiconductor laser and the optical waveguide consist of single element respectively, the coupling efficiency is decreased to 90% when the position deviation is ±1.15 μm. In contrast to the curve "a", in case of the second preferred embodiment shown in the curve "b", a range to keep the coupling efficiency to more than 90% is expanded as much as ±15 μm. As a result, by virtue of adopting the way of the second preferred embodiment to optical coupling, the semiconductor laser and the optical waveguide can be optically coupled easily without performing the hard optical adjustment as done in the prior art.

When the way of the second preferred embodiment is carried out, the material for the substrate, optical waveguide and the laser element is not necessary to be limited to respectively silicon, high polymer material and the laser element including the spot-size converting part, as described in reference with Fig. 15. For example, quartz glass and other kinds of glass and ceramic can be used for the substrate, material including silicon dioxide or silicon nitride as the main component can be used for the optical waveguide, and laser element including merely a usual active layer can be used for the laser element of the semiconductor laser.

Figs. 17A and 17B are schematic perspective views for illustrating a third preferred embodiment of the present invention. Fig. 17A is a figure before placing a lid 400 for the airtight box and Fig. 17B is a figure after placing the lid 400. In Fig. 17B, inside of the airtight box can be partially seen through. The third preferred embodiment is obtained by applying the way of the second preferred embodiment shown In Fig. 15 to the optical coupler of the prior art including the airtight box for the semiconductor laser which has been described in reference with Figs. 7A and 7B. In Figs. 17A and 17B, the same reference numeral as in Figs. 7A, 7B and Fig. 15 designates the same part as in Figs. 7A, 7B and Fig. 15. The optical coupler of the third preferred embodiment has the airtight box including the semiconductor laser 200, so that such optical coupler having the airtight box for the array of the semiconductor laser will be numbered "1A" hereinafter.

In Figs. 17A and 17B, the optical coupler of the third preferred embodiment is mainly composed of: the silicon dioxide film 101 formed on the surface of the silicon substrate 100; electric wire pattern 103 and the bonding pads 102, which is covered by the semiconductor laser 200, for bonding the semiconductor laser 200 on the silicon dioxide film 101; and the optical waveguide 300 formed on the silicon dioxide film 101 so that the electric wire pattern 103 are placed under the cladding layer 301 of the optical waveguide 300. The silicon dioxide film 101 is for insulating the electric wire pattern from the substrate 100. The bonding pads 102 are arranged on the silicon dioxide film 101 with the same number of the laser elements formed to the array and the bonding pad 102 is electrically connected with the electric wire pattern individually. The optical waveguide 300 is composed of the cladding layer 301 made of polyimido and having refractive index 1.55 and the cores 302 made of polyimido and having refractive index 1.558. The shape of the cross section of the array of the cores 302, the pitch of the cores 302 in the array and the thickness of the cladding layer 301 are the same as in Fig. 15. The core array is formed by plasma etching.

A rectangular hole (303) is formed in the optical waveguide 303 by RIE (Reactive Ion Etching) using oxigen gas plasma as shown in Fig. 17A, for making the surface of the silicon dioxide film 101, the bonding pads 102 and the electric wire pattern 103 expose in the middle of the fabrication of the optical coupler. The semiconductor laser 200 is bonded on the silicon dioxide film 101 so as to be opposite to an end face of the cores 302.

A metal frame (304) is formed on the optical waveguide 300 so as to surround the hole 303. The metal frame 304 is made by evaporating metal on a ceramic mother-body of the metal frame 304, for being mechanically connected with a lid (400). The lid 304 has a hollow (401) inside as shown in Fig. 17B and another metal frame (402) is provided around the hollow 401 for being connected with the metal frame 304. Metal, silicon or plastic material can be used for the lid 400. When metal is used, the metal frame 402 is not necessary. When silicon or plastic material is used for the mother-body of the lid 400, the metal frame 402 can be formed on the mother-body by evaporating, plating or spattering a metal film. The lid 400 can be mechanically connected with the metal frame 304 by using indium, tin or solder. When the mother-body of the lid 400 is plastic, the lid 400 can be directly bound to the surface of the optical waveguide 300 by using high polymeric adhesive, without using the metal frames 402 and 304. When material having high heat resistance such as silicon or ceramic is used for the mother-body of the lid 400, a method for performing sintering to the mother-body after screen printing is over or a method for connecting the metal frames 304 and 402 by using glass having a low melting point can be used. The metal frame 304 can be made by stamping a metal sheet. In case of using metal sheet, the metal frame 304 is bonded to the metal frame 402 by using high polymeric adhesive or low melting point glass. As a result of covering the hole 303 with the lid 400 tightly, the semiconductor laser 200 can be air-tightened.

In the third preferred embodiment described in reference with Figs. 17A and 17, since polyimido is used for the optical waveguide 300, it becomes possible to forming the optical waveguide 300 and the hole 303 after forming bonding pads 102, the wiring pattern 103 and metal frame 304 on the substrate 100 through the silicon dioxide film 101. The bonding pads 102, wiring pattern 103 and the metal frame 304 are formed on a flat surface, so that they can be formed by the technique of photolithography.

Figs. 18A and 18B are schematic perspective views of the optical coupler 1A, for illustrating a forth preferred embodiment of the present invention. The optical coupler 1A of the forth preferred embodiment is similar to that of the third preferred embodiment except that the optical waveguide 300 in the optical coupler 1A is made of quartz. In Figs. 18A and 18B, the same reference numeral as in Figs. 17A, 17B designates the same part as in Figs. 17A, 17B. Fig. 18A illustrates that the lid 400 is not set on the hole 303, and Fig. 18B illustrate that the lid 400 is set on the hole 303.

In order to form an optical waveguide, a heat treatment must be made in fabrication process at temperature exceeding 1000°C. Therefore, the wiring pattern 103 are formed after forming the optical waveguide 300, so that the wiring pattern 103 are formed on an upper surface of the layer of the optical waveguide 300. In the optical waveguide 300, the refractive indices of the cladding layer 301 and the core 302 are 1.46 and 1.4673 respectively, the cross section of the core 302 is 5 μm × 5 μm rectangular, and the thickness of the under cladding layer and the over cladding layer is 30 μm respectively.

The wiring pattern 103 and the bonding pads 102 are formed to the silicon dioxide film 101 in the hole 303 and the semiconductor laser 200 is bonded to the silicon dioxide film 101 through the bonding pads 102. In the fourth preferred embodiment, the bonding pads 102 are formed after the optical waveguide 300 and the hole 303 are formed. That is, the bonding pads 102 are formed by applying photolithography technique on a surface having a different level due to the hole 303, so that the position deviation of the bonding pads 102 tends to become as large as ±5 μm. However, since the deviation ±5 μm is sufficiently small in comparison with the coupling tolerance ±15 μm between the semiconductor laser 200 and the core 302, the position deviation of the bonding pads 102 produces no problem on the coupling efficiency of the optical coupler 1A.

In the third and forth preferred embodiments, the optical coupler 1A can be made as small as 2 mm × 2 mm × 2 mm in size though they are airtight optical couplers. By virtue of the small size, temperature control can be easily performed to the optical coupler 1A by cementing the optical coupler 1A to a cooling element such as a Peltier effect element.

When the optical coupler 1A of the third preferred embodiment described in reference with Figs. 17A and 17B or of the fourth preferred embodiment described in reference with Figs. 18A and 18B is coupled to an optical fiber, the optical axes of the optical coupler 1A and the optical fiber must be aligned (optically coupled) with high coupling efficiency in a horizontal direction and a vertical direction. Wherein, the horizontal direction is an array direction of the semiconductor laser 200 or the optical waveguide 300, and the vertical direction is a direction perpendicular to a plane including the array of the semiconductor laser 200 or the optical waveguide 300. Methods for aligning the optical axes of the optical coupler and the optical fiber and means for carrying out the methods will be described in reference with Figs. 20 to 23 regarding the axis alignment in horizontal direction and in reference with Figs. 24, 26 to 31 regarding the axis alignment in vertical direction. (Fig. 23 partially includes means for carrying out the optical coupling in the vertical direction.)

Fig. 19 is a schematic top view of the optical coupler 1A shown in Fig. 17A, for illustrating a fifth preferred embodiment of the present invention. That is, using the fifth preferred embodiment, a means for selecting a couple of a core element and a laser element, having the highest coupling efficiency will be explained. In Fig. 19, the same reference numeral as in Fig 17A designates the same part as in Fig. 17A. In Fig. 19, intensity of light output from the optical waveguide 300 is measured by a photo-diode (2) having a light-receptive spot of 2 mm diameter. Since the diameter of the light-receptive spot is very large compared with the width (approximately 0.7 mm) of the arrayed cores 302, if the photo-diode 2 is placed approximately at a center of an output terminal of the cores 302, all of light output from the cores 302 can be measured by the photo-diode 2. Therefore, when a constant current is fed through a laser element of the semiconductor laser 200, not depicted in Fig. 19, successively and the light output from the cores 302 is measured by the photo-diode 2, a couple of a laser element and core having the highest coupling efficiency can be selected.

Next, means for optically coupling a optical fiber to the optical coupler 1A shown in Fig. 17A or 17B will be described in reference with Figs. 20 (A and B), 21, 22 (A and B) and 23 (A and B) as a sixth, a seventh, an eighth and a ninth preferred embodiment of the present invention, respectively.

Fig. 20A is a schematic perspective view of the optical coupler 1A having a substrate partially modified so as to be mounted on a common substrate, and Fig. 20B is a schematic perspective view for illustrating the six preferred embodiment in which the optical coupler 1A can be optically connected with an optical fiber easily. In Figs. 20A and 20B, the same reference numeral as in Figs. 17A and 17B designates the same part as in Figs. 17A and 17B.

In Figs. 20A and 20B, the sixth preferred embodiment is composed of: a common substrate (110) having guide rails (111) on an upper surface thereof; a substrate (120) for mounting the optical fiber 3, having grooves (122) on a bottom surface thereof for making the substrate 120 slide on the guide rails 111, and another groove (121) for mounting the optical fiber 3 thereon, on an upper surface thereof; and the optical coupler 1A including a substrate (100A) having grooves (104) sliding on the guide rails 111, on a bottom surface thereof.

The common substrate 110 is a silicon wafer having a {11}-surface. The rails 111 are formed through the following processes: forming a silicon dioxide layer by thermal oxidation method, not depicted in Figs. 20A and 20B, on the common substrate 110; forming an etching mask to be used for proper patterning, through a photolithography and a etching process; and forming the rails 111 on the common substrate 110 through a process of wet etching, which is called anisotropic etching process, performed by using strong alkali liquid. When the rails 111 is formed, a strip shaped etching mask pattern made from the silicon dioxide layer and extending to a direction of <110> is used.

The substrates 100A and 120 are also the silicon substrate having {100}-surface, and the grooves 104 and 122 are formed also by anisotropic etching. When the etching mask for the grooves 104 and 122 is formed, an apparatus for making masks at both sides coincide with each other is used so that the positions of the pattern for the cores 302 and the groove 121 are relatively kept constant. The groove 121 is formed so that the optical fiber 3 mounted in the groove 121 is placed correctly so as to be opposite to the core 302 selected in accordance with the forth preferred embodiment in reference with Fig. 19.

Fig. 21 is a schematic perspective view for illustrating the seventh preferred embodiment in which the optical coupler 1A and the optical fiber can be optically connected easily. The seventh preferred embodiment is obtained by partially modulating the sixth preferred embodiment. In Fig. 21, the same reference numeral as in Fig. 20 designates the same part as in Fig. 20.

The seventh preferred embodiment is similar to the sixth preferred embodiment except that a height of the rail 111 from the upper surface is low in comparison with that of the sixth preferred embodiment and the number of the grooves 122 and 104 is increased so that the pitches of the grooves 122 and 104 are the same of the cores 302, respectively. By doing thus and applying the selecting way described in the fifth preferred embodiment in reference with Fig. 19, a core 302 can be selected easily so as to be optically connected with a laser element of the semiconductor laser 200. In Fig. 21, a pair of the guide rails 111 is depicted. However, a plurality of pairs of the guide rails 111 can be used. In this case, it is necessary to make an interval of the guide rails 111 is equal to the pitch of the cores 302.

Figs. 22A is a perspective view for illustrating the eighth preferred embodiment obtained by modifying the seventh preferred embodiment described in reference with Figs. 20A and 20B, and Fig. 22B is a side elevation viewed from a side of the optical fiber 3 in Fig. 22A. In Figs. 22A and 22B, the same numeral as in Figs. 20A and 20B designates the same part as in Figs. 22A and 22B.

In Figs. 22A and 22B, a plurality of grooves (123) are formed on the upper surface of the substrate 120 for mounting the optical fiber 3, with a pitch the same as the pitch of the cores 302 (see Fig. 19), and a block (130) is provided to the substrate 120 for holding the optical fiber 3 down to the substrate 120. A plurality of grooves (132) are formed on the bottom surface of the block 130 with the same pitch of the grooves 123 so that the grooves 132 are engaged with the grooves 123, and a groove (131) is formed also on the bottom surface of the block 130 approximately at a center of the grooves 132 for holding the optical fiber 3 down to one of the grooves 123. The grooves 123 is formed on the upper surface to the substrate 120 by performing anisotropic etching to the substrate 120. The block 130 is made from a silicon substrate having {100}-surface, and the groove 131 and the grooves 132 are formed by performing anisotropic etching to the surface.

One of the cores 302 can be selected so as to be optically coupled to the optical fiber 3 with the highest coupling efficiency by shifting the block 130 horizontally, applying the selecting way described in the fifth preferred embodiment in reference with Fig. 19.

Fig. 23A is a schematic perspective view for illustrating the ninth preferred embodiment obtained by combining the seventh and the eighth preferred embodiment. Fig. 23B is a side elevation viewed from a side of the optical fiber 3. In Figs. 23A and 23B, the same reference numeral as in designates the same part as in Figs. 21 and 22A. Material of the block and substrates and formation of the grooves are the same as those of the eighth and the ninth preferred embodiment respectively. Different from the seventh preferred embodiment (Fig. 21), the grooves 122 in the ninth preferred embodiment (Figs. 23A and 23B) are formed so that the grooves 122 have different depth every set of the grooves 122 and an interval between the sets adjacent to each other becomes integral times of a pitch of the grooves 123. Wherein, the set of the grooves 122 means a pair of the grooves 122, having the same interval as the interval of the grooves 111.

By virtue of giving the different depth to the grooves 122 as described above, the optical axis of the optical fiber 3 can be changed vertically in position, which allows the axis of the optical fiber 3 to be adjusted vertically against a laser element of the semiconductor laser 200 not depicted in Fig. 23A. Furthermore, the same as the eighth preferred embodiment, the optical fiber 3 can be moved horizontally by shifting the block 130 horizontally on the grooves 123. Therefore, in the ninth preferred embodiment, a core 302 can be selected so as to be optically coupled to the laser element with the highest coupling efficiency by: first selecting the set of the grooves 122 for the vertical position adjustment of the optical fiber 3; and second shifting the block 130 on the grooves 123 for the horizontal position adjustment of the optical fiber 3.

In the sixth to the ninth preferred embodiment of the present invention, methods and means for carrying out the optical coupling of the optical coupler and the optical fiber in the horizontal direction have been described. However, in order to increase the coupling efficiency more, the axis alignment of these parts must be performed also in the vertical direction. Figs. 24 (A, B), 26 to 31 show preferred embodiments for carrying out the axis alignment in the vertical direction.

Fig. 24 B is a schematic perspective view for illustrating an optical coupler of a tenth preferred embodiment of the present invention obtained by modifying the second preferred embodiment (Fig. 15) and considering the structure of the eighth preferred embodiment (Fig. 22A). Fig. 24A is a schematic perspective view of the semiconductor laser 200 to be mounted on a substrate of the optical coupler shown in Fig. 24B. In Figs. 24A and 24B, the same reference numeral as in Figs. 15 and 22A designates the same part as in Figs. 15 and 22A. In Figs. 24A and 24B, the semiconductor laser 200 and the optical waveguide 300 are mounted on substrates (170) and (140) respectively. Pairs of grooves 134 and 141 are formed on bottom surfaces of the substrate 170 and 140 respectively so that the substrates 170 and 140 can be slid on the rails 111 formed on the common substrate 110.

By virtue of the tenth preferred embodiment, the position of the cores 302 can be adjusted vertically, so that the axis alignment of the laser elements of the semiconductor laser 200 and the cores 302 of the optical waveguide 300 can be made in vertical direction. Furthermore, in the tenth preferred embodiment, there is a merit that the substrate 170 for bonding the semiconductor laser 200 and the optical waveguide 300 can be fabricated independently. Therefore, if a high temperature process is required to fabricate the optical waveguide 300, the process can be handled without giving influence to the semiconductor laser 200 mounted on the substrate 170. When the substrate 120 for mounting the optical fiber 3 is combined with the optical coupler as shown in the seventh preferred embodiment (Fig. 21), the eighth preferred embodiment (22A) and the ninth preferred embodiment (23A), the optical coupler of the tenth preferred embodiment can be optically coupled to the optical fiber 3.

Fig. 25 is a schematic perspective view of an optical coupler for illustrating an eleventh preferred embodiment of the present invention obtained by modifying a pattern of the cores 302 in the second preferred embodiment (Fig. 15). In Fig. 25, the same reference numeral as in Fig. 15 designates the same part as in Fig. 15. In Fig. 25, the pitch of the cores 302 is the same as in Fig. 15 at a laser side of the optical waveguide 300, however, the pitch is widened as much as 250 $\eta$m at the other side (an output side) of the optical waveguide 300. By doing thus, the axis alignment of the optical coupler and an optical fiber becomes easy to be performed as will be described in reference with Fig. 26.

Fig. 26 is a schematic plan view for illustrating a twelfth preferred embodiment of the present invention, in which the optical coupler of the eleventh preferred embodiment (Fig. 25) is optically connected with a means (selecting system) for selecting a pair of the laser element and core optically coupled at peak coupling efficiency. In Fig. 26, the same reference numeral as in Fig. 25 designates the same part as in Fig. 25. In Fig. 26, at the output side of the cores 302, photo-diodes 2 are optically connected to the cores 302 individually, and a laser driving apparatus (21) for driving the semiconductor laser 200 successively and a current measuring apparatus for measuring current from the photo-diodes 2 are provided. A pair of a core 302 and a laser element optically coupled at the highest coupling efficiency is selected by measuring the current from the photo-diodes 2 in synchronization with the drive of a laser element of the semiconductor laser 200. Since the cores 302 are arranged with a large pitch at the output end, the photo-diodes 2 can be arranged easily, which is a merit of the twelfth preferred embodiment.

After selecting a pair of the core 302 and the laser element in accordance with the twelfth preferred embodiment, the optical coupler in Fig. 26 is optically coupled to the optical fiber 3 as explained in the description of the sixth, the seventh, the eighth and the ninth preferred embodiment.

Fig. 27B is a schematic perspective view of a thirteenth preferred embodiment of the present invention, in which the optical coupler used in the eleventh preferred embodiment (Fig. 25) is connected with the optical fiber 3. Fig. 27A is a schematic perspective view of the optical coupler the same as the optical coupler in the eleventh preferred embodiment (Fig. 25), but having the grooves 104 on the bottom surface of the substrate 100A the same as of Fig. 20A. In Figs. 27(A and B), the same reference numeral as in Figs. 20(A, B) and 25 designates the same part as in Figs. 20(A, B) and 25. In Figs. 27(A and B), the rails 111 are formed on the common substrate 110, the grooves 104 are formed on the substrate 100A of the optical coupler as shown in Fig. 27A, and the grooves 122 are formed on the substrate 120 of the optical fiber 3. As a result, the optical coupler and the optical fiber 3 can be slid on the rails 111 the same as the sixth preferred embodiment (Fig. 20B). Furthermore, a plurality of grooves for guiding the optical fiber 3 are formed on the upper surface of the substrate 120 in 250 μm pitch which is the same of the cores 302. As a result, the optical fiber 3 can be coupled to any core 302 of the optical coupler, in other words, the optical fiber 3 can be easily made to couple to the selected core 302.

Fig. 28B is a schematic perspective view of a fourteenth preferred embodiment of the present invention, in which the optical coupler in the eleventh preferred embodiment (Fig. 25) is connected with a plurality of the optical fibers 3. Fig. 28A is a schematic perspective view of the optical coupler in the fourteenth preferred embodiment but is the same as the optical coupler in the thirteenth preferred embodiment. The fourteenth preferred embodiment is similar to the thirteenth preferred embodiment except that a plurality of optical fibers 3 are previously set on the grooves 121. As a result, a couple of core 302 and laser element can be selected by detecting the intensity of the light output from the optical fibers 3. In case of the fourteenth preferred embodiment, it is not necessary to prepare the optical diodes 2 and apparatus attached to the optical diodes 2 as described in the twelfth preferred embodiment (Fig. 26). Since the optical fibers 3 are not so expensive, there is a case where the total expense for the fourteenth preferred embodiment is smaller than that for the thirteenth preferred embodiment.

Fig. 29 is a schematic perspective view for illustrating a fifteenth preferred embodiment of the present invention, obtained by modifying the thirteenth preferred embodiment (Fig. 27). In the Fig. 29, the same reference numeral as in Fig. 27 designates the same part as inn Fig. 27. In the fifteenth preferred embodiment, a common substrate (150) is directly used for the optical coupler and the optical fiber 3 instead of using separated substrates 120 and 100A as shown in Fig. 27. By virtue of using only the common substrate 150, there is no necessity to perform position adjustment between the substrates for the optical coupler and the optical fiber.

Figs. 30 and 31 are schematic perspective view for illustrating a sixteenth and a seventeenth preferred embodiment of the present invention respectively. The sixteenth preferred embodiment and the seventeenth preferred embodiment are obtained by modifying the thirteenth preferred embodiment (Fig. 27B) and the fourteenth preferred embodiment (Fig. 28B) respectively so that the semiconductor laser 200 is formed on the substrate 170 exclusively used for the semiconductor laser 200 the same as the tenth preferred embodiment (24B). In Fig. 30, the same reference numeral as in Figs. 24B and 27B designates the same part as in Figs. 24B and 27B, and in Fig. 31, the same reference numeral as in Fig. 24B and 28B designates the same part as in Fig. 24B and 28B. In the sixteenth and the seventeenth preferred embodiment (Figs. 30 and 31), the semiconductor laser 200 and the optical waveguide 300 are respectively formed on the substrates 170 and 140 slid on the rails 111 formed on the common substrate 110 the same as in the tenth preferred embodiment (Fig. 24B). By doing so, the sixteen preferred embodiment has the merits of the thirteenth and the tenth preferred embodiment, and the seventeenth preferred embodiment has the merits of the fourteenth and the tenth preferred embodiment. That is, in the sixteenth and the seventeenth preferred embodiment, the vertical position adjustment of the optical fiber 300 can be performed against the position of the semiconductor laser 200, respectively.

Fig. 32 is a schematic perspective view of the optical coupler 1A, for illustrating an eighteenth preferred embodiment of the present invention. The eighteenth preferred embodiment is obtained by modifying the eleventh preferred embodiment (Fig. 25) so that the optical coupler 1A consists of the air-tightened semiconductor laser 200 and the optical waveguide 300 having the cores 302 arranged in a pitch gradually increased as the cores 302 come up to the end of the optical coupler 1A the same as the optical waveguide 300 in the eleventh preferred embodiment. In Fig. 32, the same reference numeral as in Figs. 17A and 25 designates the same part as in Figs. 17A and 25. In Fig. 32, the structure and the fabrication method of the air-tightened semiconductor laser 200 is the same as those in the third preferred embodiment (Figs. 17A and 17B).

Fig. 33 is a schematic perspective view of the optical coupler 1A coupled to the optical fiber 3, for illustrating a nineteenth preferred embodiment of the present invention. The nineteenth preferred embodiment is obtained by applying the air-tightened semiconductor laser 200 to the fifteenth preferred embodiment (Fig. 29). In Fig. 33, the same numeral as in Fig. 29 designates the same part as in Fig. 29. The feature of the nineteenth preferred embodiment is the same as that of the fifteenth preferred embodiment.

The same as the case of the optical axis alignment of the optical coupler and optical fiber described above, the vertical direction adjustment is important for optical axis alignment of the semiconductor laser 200 and the optical waveguide 300 in the optical coupler. Figs. 34 to 43 illustrate means to perform the optical axis alignment in the vertical direction, of the semiconductor laser and the optical waveguide in the optical coupler. The optical axis alignment in the vertical direction will be simply called "axis vertical alignment" hereinafter.

Fig. 34 is a schematic perspective view for illustrating the optical coupler 1 of a twentieth preferred embodiment of the present invention. In Fig. 34, the same reference numeral as in Fig. 15 designates the same part as in Fig. 15. In Fig. 15, the optical coupler 1 consists of a substrate (160) made of quartz and the optical waveguide 300 and the semiconductor laser 200 formed on the substrate 160 respectively. The optical waveguide 300 is composed of the under-cladding layer 301A, the cores 302 and the over-cladding layer 301B. The refractive index of the substrate 160 is 1.46 and that of the under-cladding layer 301A and the over-cladding layer 301B is 1.55 respectively, and the relative refractive index difference between the over-cladding layer 301B and the core 302 and between the under-cladding layer 301A and the core 302 is 0.5 % respectively. Polyimido is used for the cladding layers 301A and 301B and the cores 302.

In the twentieth preferred embodiment, since the under-cladding layer 301A can be thinned because of small refractive index of the substrate 160, a height of the cores 302 from the upper surface of the substrate 160 can be adjusted so as to coincide with a height of the laser element. When the thickness of the under-cladding layer 301A is set to 4 μm and that of the cores 302 is set to 5 μm, the height, which becomes 6.5 μm in this case, of the cores 302 can be made equal to the height, which is 5.32 μm ~ 9.32 μm, of the optical axes of the laser elements. In this case, since the height of the optical axes of the cores 302 is as low as 6.5 μm, a difference between the height of the cores 302 and the height of the laser elements becomes so small as less than ±0.4 μm which is smaller than a positional deviation allowed in the optical coupler. The allowed positional deviation is ±1μm, so that required coupling efficiency can be obtained even though there are some errors in manufacturing. The twentieth preferred embodiment is effective not only to the axis vertical alignment of the arrays of the laser element and the cores but also to the axis vertical alignment of a single laser element and core as shown in Fig. 35.

Fig. 35 is a schematic perspective view of an optical coupler of a twenty first preferred embodiment of the present invention, including a single laser element and core. In the twenty first preferred embodiment, the axis vertical alignment of the laser element and core can be performed easily by controlling a fabrication process of the optical coupler. In Fig. 35, the same reference numeral as in Fig. 34 designates the same part as in Fig. 34. In Fig. 35. the optical coupler consists of the common substrate 160, the semiconductor laser 200 having a single laser element and the optical waveguide 300 having a single core 302. The optical waveguide 300 is fabricated by forming the under-cladding layer 301A, the core 302 and the over-cladding layer 301B on the common substrate 160. The refractive indices of the common substrate 160, the under-cladding layer 301A and the over-cladding layer 301B are same as in the twentieth preferred embodiment (Fig. 34), and the relative refractive index differences between the under-cladding layer 301A and core 302 and between the over-cladding layer 301B and the core 302 are also the same as in the twentieth preferred embodiment.

Fig. 36 is a schematic perspective view of the optical coupler 1 including the arrayed laser elements and cores, for illustrating a twenty second preferred embodiment of the present invention. In the twenty second preferred embodiment, the axis vertical alignment of the arrayed laser elements and cores can be performed easily. In Fig. 36, the same reference numeral as in Figs. 15 and 34 designates the same part as in Figs. 15 and 34.

In Fig. 36, the substrate 100 is made of silicon, the silicon dioxide layer 101, not depicted in Fig. 36 but depicted in Fig. 15, is formed on the substrate 100 in 2 μm thickness, a buffer layer (310) is formed on the silicon dioxide layer 101, and the optical waveguide 300 consisting of the under-layer 301A, the core 302 and the over-cladding layer 301B is formed on the buffer layer 310. The bonding pads and the wiring pattern, which are not depicted in Fig. 36, are formed on the silicon dioxide layer 101. The silicon dioxide layer 101 is formed by thermally oxidizing all over the upper surface of the substrate 100 in 2 μm thickness. The buffer layer 310 is partially formed on the thermally oxide layer 101 in 3.2 μm thickness so as to be only under the optical waveguide 300, by conventional CVD (Chemical Vapor Deposition) method.

In the optical waveguide 300, the refractive indices of the under-cladding layer 301A and the over-cladding layer 301B are 1.55 respectively, the relative refractive index difference between the under-cladding layer 301A (or the over-cladding layer 301B) and the core 302 is 0.5 %, the cross sectional size is 6 μm × 6 μm, and the thickness of the under-cladding layer 301A is 2 μm.

Since the refractive index of the buffer layer 310 is lower than that of the under-cladding layer 301A, the electric field is suddenly decreased at the substrate 100, which will be explained in reference with Figs. 37 (A, B) and 38. Fig. 37A shows layer structure, which will be called "slab structure" hereinafter, composed of the buffer layer 310, the under-cladding layer 301A, the core 302 and the over-cladding layer 301B in Fig. 36. Fig. 37B shows distribution of partial refractive indices appearing at every position on Y-Y' line in Fig. 37A. Fig. 38 is a graph showing relationship between the electric field and the refractive indices in the slab structure of the optical waveguide. In Fig. 38, the abscissa indicates distance from the core 302, a curve (a) shows the strength distribution of electric field (relative value) appearing along the line Y-Y' line in Fig. 37A, a curve (b) shows distribution of the refractive indices the same as in Fig. 37B, and P1 indicates the distance when the relative strength of the electric field is $10^{-6}$.

As seen from the graph in Fig. 38, even though the under-cladding layer 301 is thin as shown in Fig. 36, the strength of light transmitted from the core 302 to the substrate 100 is suddenly decreased as the light leaves the core 302. This phenomenon will be realized clearly by comparing with the phenomenon occurring in an ordinary slab structure having no buffer layer. Fig. 61A shows the slab structure composed of the under-cladding layer 301A, the core 302 and the over-cladding layer 301B as shown in Fig. 34. Fig. 61B shows distribution of the refractive indices appearing at position on Y-Y' line in Fig. 61A. Fig. 62 is a graph showing relationship between the electric field and the refractive indices in the slab structure having no buffer layer. In Fig. 62, curve (a), curve (b) and point P1 show the same as in Fig. 38. Comparing curve (b) in Fig. 38 with that in Fig. 62, it can be realized that in Fig. 38, the electric field strength rapidly falls down as the distance increases in a minus direction and P1 approaches the core, however, in Fig. 62, the electric field strength slowly falls down as the distance increases in a minus direction and P1 is separated from the core 302. In other words, by virtue of forming the buffer layer 310 as shown in Fig. 36, the light can be kept in the core 302.

Furthermore, a total thickness obtained by totaling the thickness of the buffer layer 310 and the under-cladding layer 301A and a half thickness of the core 302 can be made equal to the height of the optical axis of the semiconductor laser 200, by controlling the forming process of the layers. For example, usually, the above total thickness is around 8.2 µm and the axis height is in between 5.32 µm and 9.32 µm, so that the total thickness can be adjusted so as to be equal to the axis height by the axis vertical alignment. Still furthermore, since the absolute value of the total thickness is small, an error due to the height of the slab structure can be decreased, which results in making the axis vertical alignment between the semiconductor laser 200 and the optical waveguide 300 easy. Since silicon is used for the substrate 100, it is possible to form grooves like the grooves 104 in Fig. 20A, by the anisotropic etching, so that the optical coupler in Fig. 36 can be easily coupled to the optical fiber by using the grooves and guide rails provided to the common substrate.

The feature of the twenty second preferred embodiment can be applied not only to the optical coupler consisting of the arrayed laser elements and cores but also to an optical coupler consisting of a single laser element and core (however such an arrangement is not in accordance with the invention).

Fig. 39 is a schematic perspective view of an optical coupler. The optical coupler consists of the semiconductor laser 200 including the single laser element and the optical waveguide 300 including the single core 302. In Fig. 38, the same reference numeral as in Fig. 36 designates the same part as in Fig. 36. Material, forming process and dimensions of the layers in the optical coupler of the twenty third preferred embodiment are the same as those in the twenty second preferred embodiment (Fig. 36), so that these details are omitted to be described.

Fig. 40 is a schematic perspective view of an optical coupler illustrating a twenty third preferred embodiment of the present invention for performing the axis vertical alignment easily. In Fig. 40, the same reference numeral as in Fig. 36 designates the same part as in Fig. 36. In Fig. 40, the substrate 100 is made of silicon, the buffer layer 310 is made of silicon dioxide having 3.5 µm thickness and formed all over the substrate 100 (which is different from the twenty second preferred embodiment), and the optical waveguide 300 is composed of the under-cladding layer 301A, an array of the cores 300 and the over-cladding layer 301B and formed on the buffer layer 310. The under-cladding layer 301A is made from polyimido having 3.5 µm thickness and 1. 55 refractive index, the cores 302 are made from polyimido each having a cross-sectional area of 6 µm × 6 µm and a relative refractive index difference of 0.5%, and the over-cladding layer 301B is made also from polyimodo having 3.5 µm thickness and a refractive index of 1.55. The bonding pads and the wiring pattern not depicted in Fig. 40 are formed on the buffer layer 310. The buffer layer 310 is the silicon dioxide film as described above, and is formed by: forming thermal oxide layer having 2 µm thickness by thermally oxidizing the silicon substrate 100; and forming silicon dioxide film on the thermal oxide layer by thermal CVD.

In the twenty third preferred embodiment (Fig. 40), the same as the twenty second preferred embodiment (Fig. 36), since the refractive index of the buffer layer 310 is lower than that of the under-cladding layer 301A, the electric field is suddenly decreased at the substrate 100. As a result, even though the under-cladding layer 301 is thin, light transmitted from the core 302 to the substrate 100 is suddenly decreased at the substrate 100. Furthermore, a total thickness obtained by totaling the thickness of the buffer layer 310 and the under-cladding layer 301A and a half thickness of the core 302 can be made equal to the height of the optical axis of the semiconductor laser 200, by controlling the forming process of the layers. For example, usually, the above total thickness is around 6.5 µm and the axis height is in between 5.32 µm and 9.32 µm, so that the total thickness can be adjusted so as to be equal to the axis height by the axis vertical alignment. Furthermore, since the absolute value of the total thickness is small, an error due to the height of the slab structure can be decreased, which results in making the axis vertical alignment of the semiconductor laser 200 and the optical waveguide 300 easy. Since silicon is used for the substrate 100, it is possible to form grooves like the grooves 104 in Fig. 20A, by the anisotropic etching, so that the optical coupler in Fig. 36 can be easily coupled to the optical fiber by using the grooves and guide rails provided to the common substrate.

The feature of the twenty third preferred embodiment can be applied not only to the optical coupler consisting of the arrayed laser elements and cores but also to an optical coupler consisting of a single laser element and core (however such an arrangement is not in accordance with the invention).

Fig. 41 is a schematic perspective view of an optical coupler. The optical coupler consists of the semiconductor laser 200 including the single laser element and the optical waveguide 300 including the single core 302. In Fig. 41, the same reference numeral as in Fig. 40 designates the same part as in Fig. 40. Material, forming process and dimensions of the layers in the optical coupler are the same as those in the twenty third preferred embodiment (Fig. 40), so that these details are omitted to be described.

Fig. 42 is a schematic perspective view of an optical coupler for illustrating a twenty fourth preferred embodiment of the present invention. The twenty fourth preferred embodiment is also for making the axis vertical alignment easy. In Fig. 42, the same reference numeral as in Fig. 40 designates the same part as in Fig. 40. In Fig. 42, the substrate 100 is made of silicon, the buffer layer 310 made from polyimido in 20 μm thickness is formed on the substrate 100, a silicon nitride layer (311) is formed on the buffer layer 310 and the optical waveguide 300 composed of the under-cladding layer 301A, the cores 302 and the over-cladding layer 301B which are made from polyimido is formed on the silicon nitride layer 311. The bonding pads for bonding the semiconductor laser 200 and the wiring pattern, which are not depicted in Fig. 40, are formed on the silicon nitride layer 311. Hereupon, the buffer layer 310 uses polyimido having the same composition as of the polyimido used for the under-cladding layer 301A, and the cladding layers 301A and 301B and cores 302 use the same material and have the same dimension as those in the twenty third preferred embodiment (Fig. 40). The silicon nitride layer 311 is formed on the buffer layer 310 by plasma CVD technique in 200 μm thickness. The refractive index of the buffer layer 310 can be made less than the refractive indices of the cladding layers 301A and 301B. By virtue of the twenty fourth preferred embodiment, the effect of the axis vertical alignment can be achieved the same as the case of the twenty third preferred embodiment.

The feature of the twenty fourth preferred embodiment can be applied not only to the optical coupler consisting of the arrayed laser elements and cores but also to an optical coupler consisting of a single laser element and core (however such an arrangement is not in accordance with the invention).

Fig. 43 is a schematic perspective view of an optical coupler. The optical coupler consists of the semiconductor laser 200 including the single laser element and the optical waveguide 300 including the single core 302. In Fig. 43, the same reference numeral as in Fig. 42 designates the same part as in Fig. 42. Material, forming process and dimensions of the layers in the optical coupler are the same as those in the twenty fourth preferred embodiment (Fig. 42), so that these details are omitted to be described.

Fig. 44 is a schematic perspective view of an optical coupler for illustrating a twenty fifth preferred embodiment of the present invention. The twenty fifth preferred embodiment is also for easily performing the axis vertical alignment. In Fig. 44, the same reference numeral as in Fig. 42 designates the same part as in Fig. 42. In Fig. 44, a depression (106), which is a kind of groove, is formed on the upper surface of the substrate 100 and under the cores 302 to be formed, the buffer layer 310 is formed in the depression 106 so that the depression 106 is filled with the buffer layer 310 and the upper surface of the buffer layer 310 is even with the upper surface of the substrate 100 not depressed so that the upper surface of the filled buffer layer 310 is a flat and smooth surface having the same level as of the upper surface of the substrate 100, and the optical waveguide 300 consisting of the under-cladding layer 301A, cores 302 and the over-cladding layer 301B is formed on the substrate 100 so that the cores 302 are placed over the buffer layer 310. The bonding pads for bonding the semiconductor laser 200 on the substrate 100 and the wiring pattern, which are not depicted in Fig. 44, are formed on the substrate 100 not depressed. The buffer layer 310 is made from silicon dioxide, and material and dimensions of the cladding layers 301A and 301B and the cores 302 are the same as those in the twenty third preferred embodiment (Fig. 40).

The optical coupler of the twenty fifth preferred embodiment is fabricated as follows: using a silicon wafer having a {100}-surface for the substrate 100, the depression 106 is formed by anisotropic etching technique; the depression 106 is filled with material of the buffer layer 106 by sputtering, CVD, or painting, making the depressed material transparent if necessary; when silicon dioxide is used for the buffer layer 310, a heat treatment is performed at a temperature more than 1000°C; the surfaces of the buffer layer 310 and the substrate 100 are evened, watching that the surface of the buffer layer 310 becomes flat; an insulation layer, not depicted in Fig. 42, such as a silicon nitride layer is formed on the surfaces of the substrate 100 and the buffer layer 310; the bonding pads and the wiring pattern, which can not see in Fig. 44, are formed on the insulation layer; and the semiconductor laser 200 is mounted on the insulation layer through the bonding pads and the optical waveguide 300 is formed on the insulation layer. The insulation layer is for insulating the wiring pattern from the substrate 100. Other methods and material can be used if the insulation is guaranteed. The thickness of the buffer layer 310 is 10 μm, the thickness of the cladding layers 301A and 301B and the cores 302 is the same as those of the twenty third preferred embodiment (Fig. 40).

In the twenty fifth preferred embodiment, the axis vertical alignment for the optical waveguide 300 and the semiconductor laser 200 can be easily performed the same as in the twenty third preferred embodiment. Furthermore, since the semiconductor laser 200 is bonded on the substrate 100 through the insulation layer, excellent heat dissipation of the semiconductor laser 200 can be realized.

In the twenty fifth preferred embodiment, any kind of material can be used for the buffer layer 310 if the material is transparent and has a refractive index equal to or less than the refractive index of the under-cladding layer 301A. For example, polyimido or other inorganic or organic materials can be used for the buffer layer 310.

The feature of the twenty fifth preferred embodiment can be applied not only to the optical coupler including the arrayed laser elements and cores but also to an optical coupler including a single laser element and core as shown in Fig. 45 (However such an arrangement is not in accordance with the invention). Fig. 45 is a schematic perspective view of an optical coupler. The optical coupler in Fig. 45 consists of the semiconductor laser 200 including a single laser element and the optical waveguide including a single core 302. The axis vertical alignment between the single laser element and core can be performed as well as done in the twenty fifth preferred embodiment (Fig. 44). In Fig. 45, the materials and the forming processes of the layers are the same as those in Fig. 44.

The structure of the optical waveguide 300 and the forming method of the semiconductor laser 200, described in the twentieth preferred embodiment (Fig. 34) can be applied to

the second and third preferred embodiments, respectively. Similarly, the structure of the optical waveguide 300 and the forming method of the semiconductor laser 200 can be applied to the second, third, fourth, sixth to eleventh, and thirteenth to nineteenth preferred embodiments, respectively.

Figs. 46 A, 48 and 49(A and B) show the optical waveguides each having a single core. In the optical waveguide having a single core, which will be called "single core waveguide" hereinafter, a spot size or confined intensity of light is changed as the light is transmitted through the single core waveguide. In Figs. 46 (A, B, C, D and E), 48 and 49(A and B), the same reference as in Fig. 40 designates the same part as in Fig. 40.

In Fig. 46A, a spot size of light is changed as the light is transmitted through the single core waveguide 300. The single core waveguide 300 has the single core 302 consisting of a main core (302A) and a sub core (302B) surrounding the main core 302A, and the refractive index of the main core 302A is relatively high in comparison with of the sub core 302B.

Fig. 46A is a perspective view of the single core waveguide 300, Fig. 46B is a top plan view of the single core waveguide 300 in Fig. 46A, Fig. 46C is a graph showing distribution of refractive indices along lines $X_1$ - $X'_1$ and $X_2$ - $X'_2$ in Fig. 46B, Fig. 46D is a vertical sectional view at a center of the core 302 in Fig. 46A, and Fig. 46E is a graph showing distribution of refractive indices along lines $Y_1$ - $Y'_1$ and $Y_2$ - $Y'_2$ in Fig. 46D. In Fig. 46C, a solid line shows the refractive index distribution

along line $X_2$ - $X'_2$ and a dotted line shows the refractive index distribution along line $X_1$ - $X'_1$, and in Fig. 46E, a solid line shows the refractive index distribution along line $Y_2$ - $Y'_2$ and a dotted line shows the refractive index distribution along line $Y_1$ - $Y'_1$. In Fig. 46D, curves (1) and (2) show distribution of electric field due to light transmitted in the single core waveguide 300, along lines $Y_1$ - $Y'_1$ and $Y_2$ - $Y'_2$ respectively.

The main core 302A and the sub core 302B at a light input end of the single core waveguide 300 are optically coupled to a laser element. The cross sectional shape and size of the sub core 302B are kept constant respectively in a range from the light input end to a light output end which is an end of the single core waveguide 300, opposite to the light input end. On the other hand, the cross sectional shape of the main core 302A is a thin rectangle being vertically thin and horizontally wide at the light input end, and the cross sectional size (or extent) of the main core 302A is smaller than that of the sub core 302B at the light input end and kept constant in a proper range from the light input end but decreased as the range is lengthened and disappeared before the range reaches the light output end. As a result, the index distribution is changed as the range is lengthened from the light input end, as shown in Figs. 46B and 46C. Further, it is not always necessary to change the area size and shape of the cross section of the main core at the same time. It is allowable only to change the shape, keeping the area size constant. For example, when the shape is changed, a shape of guided mode is changed.

Concrete structure of the single core waveguide 300 is as follows: the refractive index of the cladding layer 301 is 1.55; the relative refractive index difference between the cladding layer 301 and the sub core 302B is 0.5%, the refractive index of the main core 302A is 1.6, the cross sectional dimension of the sub core 302B is 6 μm × 6 μm, and the thickness and the width of the main core 301A is 0.8 μm and 3 μm respectively at the light input end. The material of the cladding layer 301, sub core 302B and main core 302A is polyimido.

As shown by curves (1) and (2) in Fig. 46D, at a part of the single core waveguide 300 where the main core 302A exists, an optical waveguide consisting of the main core 302A and the sub core 302B is formed. In this case, the main core 302A works as a core and the sub core 302B works as a cladding, so that a small spot size of light can be obtained at the part. However, at another part where no main core 302A exists, the spot size (optical beam width of guided mode of the optical waveguide 300) becomes large. (Wherein, changing the spot size equal to changing confinement factor of the waveguide.) For example, the spot size is approximately 3.1 μm × 5.5 μm at the light input end, however the spot size becomes as large as 6.7 μm in diameter at a part where no main core 302A exists. The spot size at the light input end of the single core waveguide 300 in Fig. 46A is almost equal to a spot size, which is approximate-

ly 3 μm × 6.8 μm, of light emitted from the semiconductor laser 200 in Fig. 15 (the second preferred embodiment). Therefore, if an laser element of the semiconductor laser 200 is coupled to the single core waveguide 300 properly, high coupling efficient would be realized.

Furthermore, the single core waveguide 300 can be coupled to an optical fiber well at the light output end of the single core waveguide 300. Therefore, if the single core waveguide 300 is applied to the optical coupler in Fig. 15 or 17A (the third preferred embodiment), an optical coupler enabling the semiconductor laser 200 to couple to the optical fiber in high coupling efficiency can be realized. Figs. 47A, 47B and 47C show three types of optical coupler for coupling the semiconductor laser 200 to the optical fiber 3. Fig. 47A shows that the semiconductor laser 200 is directly coupled to the optical fiber 3, Fig. 47B shows that the usual optical waveguide 300 is inserted between the semiconductor laser 200 and the optical fiber 3, and Fig. 47C shows that the single core waveguide 300 is inserted between the semiconductor laser 200 and the optical fiber 3. Referring the figures, the coupling efficiency between the semiconductor laser 200 and the optical fiber 3 will be compared. When the optical coupling efficiency is measured by watching only the vertical direction, the optical coupling efficiency of 67%, 77% and 95% is obtained in case of Fig. 47A, 47B and 47C respectively. From the above result, it is clear that the single core waveguide 300 is very effective to easily obtain the high coupling efficiency between the semiconductor laser 200 and the optical fiber 3.

As described before, polyimido is used for the cladding layer 301, the sub core 302B and the main core 302A. However, other material such as inorganic or organic material or material obtained by mixing inorganic and organic material can be used.

Thereupon, a case of using other material for the cladding layer 301, the sub core 302B and the main core 302A will be described. For example, a case where polyimido is used for the cladding layer 301 and the sub core 302B and silicon dioxide or silicon nitride is used for the main core 302A will be described below.

In the single core waveguide 300 shown in Fig. 46A, a silicon nitride layer is formed as the main core 302A by plasma CVD technique. In this case, the refractive index of the cladding layer 301 is 1.55, the relative refractive index difference between the cladding layer 301 and the sub core 302B is 0.5%, the refractive index of the main core 302A is 1.7, the cross sectional dimension of the sub core 302B is 6 μm × 6 μm, and the thickness and the width of the main core 302A are 0.19 μm and 4.55 μm respectively at the light input end.

In the above example, the spot size is 3 μm × 5.7 μm at the light input end. When the single core waveguide 300 of the above example is used for the optical waveguide 300 in Fig. 15 (the second preferred embodiment) so that the light input end of the single core waveguide 300 is opposite to a selected laser element of the semiconductor laser 200 in Fig. 15, they are optically coupled to each other in 99% coupling efficiency in the vertical direction. Thus, by virtue of using the feature of the device of Fig 46, the spot size of the single core waveguide 300 can be easily coupled to a spot size of light emitted from the laser element of the semiconductor laser 200 in high optical coupling efficiency in the vertical direction.

Next, an example for changing a spot size of light by using the single core waveguide 300 of Fig. 46A will be described in reference with Fig. 48. In case where in the single core waveguide 300, a relative refractive index difference between the cladding layer 301 and the sub core 302B is 0.5% and a thickness of the sub core 302B is 5 μm, when a refractive index of the main core 302A is changed in between 1.6 to 1.9, a spot size of light at the light output end of the single core waveguide 300 is changed as shown in Fig. 48. In Fig. 48, curve (a) indicates the change of the spot size when the thickness of the main core 302A is 0.2 μm, curve (b) indicates the change of the spot size when the thickness of the main core 302A is 0.5 μm. From Fig. 48, it can be realized that the spot size is changed in between 1 μm to 7 μm by changing the refractive index of the main core 302A.

Furthermore, when the refractive index and the cross sectional size of the sub core 302B are changed, the spot size can be changed at a part of the single core waveguide 300, including no main core 302A. Fig. 49 is a graph for showing the above feature. In Fig. 49, curve (a) indicates the change of the spot size in case where the relative refractive index difference between the core 302 and the cladding layer 301 (refractive index: 1.55) in a waveguide having slab structure as shown in Fig. 15 is changed. Further, when the relative refractive index difference between the core 302 and the cladding layer 301 is changed, the thickness of the core 302 must be also changed. Therefore, the thickness of the core 302 is also indicated by graph (b) in Fig. 49. From Fig. 49, it can be realized that the spot size can be changed as much as 5 μm ~ 12 μm by changing the refractive index and the thickness of the sub core 302B. If the spot size is enlarged, the coupling efficiency between the optical waveguide and the optical fiber is increased, which means that the coupling tolerance increases more.

By virtue of changing the size and the refractive index of the main core 302A and the sub core 302B thus, an optical waveguide enabling to change the spot size in wide range can be realized. As a result, optically coupling structure having high coupling efficiency and large coupling tolerance can be formed. For example, when the spot size is changed within range A shown in Fig. 48, a coupling loss due to the mode mismatching occurring between the laser element and the optical waveguide can be tremendously reduced.

Figs. 50 and 51(A and B) show another type of optical waveguide for changing the light spot size as light is transmitted through the optical waveguide.

Fig. 50 shows another type of single core waveguide 300 in which the width of the sub core 302B is equal to the width of the main core 302A at the light input end. (Incidentally, the sub core 302B is wider than the main core 302A in the horizontal direction in case of Fig. 46A.) Applying such waveguide, the spot size becomes smaller at the light input end, so that the coupling efficiency increases when the single core waveguide is couple to a laser element emitting light having a small spot size in the horizontal direction.

Fig. 51A shows another type of single core waveguide 300 in which the width of the sub core 302B is wider than the width of the main core 302A at the light input end and narrower than the width of the sub core 302B at the light output end. (Incidentally, the width of the sub core 302B is constant in all range from the light input end to the light output end in case of Fig. 46A.) Applying such waveguide, the spot horizontal diameter becomes a middle value of the horizontal spot diameters of the cases in Figs. 46A and 50, at the light input end.

Fig. 51B shows still another type of single core waveguide 300 in which the width of the sub core 302B is relatively wide. (Incidentally, the width of the sub core 302B is constant in the all range from the light input end to the light output end in case of Fig. 46A.) Applying such waveguide, the spot horizontal diameter becomes relatively large, so that the coupling efficiency increases when the waveguide is coupled to the laser element emitting light having a relatively large spot diameter.

Figs. 52A and 52B are graphs for qualitatively explaining the effect of the waveguides of Fig. 50, Fig. 51A and Fig. 51B. Fig. 52A shows a typical cross section of the single core waveguide 300 with electric field distribution around the waveguide. In Fig. 52A, the refractive index of the cladding layer 301, the sub core 302B and the main core 302A is marked as $n_1$, $n_2$ and $n_3$ respectively, and a width of the main core 302A is indicated by $W_m$, a width deference between the sub core 302B and the main core 302A is indicated by $W_s$. Furthermore, curve (1) shows intensity distribution of the electric field due to light guided by the waveguide and the spot size is indicated by $W_e$. Fig. 52B shows the change of the spot size $W_e$ due to the width difference $W_s$ when the refractive index $n_2$ of the main core 302A is changed to $\alpha$, $\beta$ and $\gamma$. As shown in Fig. 52B, when the width difference $W_s$ increases, the spot size $W_e$ increases, and when $n_2$ increases, $W_e$ also increases. Further, when $W_s$ decreases less than a value, the spot size $W_e$ changes contrary. For example, in the single core waveguide 300 in thirties embodiment (Fig. 46A), when the main core 302A is composed of a silicon nitride layer having 1.7 refractive index and 0.19 μm thickness, the following horizontal spot sizes $W_e$ are obtained from Fig. 52B by changing the width difference $W_s$: when $W_s$ is set to 10 μm, $W_e$ becomes 6.3 μm; when $W_s$ is set to 0.7 μm, $W_e$ becomes 5.7 μm; and when $W_s$ is set to so much wide as 20 μm and main core width $W_m$ is set to 1.5 μm, $W_e$ becomes 7.2 μm. Further, in a case where the main core 302A is composed of polyimido having 1.6 refractive index and 0.8 μm thickness, when $W_m$ and $W_s$ are set to 1.6 and 10 μm respectively, the horizontal spot diameter becomes 6.5 μm. Adjusting $W_s$ and $W_m$ thus, the spot size ($W_e$) can be changed in a wide range. By virtue of adjusting the spot size so as to mach with the semiconductor laser by changing $W_s$ and $W_m$ thus, an optical coupler having high coupling efficiency can be realized.

The features of the waveguides of Fig. 46A, Fig. 50, Fig. 51A and Fig. 51B can be applied to the optical waveguides 300 in the second (Fig. 15), the third (Fig.17A), the fourth preferred embodiment (Fig. 18A), the sixth preferred embodiment (Fig. 20A) to the eleventh (Fig. 25), and the thirteenth (Fig. 27A) to the twenty fifth preferred embodiment (Fig. 44), respectively.

Figs. 53A and 53B is the single core waveguides 300 having the bent cores and capable of applying to the single core waveguide 300 in Fig. 46A. Figs. 53A and 53B are schematic perspective views of a single core waveguide 300. In Figs. 53A and 53B, the same reference numeral as in Fig. 46A designates the same part as in Fig. 46A. In Fig. 53A, a main core 302A is placed at a bent part and before and behind of the bent part of the single core waveguide 300, looking from the light input end to the light output end and vice versa. In Fig. 53B, a main core 302A is placed from the light input (or output) end to a bent part of the single core waveguide 300.

In the single core waveguides 300 in Figs. 53A and 53B, light is confined at the bent part, so that loss of light transmitted through the bent part can be reduced even if a radius of curvature of the bent part is small. Further in Fig. 53B, a light spot becomes small in size at the end where the main core 302 exists, so that the coupling efficiency with the semiconductor laser is increased. For example, when the feature is applied to the optical waveguides 300 in the eleventh (Fig. 25) preferred embodiment and the thirteenth (Fig. 27B) to the nineteenth preferred embodiment (Fig. 33), the optical couplers in these embodiments can be made in a small size. Further, when the feature of Fig. 53B is applied to the above embodiment in Fig. 25 and Figs. 27B to 33 and the end, where the main core 302A exists, of the single core waveguide 300 is coupled with the semiconductor laser, the spot sizes of the both devices coincide with each other, which results in increasing the coupling efficiency between them.

Fig. 54A is a schematic perspective view of a single core waveguide 300. The single core waveguide 300 includes a bent part formed by changing the width of the core. In Fig. 54 A, the same reference numeral as in Fig. 46A designates the same part as in Fig. 46A. In Fig. 54A, the core 302 has a bent part surrounded by the cladding layer 301. The width of the core 302 is widened at the bent part and the front and behind of the bent part looking from either end of the single core waveguide 300.

Fig. 54B is a top plan view of the single core waveguide 300 in Fig. 54A. In the single core waveguide 300 in Fig. 54A, light transmitted through the waveguide 300 is confined at the bent part, loss of light transmitted through the bent part can be reduced even if a radius of curvature of the bent part is small. Applying the feature of the waveguide of Fig 54 to the optical waveguides 300 in the eleventh (Fig. 25) preferred embodiment and the thirteenth (Fig. 27B) to the nineteenth preferred embodiment (Fig. 33), the optical couplers in these embodiments can be made in a small size.

Figs. 55A, 55B, 56A, 56B and 56C are schematic perspective views of single core waveguides 300. In the figures, the same reference numeral as in Fig. 55B designates the same part as in Fig. 55B. Each of the single core waveguides 300 in Figs. 55A, 55B, 56A, 56B and 56C is composed of an under cladding layer 301A made of polyimido, a silicon nitride layer 311 having a thickness less than 200 nm and formed on the under cladding layer 301A by plasma CVD method, and the core 302 and an over cladding layer 301B formed on the silicon nitride layer 311.

The single core waveguide 300 in Fig. 55A is composed of the simple core 302. The single core waveguides 300 in Figs. 55B, 56A, 56B and 56C are composed of the composite core 302 consisting of the main core 302A and sub core 302B and the silicon nitride layer 311 formed between the cladding layer 301 and the core 302 respectively and corresponds to the Figs. 46A, 51A 51B and 50 respectively. In Figs. 55A, 55B, 56A, 56B and 56C, after a layer for forming the core 302 is formed on the silicon nitride 311, a mask is formed on the layer and the core 302 is formed so as to have a rectangular cross section, by oxide plasma etching method. In this case, the silicon nitride layer 311 works as an etching stop layer, so that the above forming process can be advanced easily.

Fig. 57 is a partial schematic perspective view of an optical coupler 1A for illustrating a twenty sixth preferred embodiment of the present invention. The optical coupler in Fig. 57 is obtained by modifying the optical coupler 1A in Fig. 17B so that each core 302 in Fig. 17B is changed to the (composite) core 302 in Fig. 55B consisting of the main core 302A and the sub core 302B. In Fig. 57, the same reference numeral as in Figs. 17 (A and B) and 55B designates the same part as in Figs. 17 (A and B) and 55B. In Fig. 57, the main core 302A of each core 302 is formed under the metal frame 304 so that the end of the main core 302A is placed at the light input end so as to be coupled with the laser element of the semiconductor laser 200 and the main core 302A becomes narrow as the range increases from the light input end to the light output end. Concretely, the refractive indices of the cladding layer 301, the sub core 302B and the main core 302A are 1.55, 1.558 and 1.6 respectively, and the cross sectional size of the sub core 302B is 6 μm × 6 μm, the thickness of the main core 302A is 1 μm at the light input end, the width of the main core 302A is 3 μm, and the thickness of the under cladding layer 301A and the over cladding layer 301B is 20 μm respectively. By applying the composite core 302 thus, light transmission loss due to the metal frame 304 can be reduced.

Fig. 58 is a schematic perspective view of an optical coupler 1A for illustrating a twenty seventh preferred embodiment of the present invention. The optical coupler 1A in Fig. 58 is obtained by applying the buffer layer 310 in Fig. 44 to the optical coupler 1A in Figs. 17A or 18A, so that a separated wiring member (500) for the wiring pattern 502 is formed independently of the fabrication process of the optical coupler 1A. In Fig. 58, the same reference numeral as in Figs. 17A (or 18A) and 44 designates the same part as in Figs. 17A (or 18A) and 44. In Fig. 58, the buffer layer 310 is formed in the depression 310 formed on the substrate 100, and the wiring pattern 502 is formed so that the wiring pattern 502 is inserted between frame shaped ceramic wafers (501 and 503). A frame shaped metal film (504) is formed on the frame shaped ceramic wafer 503, and the cover 400 is welded to the frame shaped metal film 504, for air-tightening the semiconductor laser 200, not depicted in Fig. 58, set in the hole 303.

Figs. 59 (A, B and C) and 60(A, B and C) show a forming process of the optical coupler 1A in Fig. 58. The optical coupler 1A is fabricated as follows. The procession 106 is formed on the substrate 100 by anisotropic etching as shown in Fig. 59A. The procession 106 is filled with material such as quartz or polyimido resin and the filled material is cut out so that the cut surface of the filled material is even with the upper surface of the substrate 100 as shown in Fig. 59B. Wherein, "material is even with the upper surface of the substrate 100" means that material is filled to the depression and the level of the surface of the filled material is the same as the level of the substrate of the substrate 100 and the surface of the filled material is formed to a flat smooth surface. Then, as shown in Fig. 59C, the optical waveguide 300 composed of the cladding layer 301 and the cores 302 is formed on the substrate 100 and the filled material so that the cores 302 are positioned above the filled material in the procession 106, the hole 303 is formed in the optical waveguide 300 so that an edge of the hole 303 is coincided with an inner edge of the procession 106. In the hole 303, the upper surface of the substrate 100, the wiring pattern not depicted in Fig. 59C and the bonding pads for bonding the semiconductor laser 200 appear.

When organic material is used for the optical waveguide 300, the wiring pattern 102A and the bonding pads 102 are formed on the upper surface of the substrate 100, then material for the optical waveguide 300 is painted on the wiring pattern 102A and the bonding pads 102 and the hole 303 is formed on the painted material. When material, such as quartz, requiring high temperature treatment is used for the optical waveguide, the wiring pattern 102A and the bonding pads 102 are formed on the upper surface of the substrate 100 in the hole 303 after forming the hole 302 in the optical waveguide 300.

Fig. 60A shows the separated wiring member 500 for the wiring pattern 502. The wiring member 500 is fabricated by forming the wiring pattern 502 on a ceramic substrate 501, putting a ceramic wafer (503) on the wiring pattern 502, and forming the frame shaped metal film 504 on the ceramic wafer 503.

Then, as shown in Fig. 60B, the wiring member 500 in Fig. 60A is stuck on the optical waveguide 300 formed on the substrate 100, and the arrayed semiconductor laser 200 is bonded as shown in Fig, 60C, and the metal cover 400 is welded to the metal film 504. Then, the semiconductor laser 200 is air-tightened as shown in Fig. 58.

Sticking the separated wiring member 500 thus, the semiconductor laser 200 can be air-tightened, so that the wiring process can be performed through no influence of the waveguide forming process. For example, in case of Fig. 17A or 18A, the material and the forming process of the wiring pattern 103 must be selected respectively in consideration of the forming process of the optical waveguide. However, in the above embodiments shown in Figs. 58, 59 (A, B and C) and 60 (A, B and C), since the separated wiring member is fabricated independently, the wiring process can be performed through no influence of the waveguide forming process. As a result, a fabrication process for, for example, a well known integrated circuit package can be applied to the fabrication of the separated wiring member 500 in Fig. 58.

## Claims

1. An optical coupling structure comprising:

   a first optical component (300X) comprising first optical elements arranged with a first pitch (P1) in an array,
   a second optical component (200X) comprising second optical elements arranged with a second pitch (P2) in an array,
   the optical elements of said first and second optical components (300X, 200X) being arranged directly opposed to one another, to enable optical coupling,

   **characterized in that**
   said first pitch (P1) and second pitch (P2) fulfil a relationship P2 = P1 ± 2×T0, where P1 represents the first pitch, P2 represents the second pitch and T0 represents the coupling tolerance in respect to an acceptable deviation between the optical axes of a given first and a given second optical element thereby effecting optical coupling between only one first optical element and just one second optical element.

2. An optical coupling structure according to claim 1 further comprising a substrate for mounting said first optical component and said second optical component.

3. An optical coupling structure according to claim 2, wherein said first optical component is an optical waveguide having a core of high refractive index surrounded by a lower-index cladding layer, and each said first optical element is a core of said optical waveguide.

4. An optical coupling structure according to claim 3, wherein said substrate comprises a depression provided partially on a surface of said substrate and under said cores.

5. An optical coupling structure according to claim 4, wherein said depression is filled up with a part of the cladding layer.

6. An optical coupling structure according to claim 4, wherein said depression is filled up with a buffer layer having a refractive index equal to or less than the refractive index of the cladding layer

7. An optical coupling structure according to claim 6, wherein an upper surface of the buffer layer is formed so as to be even with an upper surface of said substrate.

8. An optical coupling structure according to claims 6 or 7, wherein the optical waveguide is formed on the buffer layer.

9. An optical coupling structure according to claim 3, further comprising a buffer layer formed on said substrate, and said buffer layer having a refractive index equal to or less than the refractive index of the cladding layer.

10. An optical coupling structure according to claim 9, wherein the optical waveguide is formed on said buffer layer.

11. An optical coupling structure according to claim 10, wherein said second optical component is formed on said buffer layer.

12. An optical coupling structure according to claim 8 or 10, wherein the buffer layer is made of inorganic material and the cladding layer and the cores are made of organic material.

13. An optical coupling structure according to claim 10 or 11, wherein the cladding layer comprises: an under-cladding layer, said under-cladding layer being made of organic material; and an over-cladding layer formed on the core, said over-cladding layer being made of organic material.

14. An optical coupling structure according to claim 13 further comprising a thin inorganic layer inserted between the under-cladding layer and the core.

15. An optical coupling structure according to claim 5, wherein a portion of the cladding layer filling up at least the depression is made of organic material.

16. An optical.coupling structure according to claim 6, wherein a portion of the buffer layer filling up at least the depression is made of organic material.

17. An optical coupling structure according to one of claims 3 to 15, wherein said optical waveguide changes an optical beam width of a guided mode of said optical beam travelling from one end to another end of said waveguide.

18. An optical coupling structure according to one of claims 3 to 15, wherein said optical waveguide changes a confinement factor of an optical beam of a guided mode of said waveguide while said optical beam travels from one end to another end of said waveguide.

19. An optical coupling structure according to claim 17 or 18, wherein said core comprises:

    an optical axis passing through from one end of said waveguide;

    a sub core having a higher refractive index to the cladding layer; and

    a main core having a higher refractive index to said sub core, said main core being surrounded by said sub core, said main core having a cross section perpendicular to said optical axis, and said main core having a portion wherein the area size of the cross section of said main core changes gradually along said optical axis.

20. An optical coupling structure according to claim 17 or 18, wherein said core comprises:

    an optical axis passing through from one end to another end of said waveguide:

    a sub core branched into two parts and having a higher refractive index to the cladding layer; and

    a main core having a higher refractive index to said sub core, said main core having a portion where said main core is sandwiched between the branched two parts of said sub cores, said main core having a portion where said main core is surrounded by said sub core, said main core and said sub core having a cross section perpendicular to said optical axis, and area size of the cross section of said main core changes gradually along said optical axis at the portion where said main is surrounded by said sub core.

21. An optical coupling structure according to claim 19 or 20, wherein said sub core comprises a part where an area size of the cross section of the sub core changes gradually along the optical axis.

22. An optical coupling structure according to claim 19 or 20, wherein said sub core comprises a part where a shape of the cross section of the sub core changes gradually along the optical axis.

23. An optical coupling structure according to one of claims 19 to 21, wherein said waveguide comprises a bent portion for bending the guided light beam guided by said waveguide, the waveguide including the main core having an uniform cross section at least at said bent portion.

24. An optical coupling structure according to claim 17 or 18, wherein said core comprises:

    an optical axis passing through from one end to another end of said waveguide;

    a cross section perpendicular to said optical axis; and

    a portion where an area size of the cross section of said core changes gradually along said optical axis.

25. An optical coupling structure according to one of claims 19 to 22, wherein at least one of the cladding layer, the sub core and the main core is made of organic material.

26. An optical coupling structure according to one of claims 19 to 22, wherein the main core is made of inorganic material and the sub core is made of organic material.

27. An optical coupling structure according to claim 25 or 26, further comprising a thin film made of inorganic material inserted between layers made of organic material and being adjacent to each other.

28. An optical coupling structure according to one of claims 3 to 27, wherein the substrate is made of material having a refractive index lower than the cladding layer and being transparent to light transmitted through the optical guide.

29. An optical coupling structure according to claim 24, wherein said waveguide comprises a bent portion for bending the guided light beam guided by said waveguide, and the waveguide includes the core having relatively a large area size and a uniform cross section at least at said bent portion.

**Patentansprüche**

1. Optische Kopplungsstruktur, umfassend:

   eine erste optische Komponente (300X), die in einem ersten Rasterabstand (P1) in einem Feld angeordnete optische Elemente umfasst,

   eine zweite optische Komponente (200X), die in einem zweiten Rasterabstand (P2) in einem Feld angeordnete optische Elemente umfasst,

   wobei die optischen Elemente der ersten und zweiten optischen Komponenten (300X, 200X) direkt zueinander gegenüberliegend angeordnet sind, um optische Kopplung zu ermöglichen, **dadurch gekennzeichnet, dass** der erste Rasterabstand (P1) und der zweite Rasterabstand (P2) eine Beziehung (P2 = P1 $\pm$ 2xT0, erfüllen, wobei P1 den ersten Rasterabstand repräsentiert, P2 den zweiten Rasterabstand repräsentiert und T0 die Kopplungstoleranz in Bezug auf eine akzeptable Abweichung zwischen den optischen Achsen eines gegebenen ersten und eines gegebenen zweiten optischen Elements repräsentiert, wodurch eine effektive optische Kopplung zwischen nur einem ersten optischen Element und nur einem zweiten optischen Element bewirkt wird.

2. Optische Kopplungsstruktur gemäß Anspruch 1, weiterhin umfassend ein Substrat zum Montieren der ersten optischen Komponente und der zweiten optischen Komponente.

3. Optische Kopplungsstruktur gemäß Anspruch 2, wobei die erste optische Komponente ein Hohlleiter mit einem Kern mit hohem refraktiven Index, umgeben von einer Hüllschicht mit niedrigerem Index ist und jedes der ersten optischen Elemente ein Kern des optischen Hohlleiters ist.

4. Optische Kopplungsstruktur gemäß Anspruch 3, wobei das Substrat eine partiell auf einer Oberfläche des Substrats und unter den Kernen vorgesehene Vertiefung umfasst.

5. Optische Kopplungsstruktur gemäß Anspruch 4, wobei die Vertiefung mit einem Teil der Hüllschicht aufgefüllt ist.

6. Optische Kopplungsstruktur gemäß Anspruch 4, wobei die Vertiefung mit einer Pufferschicht aufgefüllt ist, die einen refraktiven Index gleich oder kleiner als der refraktive Index der Hüllschicht aufweist.

7. Optische Kopplungsstruktur gemäß Anspruch 6, wobei eine obere Oberfläche der Pufferschicht so ausgebildet ist, dass sie in gleicher Höhe mit einer oberen Oberfläche des Substrats ist.

8. Optische Kopplungsstruktur gemäß Anspruch 6 oder 7, wobei der optische Hohlleiter auf der Pufferschicht ausgebildet ist.

9. Optische Kopplungsstruktur gemäß Anspruch 3, weiterhin umfassend eine Pufferschicht, die auf dem Substrat ausgebildet ist, wobei die Pufferschicht einen refraktiven Index gleich oder kleiner als der refraktive Index der Hüllschicht aufweist.

10. Optische Kopplungsstruktur gemäß Anspruch 9, wobei der optische Hohlleiter auf der Pufferschicht ausgebildet ist.

11. Optische Kopplungsstruktur gemäß Anspruch 10, wobei die zweite optische Komponente auf der Pufferschicht ausgebildet ist.

12. Optische Kopplungsstruktur gemäß Anspruch 8 oder 10, wobei die Pufferschicht aus anorganischem Material hergestellt ist und die Hüllschicht und die Kerne aus organischem Material bestehen.

13. Optische Kopplungsstruktur gemäß Anspruch 10 oder 11, wobei die Hüllschicht umfasst: eine Unterhüllschicht, wobei die Unterhüllschicht aus organischem Material besteht; und eine Überhüllschicht, die auf dem Kern ausgebildet ist, wobei die Überhüllschicht aus organischem Material besteht.

14. Optische Kopplungsstruktur gemäß Anspruch 13, weiterhin umfassend eine zwischen der Unterhüllschicht und dem Kern eingefügte dünne anorganische Schicht.

15. Optische Kopplungsstruktur gemäß Anspruch 5, wobei ein Teil der Hüllschicht, der zumindest die Vertiefung auffüllt, aus organischem Material besteht.

16. Optische Kopplungsstruktur gemäß Anspruch 6, wobei ein Teil der Pufferschicht, der zumindest die Vertiefung auffüllt, aus organischem Material besteht.

17. Optische Kopplungsstruktur gemäß einem der Ansprüche 3 bis 15, wobei der optische Hohlleiter eine optische Strahlbreite eines Kernmodus des von einem Ende zu einem anderen Ende des Hohlleiters wandernden optischen Strahls ändert.

18. Optische Kopplungsstruktur gemäß einem der Ansprüche 3 bis 15, wobei der optische Hohlleiter einen Begrenzungsfaktors eines optischen Strahls eines Kernmodus des Hohlleiters ändert, während der optische Strahl von einem Ende zu einem anderen Ende des Hohlleiters wandert.

19. Optische Kopplungsstruktur gemäß Anspruch 17 oder 18, wobei der Kern umfasst:

   eine von einem Ende des Hohlleiters hindurchgehende optische Achse;

   einen Subkern mit einem höheren refraktiven Index zur Hüllschicht; und

   einen Hauptkern mit einem höheren refraktiven Index zum Unterkern, wobei der Hauptkern vom Subkern umgeben ist, und der Hauptkern einen Querschnitt orthogonal zur optischen Achse hat und der Hauptkern einen Bereich hat, bei dem sich die Flächengröße des Querschnitts des Hauptkerns graduell längs der optischen Achse verändert.

20. Optische Kopplungsstruktur gemäß Anspruch 17 oder 18, wobei der Kern umfasst:

   eine von einem Ende zum anderen Ende des Hohlleiters hindurchgehende optische Achse:

   einen in zwei Teile verzweigten Subkern, der einen höheren refraktiven Index zur Hüllschicht aufweist; und

   einen Hauptkern mit einem höheren refraktiven Index zum Subkern, wobei der Hauptkern einen Bereich aufweist, wo der Hauptkern zwischen den zwei verzweigten Teilen des Subkerns gesandwicht ist, wobei der Hauptkern einen-Bereich hat, wo der Hauptkern vom Subkern umgeben ist,

   wobei der Hauptkern und der Subkern einen Querschnitt orthogonal zur optischen Achse aufweisen und die Flächengröße des Querschnitts des Hauptkerns sich graduell längs der optischen Achse in dem Bereich verändert, wo der Haupt- vom Subkern umgeben ist.

21. Optische Kopplungsstruktur gemäß Anspruch 19 oder 20, wobei der Subkern einen Teil umfasst, bei dem eine Flächengröße des Querschnitts des Subkerns sich graduell längs der optischen Achse ändert.

22. Optische Kopplungsstruktur gemäß Anspruch 19 oder 20, wobei der Subkern einen Teil umfasst, bei dem eine Form des Querschnitts des Subkerns sich graduell längs der optischen Achse ändert.

23. Optische Kopplungsstruktur gemäß einem der Ansprüche 19 bis 21, wobei der Hohlleiter einen gebogenen Teil zum Biegen des geführten Lichtstrahls, der vom Hohlleiter geführt wird, umfasst und der Hohlleiter den Hauptkern mit einem gleichförmigen Querschnitt zumindest an dem gebogenen Bereich enthält.

24. Optische Kopplungsstruktur gemäß Anspruch 17 oder 18, wobei der Kern umfasst:

   eine von einem Ende zu einem anderen Ende des Hohlleiters hindurchgehende optische Achse;

   einen Querschnitt orthogonal zur optischen Achse; und

   einen Bereich, in dem sich eine Flächengröße des Querschnitts des Kerns graduell längs der optischen Achse ändert.

25. Optische Kopplungsstruktur gemäß einem der Ansprüche 19 bis 22, wobei zumindest die Hüllschicht, der Subkern und/oder der Hauptkern aus organischem Material bestehen.

26. Optische Kopplungsstruktur gemäß einem der Ansprüche 19 bis 22, wobei der Hauptkern aus anorganischem Material besteht und der Subkern aus organischem Material besteht.

27. Optische Kopplungsstruktur gemäß Anspruch 25 oder 26, weiterhin umfassend einen aus anorganischem Material bestehenden Dünnfilm, der zwischen aus organischem Material bestehenden Schichten eingefügt ist und an diese angrenzt.

28. Optische Kopplungsstruktur gemäß einem der Ansprüche 3 bis 27, wobei das Substrat aus einem Material mit einem refraktiven Index kleiner als der Hüllschicht besteht und für durch die optische Führung übertragenes Licht transparent ist.

29. Optische Kopplungsstruktur gemäß Anspruch 24, wobei der Hohlleiter einen gebogenen Bereich zum Biegen des von dem Hohlleiter geführten geführten Lichtstrahls umfasst und der Hohlleiter den Kern mit einer relativ großen Flächengröße und einem gleichförmigen Querschnitt zumindest an dem gebogenen Bereich enthält.

**Revendications**

1. Une structure de couplage optique comprenant :

   un premier composant optique (300X) comprenant des premiers éléments optiques disposés avec un premier pas (P1) en un réseau,
   un second composant optique (200X) comprenant des seconds éléments optiques disposés avec un second pas (P2) en un réseau,
   les éléments optiques des premier et second composants optiques (300X, 200X) étant disposés directement en regard les uns par rapport aux autres, pour permettre un couplage optique,

   **caractérisée en ce que**
   le premier pas (P1) et le second pas (P2) obéissent à une relation P2 = P1 ± 2xT0, dans laquelle P1 représente le premier pas, P2 représente le second pas et T0 représente la tolérance de couplage en relation avec un écart acceptable entre les axes optiques d'un premier élément optique donné et d'un second élément optique donné, pour établir ainsi un couplage optique entre un seul premier élément optique et seulement un second élément optique.

2. Une structure de couptage optique selon la revendication 1, comprenant en outre un substrat pour monter le premier composant optique et le second composant optique.

3. Une structure de couplage optique selon la revendication 2, dans laquelle le premier composant optique est un guide d'ondes optique ayant un coeur à indice de réfraction élevé entouré par une couche de gaine à plus faible indice, et chaque premier élément optique est un coeur du guide d'ondes optique.

4. Une structure de couplage optique selon la revendication 3, dans laquelle le substrat comprend une dépression formée partiellement sur une surface du substrat et sous les coeurs.

5. Une structure de couplage optique selon la revendication 4, dans laquelle la dépression est remplie avec une partie de la couche de gaine.

6. Une structure de couplage optique selon la revendication 4, dans laquelle la dépression est remplie avec une couche tampon ayant un indice de réfraction égal ou inférieur à l'indice de réfraction de la couche de gaine.

7. Une structure de couplage optique selon la revendication 6, dans laquelle une surface supérieure de la couche tampon est formée de façon à affleurer une surface supérieure du substrat.

8. Une structure de couplage optique selon l'une des revendications 6 à 7, dans laquelle le guide d'ondes optique est formé sur la couche tampon.

9. Une structure de couplage optique selon la revendication 3, comprenant en outre une couche tampon formée sur le substrat, et cette couche tampon ayant un indice de réfraction égal ou inférieur à l'indice de réfraction de la couche de gaine.

10. Une structure de couplage optique selon la revendication 9, dans laquelle le guide d'ondes optique est formé sur la couche tampon.

11. Une structure de couplage optique selon la revendication 10, dans laquelle le second élément optique est formé sur la couche tampon.

12. Une structure de couplage optique selon la revendication 8 ou 10, dans laquelle la couche tampon est constituée d'un matériau inorganique et la couche de gaine et les coeurs sont constitués d'un matériau organique.

13. Une structure de couplage optique selon la revendication 10 ou 11, dans laquelle la couche de gaine comprend : une couche de gaine inférieure, cette couche de gaine inférieure étant constituée d'un matériau organique; et une couche de gaine supérieure formée sur le coeur, cette couche de gaine supérieure étant constituée d'un matériau organique.

14. Une structure de couplage optique selon la revendication 13, comprenant en outre une couche inorganique mince insérée entre la couche de gaine inférieure et le coeur.

15. Une structure de couplage optique selon la revendication 5, dans laquelle une partie de la couche de gaine remplissant au moins la dépression est constituée d'un matériau organique.

16. Une structure de couplage optique selon la revendication 6, dans laquelle une partie de la couche tampon remplissant au moins la dépression est constituée d'un matériau organique.

17. Une structure de couplage optique selon l'une des revendications 3 à 15, dans laquelle le guide d'ondes optique change une largeur de faisceau optique d'un mode guidé du faisceau optique se propageant à partir d'une extrémité jusqu'à l'autre extrémité du guide d'ondes.

18. Une structure de couplage optique selon l'une des revendications 3 à 15, dans laquelle le guide d'ondes optique change un facteur de confinement d'un faisceau optique d'un mode guidé du guide d'ondes, pendant que ce faisceau optique se propage à partir d'une extrémité jusqu'à l'autre extrémité du guide d'ondes.

19. Une structure de couplage optique selon la revendication 17 ou 18, dans laquelle le coeur comprend :

    un axe optique traversant le coeur à partir d'une extrémité du guide d'ondes;
    un sous-coeur ayant un indice de réfraction supérieur à celui de la couche de gaine; et
    un coeur principal ayant un indice de réfraction supérieur à celui du sous-coeur, ce coeur principal étant entouré par le sous-coeur, ce coeur principal ayant une section transversale perpendiculaire à l'axe optique, et ce coeur principal ayant une partie dans laquelle l'aire de la section transversale du coeur principal change progressivement le long de l'axe optique.

20. Une structure de couplage optique selon la revendication 17 ou 18, dans laquelle le coeur comprend :

    un axe optique traversant le coeur à partir d'une extrémité jusqu'à l'autre extrémité du guide d'ondes;
    un sous-coeur s'embranchant en deux parties et ayant un indice de réfraction supérieur à celui de la couche de gaine; et
    un coeur principal ayant un indice de réfraction supérieur à celui du sous-coeur, ce coeur principal ayant une partie dans laquelle le coeur principal est intercalé entre les deux parties embranchées des sous-coeurs, ce coeur principal ayant une partie dans laquelle le coeur principal est entouré par le sous-coeur, ce coeur principal et le sous-coeur ayant une section transversale perpendiculaire à l'axe optique, et l'aire de la section transversale du coeur principal changeant progressivement le long de l'axe optique dans la partie dans laquelle le coeur principal est entouré par le sous-coeur.

21. Une structure de couplage optique selon la revendication 19 ou 20, dans laquelle le sous-coeur comprend une partie dans laquelle une aire de la section transversale du sous-coeur change progressivement le long de l'axe optique.

22. Une structure de couplage optique selon la revendication 19 ou 20, dans laquelle le sous-coeur comprend une partie dans laquelle une forme de la section transversale du sous-coeur change progressivement le long de l'axe optique.

23. Une structure de couplage optique selon l'une des revendications 19 à 21, dans laquelle le guide d'ondes comprend une partie courbée pour courber le faisceau de lumière guidé qui est guidé par le guide d'ondes, le guide d'ondes incluant le coeur principal ayant une section transversale uniforme au moins dans ladite partie courbée.

24. Une structure de couplage optique selon la revendication 17 ou 18, dans laquelle le coeur comprend :

    un axe optique traversant le coeur à partir d'une extrémité jusqu'à une autre extrémité du guide d'ondes;
    une section transversale perpendiculaire à l'axe optique; et
    une partie dans laquelle une aire de la section transversale du coeur change progressivement le long de l'axe optique.

25. Une structure de couplage optique selon l'une des revendications 19 à 22, dans laquelle l'un au moins de la couche de gaine, du sous-coeur et du coeur principal est constitué d'un matériau organique.

26. Une structure de couplage optique selon l'une des revendications 19 à 22, dans laquelle le coeur principal est constitué d'un matériau inorganique et le sous-coeur est constitué d'un matériau organique.

27. Une structure de couplage optique selon la revendication 25 ou 26, comprenant en outre une pellicule mince constituée d'un matériau inorganique insérée entre des couches constituées d'un matériau organique et étant adjacentes l'une à l'autre.

28. Une structure de couplage optique selon l'une des revendications 3 à 27, dans laquelle le substrat est constitué d'un matériau ayant un indice de réfraction inférieur à celui de la couche de gaine et étant transparent à la lumière transmise à travers le guide optique.

29. Une structure de couplage optique selon la revendication 24, dans laquelle le guide d'ondes comprend une partie courbée pour courber le faisceau de lumière guidé qui est guidé par le guide d'ondes, et le guide d'ondes comprend le coeur ayant une aire relativement grande et une section transversale uniforme au moins dans ladite partie courbée.

PRIOR ART

FIG.1

*FIG. 2 A*

*FIG. 2 B*

PRIOR ART

*FIG. 3*

*FIG.4*

EP 0 845 690 B1

1B

200

182

180

181

3

*FIG.*5

EP 0 845 690 B1

PRIOR ART

1C

200

182

180

181

3A

FIG.6

PRIOR ART

**FIG. 7 A**

PRIOR ART

**FIG. 7 B**

PRIOR ART

FIG. 8 A

PRIOR ART

FIG. 8 B

## FIG. 9 A

## FIG. 9 B

*FIG.10 A*

*FIG.10 B*

PRIOR ART

*FIG.11 A*

PRIOR ART

*FIG.11 B*

*FIG.12 A*

*FIG.12 B*

$$\Delta_6 = 0$$

$$P_1 = P_2 + 2T_0 \qquad \Delta_5 = \Delta_7 = 2T_0$$

$T_0$ : tolerance between 1st and 2nd optional elements optically coupled with each other

FIG. 13

41

| SHIFT AMOUNT | DEVIATION ($\Delta_1 \sim \Delta_{11}$) | | | | | | | | | | |
|---|---|---|---|---|---|---|---|---|---|---|---|
| | $\Delta_1$ | $\Delta_2$ | $\Delta_3$ | $\Delta_4$ | $\Delta_5$ | $\Delta_6$ | $\Delta_7$ | $\Delta_8$ | $\Delta_9$ | $\Delta_{10}$ | $\Delta_{11}$ |
| $-11T_0\sim-9T_0$ | $\pm T_0$ | $-3T_0\sim-T_0$ | | | $-9T_0\sim-7T_0$ | $-11T_0\sim-9T_0$ | $-13T_0\sim-11T_0$ | | | | $-21T_0\sim-19T_0$ |
| $-9T_0\sim-7T_0$ | $T_0\sim3T_0$ | $\pm T_0$ | | | $-7T_0\sim-5T_0$ | $-9T_0\sim-7T_0$ | $-11T_0\sim-9T_0$ | | | | $-19T_0\sim-17T_0$ |
| $-7T_0\sim-5T_0$ | $3T_0\sim5T_0$ | $T_0\sim3T_0$ | $\pm T_0$ | | $-5T_0\sim-3T_0$ | $-7T_0\sim-5T_0$ | $-9T_0\sim-7T_0$ | | | | $-17T_0\sim-15T_0$ |
| $-5T_0\sim-3T_0$ | $5T_0\sim7T_0$ | $3T_0\sim5T_0$ | | $\pm T_0$ | $-3T_0\sim-1T_0$ | $-5T_0\sim-3T_0$ | $-7T_0\sim-5T_0$ | | | | $-15T_0\sim-13T_0$ |
| $-3T_0\sim-T_0$ | $7T_0\sim9T_0$ | $5T_0\sim7T_0$ | | | $\pm T_0$ | $-3T_0\sim-T_0$ | $-5T_0\sim-3T_0$ | | | | $-13T_0\sim-11T_0$ |
| $\pm T_0$ | $9T_0\sim11T_0$ | $7T_0\sim9T_0$ | | | $T\sim3T_0$ | $\pm T_0$ | $-3T_0\sim-T_0$ | | | | $-11T_0\sim-9T_0$ |
| $T_0\sim3T_0$ | $11T_0\sim13T_0$ | $9T_0\sim11T_0$ | | | $3T_0\sim5T_0$ | $T_0\sim3T_0$ | $\pm T_0$ | | | | $-9T_0\sim-7T_0$ |
| $3T_0\sim5T_0$ | $13T_0\sim15T_0$ | $11T_0\sim13T_0$ | | | $5T_0\sim7T_0$ | $3T_0\sim5T_0$ | $T_0\sim3T_0$ | $\pm T_0$ | | | $-7T_0\sim-5T_0$ |
| $5T_0\sim7T_0$ | $15T_0\sim17T_0$ | $13T_0\sim15T_0$ | | | $7T_0\sim9T_0$ | $5T_0\sim7T_0$ | $3T_0\sim5T_0$ | | $\pm T_0$ | | $-5T_0\sim-3T_0$ |
| $7T_0\sim9T_0$ | $17T_0\sim19T_0$ | $15T_0\sim17T_0$ | | | $9T_0\sim11T_0$ | $7T_0\sim9T_0$ | $5T_0\sim7T_0$ | | | $\pm T_0$ | $-3T_0\sim-T_0$ |
| $9T_0\sim11T_0$ | $19T_0\sim21T_0$ | $17T_0\sim19T_0$ | | | $11T_0\sim13T_0$ | $9T_0\sim11T_0$ | $7T_0\sim9T_0$ | | | | $\pm T_0$ |

FIG.14

FIG.15

*FIG.16*

FIG.17 A

FIG.17 B

FIG.18 A

FIG.18 B

FIG.19

FIG. 20 A

FIG. 20 B

FIG. 21

EP 0 845 690 B1

FIG.22A

FIG.22B

FIG. 23A

FIG. 23B

FIG.24 A

FIG.24 B

**FIG.25**

EP 0 845 690 B1

FIG.26

FIG.27A

FIG.27B

*FIG.28A*

*FIG.28B*

FIG.29

EP 0 845 690 B1

FIG.30

FIG. 31

FIG. 32

FIG. 33

EP 0 845 690 B1

FIG. 34

FIG.35

FIG.36

**FIG.37A**

**FIG.37 B**

FIG. 38

FIG. 39

FIG. 40

EP 0 845 690 B1

FIG. 41

FIG. 42

FIG. 4 3

EP 0 845 690 B1

FIG. 44

*FIG.45*

FIG.46A

FIG.46B

FIG.46C

Refractive Ind

FIG.46D

Strength of
Electric Field

Strength of
Electric Field

FIG.46E

dotted line

Refractive Inde

FIG.47A

FIG.47B

FIG.47C

75

**FIG.48**

FIG. 49

FIG.50

FIG.51A

FIG.51B

FIG. 52A

FIG. 52B

FIG.53A

FIG.53B

FIG. 54A

FIG. 54B

FIG. 55 A

FIG. 55B

FIG.56A

FIG.56B

FIG.56C

FIG.57

EP 0 845 690 B1

FIG. 58

FIG.59A

106    100

FIG.59B

106
310    100

300    303
102
302    170

FIG.59C

106
310
301    100

FIG. 60A

FIG. 60B

FIG. 60C

FIG. 61A

FIG. 61B

FIG. 62